# EUROPEAN PATENT APPLICATION

(11) **EP 4 331 955 A1**
(43) Date of publication of application: **06.03.2024**
(21) Application number: 22819862.8
(22) Date of filing: 15.03.2022
(51) Int. Cl.: B62D 21/18, B62D 55/10, E02F 9/02, B66C 23/26, B66C 23/36, B66C 23/62, B66C 23/78

(54) **LOWER CARRIAGE OF MOBILE CRANE AND MOBILE CRANE EQUIPPED THEREWITH**

(30) Priority: 08.06.2021 JP 2021095529; 08.06.2021 JP 2021095532; 08.06.2021 JP 2021095537
(71) Applicant: KOBELCO CONSTRUCTION MACHINERY CO., LTD., Hiroshima-shi Hiroshima 731-5161 (JP)
(72) Inventor: MAEDO, Teppei, Saeki-ku, Hiroshima-shi Hiroshima 731-5161 (JP); OKIMOTO, Sho, Saeki-ku, Hiroshima-shi Hiroshima 731-5161 (JP); SHIMAZU, Yasuhiko, Saeki-ku, Hiroshima-shi Hiroshima 731-5161 (JP); TAKAMATSU, Nobuhiro, Saeki-ku, Hiroshima-shi Hiroshima 731-5161 (JP); MATSUI, Dairo, Akashi-shi, Hyogo 674-0063 (JP); KOYAHATA, Akira, Akashi-shi, Hyogo 674-0063 (JP)
(74) Representative: TBK
(86) International application number: PCT/JP2022/011562
(87) International publication number: WO 2022/259672

(57) **Abstract**

A coupling portion of a lower travelling body (101) of a mobile crane (100) is configured such that, in plan view, a right front straight line (LA), which passes through any point included in a front load receiving surface and through any point included in a right front load transmission surface, passes through a right front end roller (261) or a point on the front side relative to the right front end roller (261) and that a left front straight line (LC), which passes through any point included in the front load receiving surface and through any point included in a left front load transmission surface, passes through a left front end roller (261) or a point on the front side relative to the left front end roller (261).

## Description

### Technical Field

The present disclosure relates to a lower travelling body of a mobile crane and a mobile crane equipped with the lower travelling body.

### Background Art

A mobile crane is conventionally known (e.g., Patent Literatures 1 and 2). The mobile crane includes a lower travelling body capable of travelling on the ground, and an upper slewing body mounted on the lower travelling body. The upper slewing body includes a work device including a boom and a lifting rope. The lower travelling body includes a car body that supports the upper slewing body in such a way as to allow it to turn around a slewing center axis, a front axle that extends rightward and leftward from the car body, a rear axle that extends rightward and leftward from the car body on the rear side relative to the front axle, and a pair of left and right crawler frames that extend in the front-to-rear direction on the right side and the left side relative to the slewing center axis and that support the front axle and the rear axle.

Each crawler frame has a pair of axle supports that support the front axle and the rear axle. The pair of axle supports is usually disposed near the center in the longitudinal direction (front-to-rear direction) of each crawler frame.

In a structure in which the front axle and the rear axle extending in parallel with the left-to-right direction at the front and rear of the car body couples the left and right crawler frames (a structure of an H shape in plan view), the structure being the structure of the mobile crane of Patent Literature 1, the following deformation tends to occur. In the structure of the H shape, for example, when a cargo-to-be-lifted is hung on the upper slewing body via the lifting rope of the work device on the front side relative to the lower travelling body, the front axle parallel with the left-to-right direction warps downward and frontward and readily develops torsional deformation, and, consequently, the car body readily warps, too. Similarly, when a cargo-to-be-lifted is hung on the upper slewing body via the lifting rope on the rear side relative to the lower travelling body, the rear axle parallel with the left-to-right direction warps downward and rearward and readily develops torsional deformation, and, consequently, the car body readily warps, too.

When the cargo-to-be-lifted is hung on the upper slewing body on the front side relative to the lower travelling body, a front end roller, which is the foremost roller among a plurality of rollers arranged on a lower part of each crawler frame, serves as a tipping fulcrum of the mobile crane. In the structure of the H shape, the axle supports are a part where a load is transmitted from the front axle to each crawler frame, and the axle support and the tipping fulcrum are separated relatively widely from each other in the front-to-rear direction. Because of this, a large warp is likely to develop on a part between the axle support and the tipping fulcrum.

As described above, when the cargo-to-be-lifted is hung on the front side or the rear side relative to the lower travelling body, the warp tends to become larger than the warp that develop in a case where the cargo-to-be-lifted is hung on the left side or the right side relative to the lower travelling body. In this manner, when the magnitude of the warp differs depending on a direction in which the cargo-to-be-lifted is hung relative to the lower travelling body, the position of the cargo-to-be-lifted changes depending on a slewing position, which may lead to the lower workability of lifting work. It is therefore desirable that a warp the crawler frame develops when the cargo-to-be-lifted is hung on the upper slewing body on the front side or the rear side relative to the lower travelling body be reduced.

Patent Literature 2 discloses a technique by which, to improve respective rigidities of front and rear parts of a car body, a pair of reinforcing members are provided respectively on a front part and a rear part in the trunk of the car body. These pair of reinforcing members of a mobile crane described in Patent Literature 2, however, does not suppress warping of a crawler frame.

### Citation List

### Patent Literature

Patent Literature 1: JP 2018-70339 A
Patent Literature 2: JP 2017-171090 A

### Summary of Invention

The present disclosure has been conceived in view of the above problems, and an object of the present disclosure is to provide a lower travelling body of a mobile crane, the lower travelling body being capable of reducing a warp that develops in a crawler frame when a cargo-to-be-lifted is hung on an upper slewing body on the front side or the rear side relative to the lower travelling body.

Provided is a lower travelling body of a mobile crane, the lower travelling body including: a car body that supports an upper slewing body of the mobile crane in such a way as to allow the upper slewing body to rotate around a slewing center axis; a right crawler frame extending in a front-to-rear direction on a right side relative to the slewing center axis; a left crawler frame extending in the front-to-rear direction on a left side relative to the slewing center axis; a coupling portion that couples the car body to the right crawler frame and to the left crawler frame, the coupling portion including at least one coupling member; a pair of right wheels supported rotatably on a front end part and a rear end part of the right crawler frame, respectively; a pair of left wheels supported rotatably on a front end part and a rear end part of the left crawler frame, respectively; a plurality of right rollers spaced in the front-to-rear direction between the pair of right wheels and rotatably supported on a lower part of the right crawler frame, the plurality of right rollers including a right front end roller located at head of the right rollers and a right rear end roller located at tail of the right rollers; and a plurality left rollers spaced in the front-to-rear direction between the pair of left wheels and rotatably supported on a lower part of the left crawler frame, the plurality of left rollers including a left front end roller located at head of the left rollers and a left rear end roller located at tail of the left rollers. The coupling portion includes a front load receiving surface and a rear load receiving surface that are counter to the car body, a right front load transmission surface and a right rear load transmission surface that are counter to the right crawler frame, and a left front load transmission surface and a left rear load transmission surface that are counter to the left crawler frame. The front load receiving surface is a surface configured to receive a front load from the car body, the front load being a load that the car body receives from the upper slewing body when a cargo-to-be-lifted is hung on the upper slewing body on the front side relative to the lower travelling body, the right front load transmission surface is a surface configured to transmit the front load to the right crawler frame, and the left front load transmission surface is a surface configured to transmit the front load to the left crawler frame. The rear load receiving surface is a surface configured to receive a rear load from the car body, the rear load being a load that the car body receives from the upper slewing body when the cargo-to-be-lifted is hung on the upper slewing body on a rear side relative to the lower travelling body, the right rear load transmission surface is a surface configured to transmit the rear load to the right crawler frame, and the left rear load transmission surface is a surface configured to transmit the rear load to the left crawler frame. The coupling portion is configured such that a right front straight line, which is a straight line passing through any point included in the front load receiving surface and through any point included in the right front load transmission surface, passes through, in plan view, the right front end roller or a point on the front side relative to the right front end roller, that a left front straight line, which is a straight line passing through any point included in the front load receiving surface and through any point included in the left front load transmission surface, passes through, in plan view, the left front end roller or a point on the front side relative to the left front end roller, that a right rear straight line, which is a straight line passing through any point included in the rear load receiving surface and through any point included in the right rear load transmission surface, passes through, in plan view, the right rear end roller or a point on the rear side relative to the right rear end roller, and that a left rear straight line, which is a straight line passing through any point included in the rear load receiving surface and through any point included in the left rear load transmission surface, passes through, in plan view, the left rear end roller or a point on the rear side relative to the left rear end roller.

### Brief Description of Drawings

FIG. 1 is a side view of an example of a mobile crane including a lower travelling body according to a first embodiment of a first invention.
FIG. 2 is a perspective view of the lower travelling body according to the first embodiment of the first invention.
FIG. 3 is a plan view of the lower travelling body according to the first embodiment of the first invention.
FIG. 4 is a perspective view of a car body and a front axle of the lower travelling body according to the first embodiment of the first invention.
FIG. 5 is a perspective view of the car body and a rear axle of the lower travelling body according to the first embodiment of the first invention.
FIG. 6 is a perspective view of an engaging portion included in the front axle of the lower travelling body and an engaged portion included in the car body, according to the first embodiment of the first invention.
FIG. 7 is a perspective view of another example of a connection structure of the car body and the axle of the lower travelling body according to the first embodiment of the first invention.
FIG. 8 is a perspective view of still another example of the connection structure of the car body and the axle of the lower travelling body according to the first embodiment of the first invention.
FIG. 9 is a front view of still another example of the connection structure of the car body and the axle of the lower travelling body according to the first embodiment of the first invention.
FIG. 10 is a front view of still another example of the connection structure of the car body and the axle of the lower travelling body according to the first embodiment of the first invention.
FIG. 11 is a perspective view of a connection structure of the axle and a crawler frame of the lower travelling body according to the first embodiment of the first invention.
FIG. 12 is a front view of the connection structure of the axle and the crawler frame of the lower travelling body according to the first embodiment of the first invention.
FIG. 13 is a perspective view of a lower travelling body according to a second embodiment of the first invention.
FIG. 14 is a plan view of the lower travelling body according to the second embodiment of the first invention.
FIG. 15 is a front view of the lower travelling body according to the second embodiment of the first invention.
FIG. 16 is a sectional view taken along a line XVI-XVI of FIG. 14.
FIG. 17 is a sectional view taken along a line XVII-XVII of FIG. 14.
FIG. 18 is a side view of an example of a mobile crane including a lower travelling body according to a first embodiment of a second invention.
FIG. 19 is a perspective view of the lower travelling body according to the first embodiment of the second invention.
FIG. 20 is a plan view of the lower travelling body according to the first embodiment of the second invention.
FIG. 21 is a side view of a connection structure of a car body and an axle of the lower travelling body according to the first embodiment of the second invention.
FIG. 22 is a side view of the connection structure of the car body and the axle of the lower travelling body according to the first embodiment of the second invention.
FIG. 23 is a perspective view of a connection structure of the axle and a crawler frame of the lower travelling body according to the first embodiment of the second invention.
FIG. 24 is a front view of the connection structure of the axle and the crawler frame of the lower travelling body according to the first embodiment of the second invention.
FIG. 25 is a plan view of a lower travelling body according to a modification of the first embodiment of the second invention.
FIG. 26 is a perspective view of a lower travelling body according to a second embodiment of the second invention.
FIG. 27 is a plan view of the lower travelling body according to the second embodiment of the second invention.
FIG. 28 is a front view of the lower travelling body according to the second embodiment of the second invention.
FIG. 29 is a sectional view taken along a line XII-XII of FIG. 27.
FIG. 30 is a sectional view taken along a line XIII-XIII of FIG. 27.
FIG. 31 is a side view of a crawler crane that is a mobile crane according to an embodiment of a third invention.
FIG. 32 is a plan view of a car body, a front axle, a rear axle, left and right crawler travelling devices, and four jack devices in the crawler crane according to the embodiment of the third invention.
FIG. 33 is a side view of the car body, the front axle, the rear axle, and two jack devices according to the embodiment of the third invention.
FIG. 34 is a plan view for explaining arrangement of the four jack devices with respect to the car body according to the embodiment of the third invention.
FIG. 35 is a schematic view for explaining an example of ancillary work involved in transportation of the crawler crane according to the embodiment of the third invention.
FIG. 36 is a schematic view for explaining an example of the ancillary work involved in transportation of the crawler crane according to the embodiment of the third invention.
FIG. 37 is a schematic view for explaining an example of the ancillary work involved in transportation of the crawler crane according to the embodiment of the third invention.
FIG. 38 is a schematic view for explaining an example of the ancillary work involved in transportation of the crawler crane according to the embodiment of the third invention.
FIG. 39 is a schematic view for explaining an example of the ancillary work involved in transportation of the crawler crane according to the embodiment of the third invention.
FIG. 40 is a plan view of a car body, a front axle, a rear axle, left and right crawler travelling devices, and four jack devices according to a first modification of the embodiment of the third invention.
FIG. 41 is a plan view of a car body, a front axle, a rear axle, left and right crawler travelling devices, and four jack devices according to a second modification of the embodiment of the third invention.
FIG. 42 is a plan view of a car body, a front axle, a rear axle, left and right crawler travelling devices, and four jack devices according to a third modification of the embodiment of the third invention.

### Description of Embodiments

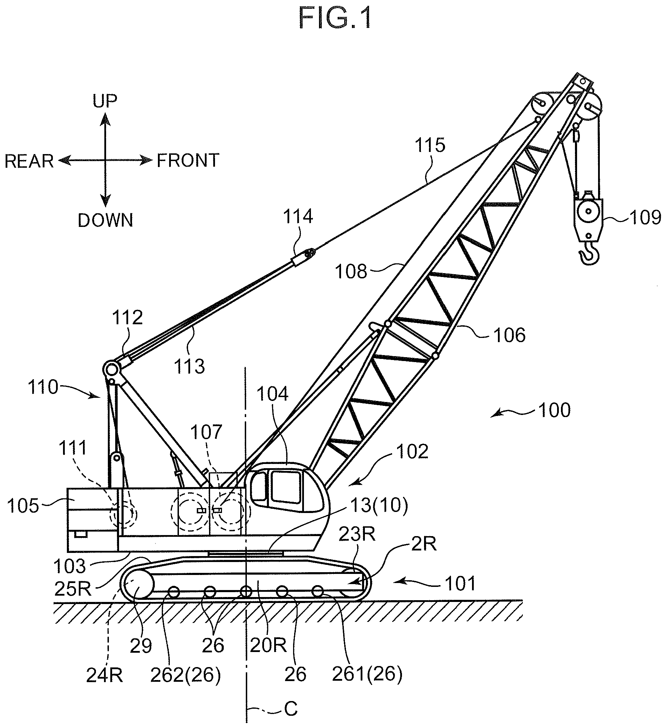

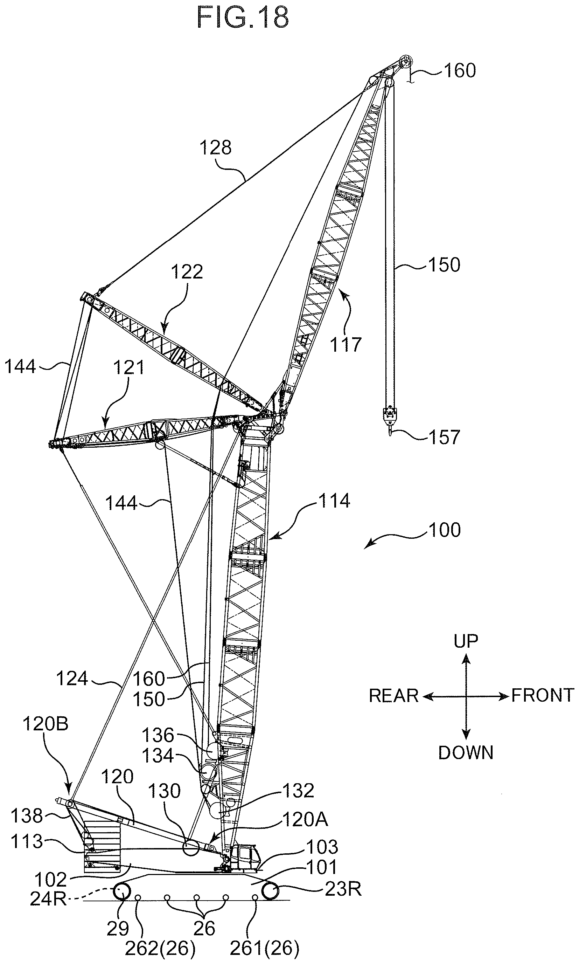

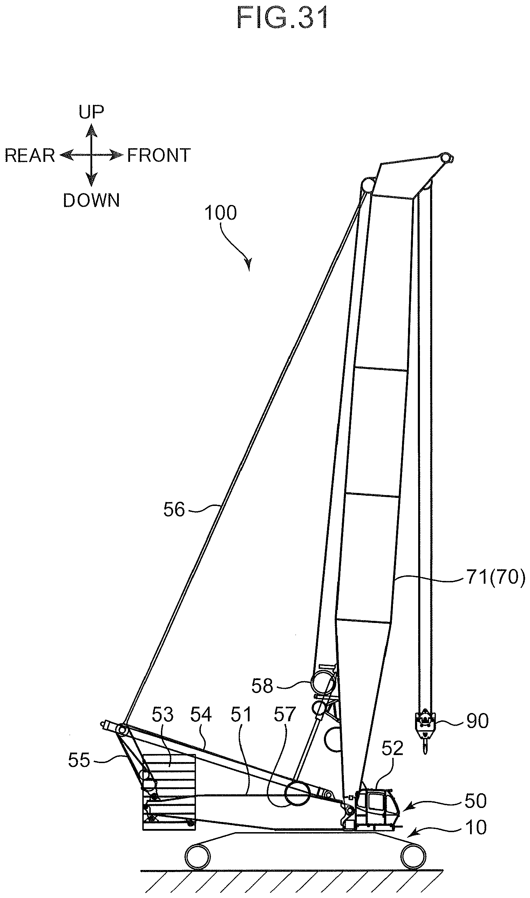

The present disclosure includes a first invention, a second invention, and a third invention. The first invention includes embodiments shown in FIGS. 1 to 17, the second invention includes embodiments shown in FIGS. 18 to 30, and the third invention includes an embodiment shown in FIGS. 31 to 42. A lower travelling body according to the first invention may further include a configuration according to the second invention and/or a configuration according to the third invention, or may include only the configuration according to the first invention. A lower travelling body according to the second invention may further include the configuration according to the first invention and/or the configuration according to the third invention, or may include only the configuration according to the second invention. A mobile crane according to the third invention may further include the configuration according to the first invention and/or the configuration according to the second invention, or may include only the configuration according to the third invention.

### [Embodiments of First Invention]

Hereinafter, a lower travelling body of a mobile crane according to an embodiment of the first invention and a mobile crane including the lower travelling body will be described with reference to FIGS. 1 to 17. In the drawings, "front", "rear", "right", "left", "up", and "down" are indicated. These letters refer to directions defined with reference to a direction in which the lower travelling body moves forward and backward. In other words, the front-to-rear direction of the lower travelling body is a horizontal direction in which crawler frames, which will be described later, extend, and the left-to-right direction of the lower travelling body is a horizontal direction perpendicular to the front-to-rear direction. The vertical direction of the lower travelling body is a direction parallel to a slewing center axis of an upper slewing body.

### [Overall Structure of Mobile Crane]

As shown in FIG. 1, a mobile crane 100 according to this embodiment includes a lower travelling body 101 and an upper slewing body 102. The lower travelling body 101 is configured to support the upper slewing body 102 from below in such a way as to allow it to turn and to be capable of travelling on the ground.

The upper slewing body 102 is mounted on the lower travelling body 101. The upper slewing body 102 includes a slewing frame 103, a work device, a cab 104, and a counterweight 105. The work device, the cab 104, and the counterweight 105 are mounted on the slewing frame 103.

The work device is a device for carrying out cargo lifting work (crane work) and the like. In this embodiment, the work device includes a boom 106, a lifting winch 107, a lifting rope 108, a hook device 109, a gantry 110, a raising/lowering winch 111, a lower spreader 112, a raising/lowering rope 113, an upper spreader 114, and a guy line 115. The work device is not limited to a specific example of the work device shown in FIG. 1. For example, the work device may further include a jib (not illustrated) that can be attached to a front end part of the boom.

The boom 106 is attached to a front part of the slewing frame 103 in such a way as to be capable of rising/falling, and has the hook device 109 hung from a front end of the boom 106 via the lifting rope 108, the hook device 109 being used to hook a cargo-to-be-lifted thereon. The lifting winch 107 is mounted on the slewing frame 103, and winds or unwinds the lifting rope 108 to wind up or down the hook device 109. The gantry 110 is erected on a rear part of the slewing frame 103. The guy line 115 has one end connected to the front end part of the boom 106 and the other end connected to the upper spreader 114. The lower spreader 112 is disposed on an upper end part of the gantry 110, and the lower spreader 112 and the upper spreader 114 are separated apart from each other. The raising/lowering rope 113 is wound around the lower spreader 112 and the upper spreader 114. The raising/lowering winch 111 is mounted on the slewing frame 103, and winds or unwinds the raising/lowering rope 113 to decrease or increase the separation distance from the upper spreader 114 to the lower spreader 112. As a result of a decrease or increase in the separation distance between the spreaders 112 and 114, the boom 106 is raised or lowered.

### [Structure of Lower Travelling Body According to First Embodiment]

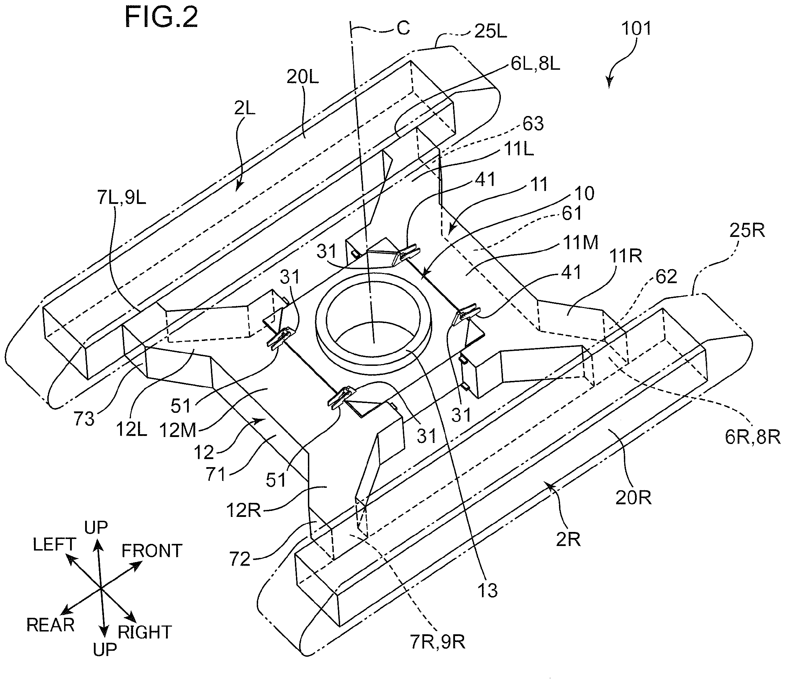

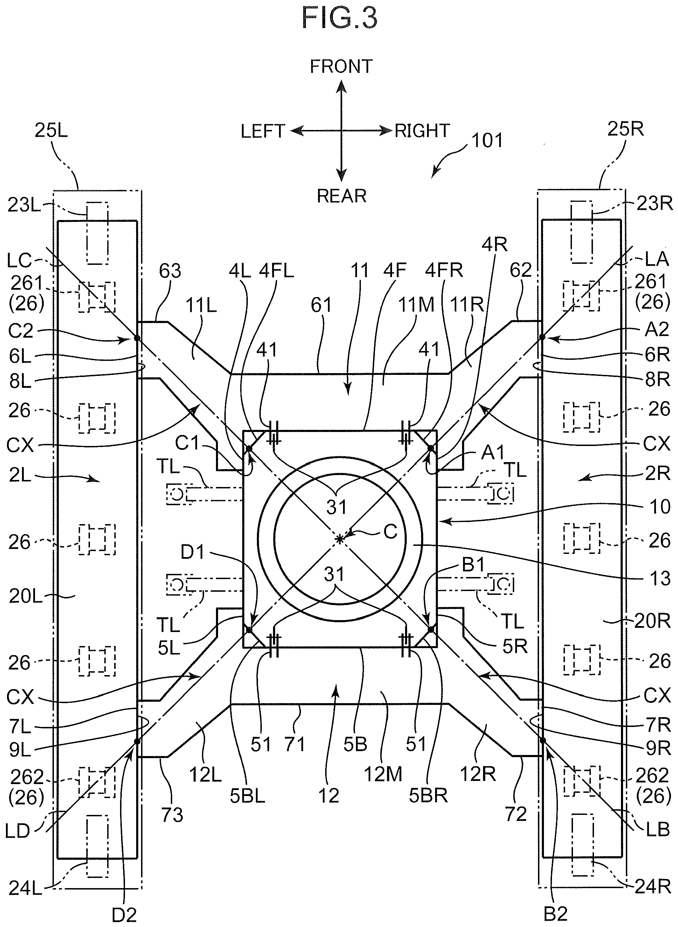

FIG. 2 is a perspective view of the lower travelling body 101 according to the first embodiment, and FIG. 3 is a plan view of the lower travelling body 101. In this embodiment, as shown in FIGS. 1 and 3, the front-to-rear direction of the lower travelling body 101 is the longitudinal direction of crawler frames 2R and 2L, which will be described later, and a frontward direction along the front-to-rear direction is a direction of heading from a wheel 24R (drive tumbler) toward a wheel 23R (idler) in each crawler frame while a rearward direction along the same is the direction opposite to the direction of heading from the wheel 24R toward the wheel 23R. The front-to-rear direction of the lower travelling body 101, however, may be defined as the direction opposite to the front-to-rear direction defined in FIGS. 2 and 3. In FIG. 2, the wheels 23R and 24R are not illustrated.

The lower travelling body 101 includes a lower frame, a right travelling device, and a left travelling device. The lower frame is a frame for supporting the upper slewing body 102 in such a way as to allow it to turn. The right travelling device and the left travelling device each travel on the ground while supporting the lower frame.

The lower frame includes a car body 10, a slewing bearing 13 supported on the top of the car body 10, and a coupling portion. The upper slewing body 102 is mounted on the slewing bearing 13. The car body 10 supports the upper slewing body 102 of the mobile crane 100 in such a way as to allow the upper slewing body 102 to turn about a slewing center axis C via the slewing bearing 13. The slewing center axis C is substantially parallel to the vertical direction when the ground is level.

The coupling portion couples the car body 10 to a right crawler frame 2R and to a left crawler frame 2L as well. The coupling portion will be described in detail later.

The right travelling device includes the right crawler frame 2R, a pair of right wheels 23R and 24R, a right crawler belt 25R, a plurality of right rollers 26, and a travelling drive unit 29 (see FIG. 1). Likewise, the left travelling device includes a left crawler frame 2L, a pair of left wheels 23L and 24L, a left crawler belt 25L, a plurality of left rollers 26, and a travelling drive unit 29.

The right crawler frame 2R includes a right frame body 20R, and the left crawler frame 2L includes a left frame body 20L. The right frame body 20R has a shape extending in the front-to-rear direction on the right side relative to the slewing center axis C. The left frame body 20L has a shape extending in the front-to-rear direction on the left side relative to the slewing center axis C.

The pair of right wheels 23R and 24R are rotatably supported on a front end part and a rear end part of the right frame body 20 R, respectively. In this embodiment, the right wheel 23R located on the front side is configured by an idler, and the right wheel 24R located on the rear side is configured by a drive tumbler. The drive tumbler is connected to the travelling drive unit 29 (see FIG. 1) that is supported on the rear end part of the right frame body 20R at a position adjacent to the drive tumbler. The travelling drive unit 29 includes, for example, a travelling motor and a travelling speed reducer. The travelling drive unit 29 is not illustrated in the drawings other than FIG. 1.

The right crawler belt 25R is a belt that is annularly put around the pair of right wheels 23R and 24R to be capable of circling movement. In other words, the right crawler belt 25R is an endless belt supported by the pair of right wheels 23R and 24R. The right crawler belt 25R is configured by numbers of crawler shoes connected to each other.

On the outer periphery of the right wheel 24R configured by the drive tumbler, a plurality of projections are formed along the circumferential direction such that the projections can be engaged with the inner periphery of the right crawler belt 25R. The right wheel 24R is supplied with a driving force from the travelling drive unit 29, and this driving force is transmitted to the right crawler belt 25R. As a result, the right crawler belt 25R makes circling movement. The right wheel 23R configured by the idler rotates by following the movement of the right crawler belt 25R.

The plurality of right rollers 26 are each supported rotatably on a lower part of the right frame body 20R of the right crawler frame 2R. The plurality of right rollers 26 are spaced in the front-to-rear direction between the pair of right wheels 23R and 24R. The plurality of right rollers 26 presses the right crawler belt 25R against the ground and guides the circling movement of the right crawler belt 25R.

Hereinafter, the right roller 26 located at the head of the plurality of right rollers 26 (in this embodiment, the right roller 26 closest to the wheel 23R) will be referred to as a right front end roller 261, and the right roller 26 located at the tail of the plurality of right rollers 26 (in this embodiment, the right roller 26 closest to the wheel 24R) will be referred to as a right rear end roller 262.

The structure of the pair of left wheels 23L and 24L, the left crawler belt 25L, and the plurality of left rollers 26 in the left travelling device is the same as the above-described structure of the pair of right wheels 23R and 24R, the right crawler belt 25R, and the plurality of right rollers 26 in the right travelling device, except the fact that both structures are symmetrical with each other in the left-to-right direction, and is therefore not described in detail. Hereinafter, the left roller 26 located at the head of the plurality of left rollers 26 (in this embodiment, the left roller 26 closest to a wheel 23L) will be referred to as a left front end roller 261, and the left roller 26 located at the tail of the plurality of left rollers 26 (in this embodiment, the left roller 26 closest to a wheel 24L) will be referred to as a left rear end roller 262.

In the lower travelling body 101 according to the first embodiment, the coupling portion is configured by a front axle 11 and a rear axle 12 as shown in FIGS. 2 and 3. The front axle 11 couples the right crawler frame 2R to the left crawler frame 2L on the front side relative to the slewing center axis C, and supports the car body 10. The rear axle 12 couples the right crawler frame 2R to the left crawler frame 2L on the rear side relative to the slewing center axis C, and supports the car body 10.

In the lower travelling body 101, during crane work, the front axle 11 can transmit a front load diagonally frontward to the right and diagonally frontward to the left, and the rear axle 12 can transmit a rear load diagonally rearward to the right and diagonally rearward to the left. This allows reducing a warp that develops on the left and right crawler frames 2R and 2L because of the front load and rear load. It should be noted that the front load is a load that the car body 10 receives from the upper slewing body 102 when the cargo-to-be-lifted is hung on the hook device 109 of the upper slewing body 102 on the front side relative to the lower travelling body 101 and that the rear load is a load that the car body 10 receives from the upper slewing body 102 when the cargo-to-be-lifted is hung on the hook device 109 of the upper slewing body 102 on the rear side relative to the lower travelling body 101. The front load that the front axle 11 transmits diagonally frontward to the right and diagonally frontward to the left is part of the entire load that the car body 10 receives from the upper slewing body 102 when the cargo-to-be-lifted is hung on the upper slewing body 102 on the front side relative to the lower travelling body 101. Similarly, the rear load that the rear axle 12 transmits diagonally rearward to the right and diagonally rearward to the left is part of the entire load that the car body 10 receives from the upper slewing body 102 when the cargo-to-be-lifted is hung on the upper slewing body 102 on the rear side relative to the lower travelling body 101.

When the mobile crane 100 is transported, the front axle 11 and the rear axle 12 can be removed from each of the car body 10, the right crawler frame 2R, and the left crawler frame 2L. Even if the mobile crane 100 is relatively large in size, therefore, the width of each component to be transported can be kept within a transportation limit width. The lower travelling body 101 thus offers both advantages of suppressing warping of the crawler frames 2R and 2L during crane work and reducing the width of a component to be transported.

A load transmission structure and an attachment/detachment structure that the lower travelling body 101 has will hereinafter be described in detail.

### [Load Transmission Structure]

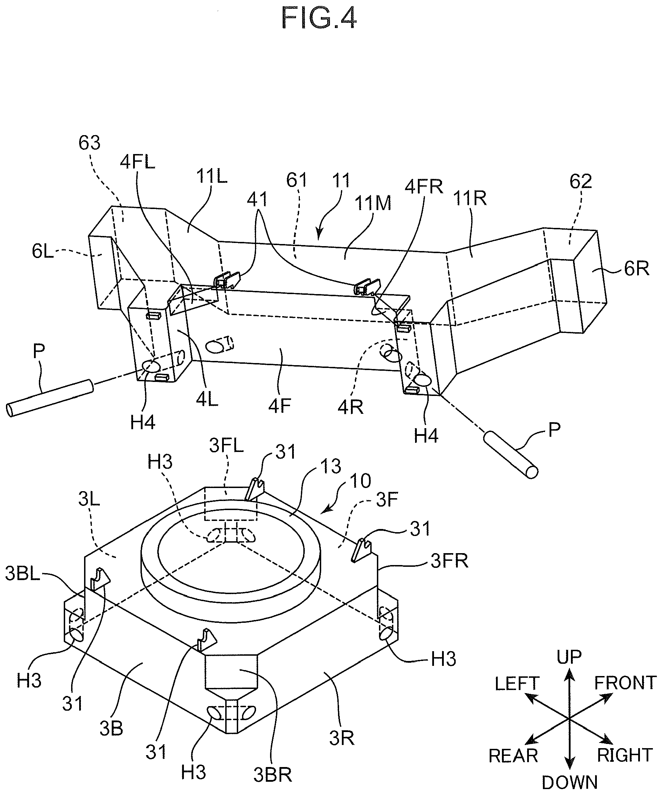

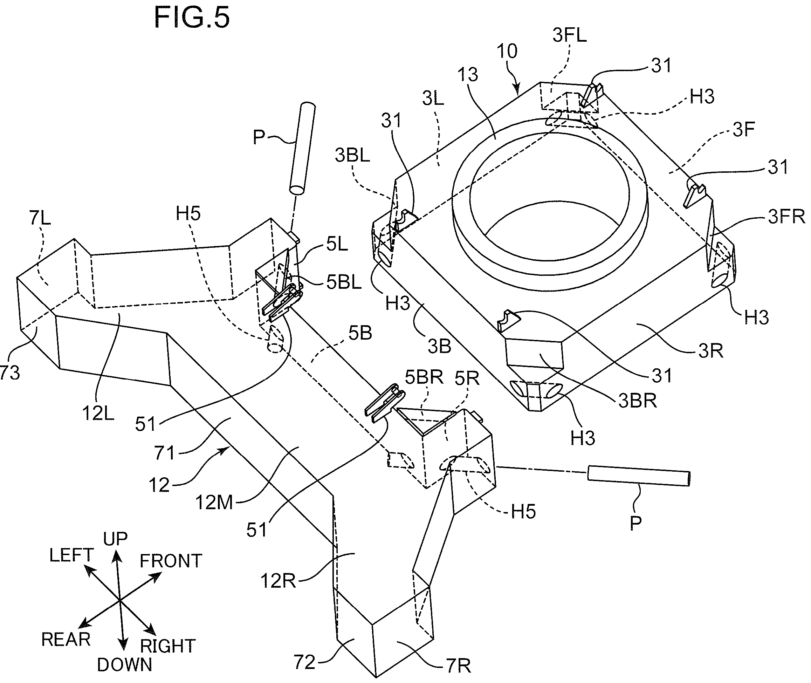

FIG. 4 is a perspective view of the car body 10 and the front axle 11 of the lower travelling body 101 according to the first embodiment, and FIG. 5 is a perspective view of the car body 10 and the rear axle 12.

### (Car Body)

As shown in FIGS. 2 to 5, the car body 10 has a substantially rectangular parallelepiped shape. The car body 10 has a plurality of load transmission surfaces including at least one load transmission surface for transmitting a load received from the upper slewing body 102 to the front axle 11, and at least one load transmission surface for transmitting a load received from the upper slewing body 102 to the rear axle 12.

Specifically, the plurality of load transmission surfaces include a load transmission surface 3F that is a surface facing the front side, a load transmission surface 3B that is a surface facing the rear side, a load transmission surface 3R that is a surface facing the right side, a load transmission surface 3L that is a surface facing the left side, a load transmission surface 3FR that is a surface facing diagonally frontward to the right, a load transmission surface 3BR that is a surface facing diagonally rearward to the right, a load transmission surface 3FL that is a surface facing diagonally frontward to the left, and a load transmission surface 3BL that is a surface facing diagonally rearward to the left.

The load transmission surface 3F is adjacent on the rear side relative to a part of the front axle 11 and transmits the front load to the front axle 11. The load transmission surface 3B is adjacent on the front side relative to a part of the rear axle 12 and transmits the load to the rear axle 12. The load transmission surface 3R is adjacent on the left side relative to a part of the front axle 11 and is adjacent on the left side relative to a part of the rear axle 12, and transmits the load to the front axle 11 and to the rear axle 12. The load transmission surface 3L is adjacent on the right side relative to a part of the front axle 11 and is adjacent on the right side relative to a part of the rear axle 12, and transmits the load to the front axle 11 and to the rear axle 12. The load transmission surface 3FR is adjacent on the diagonally leftward rear side relative to a part of the front axle 11 and transmits the load to the front axle 11. The load transmission surface 3FL is adjacent on the diagonally rightward rear side relative to a part of the front axle 11 and transmits the load to the front axle 11. The load transmission surface 3BR is adjacent on the diagonally leftward front side relative to a part of the front axle 11 and transmits the load to the front axle 11. The load transmission surface 3BL is adjacent on the diagonally rightward front side relative to a part of the front axle 11 and transmits the load to the front axle 11.

In the first embodiment, the load transmission surfaces 3F and 3B are planes perpendicular to the front-to-rear direction. The load transmission surfaces 3F and 3B are, however, not necessarily planes perpendicular to the front-to-rear direction and may be planes or curved surfaces inclined against the front-to-rear direction. The load transmission surfaces 3R and 3L are planes perpendicular to the left-to-right direction. The load transmission surfaces 3R and 3L are, however, not necessarily planes perpendicular to the left-to-right direction and may be planes or curved surfaces inclined against the left-to-right direction.

In FIG. 3, four translifters TL indicated by two-dot chain lines TL are shown. The lower travelling body 101 may be configured such that two translifters TL can be arranged at an interval in the front-to-rear direction on each of the left side and the right side of the car body 10. In this embodiment, a part where the front axle 11 is connected to the car body 10 is on the front side relative to the translifters TL, and a part where the rear axle 12 is connected to the car body 10 is on the rear side relative to the translifters TL. This improves the workability of work of connecting the front axle 11 and the rear axle 12 to the car body 10.

### (Front Axle)

The front axle 11 includes a front middle part 11M connected to a part of car body 10 that is located on the front side relative to the slewing center axis C, a right front part 11R extending diagonally frontward to the right from the front middle part 11M and connected to the right crawler frame 2R, and a left front part 11L extending diagonally frontward to the left from the front middle part 11M and connected to the left crawler frame 2L. The front axle 11 has a shape in which a front surface 61 of the front middle part 11M is located on the rear side relative to a front surface 62 of the right front part 11R and to a front surface 63 of the left front part 11L.

The front axle 11 includes a front load receiving surface counter to the car body 10, a right front load transmission surface 6R counter to the right crawler frame 2R, and a left front load transmission surface 6L counter to the left crawler frame 2L. The front load receiving surface is a surface capable of receiving a front load from the car body 10. The right front load transmission surface 6R is a surface capable of transmitting the front load to the right crawler frame 2R. The left front load transmission surface 6L is a surface capable of transmitting the front load to the left crawler frame 2L.

Specifically, the front load receiving surface of the front axle 11 includes a plurality of load receiving surfaces 4F, 4R, 4L, 4FR, and 4FL.

The load receiving surface 4F of the front axle 11 is a surface that is adjacent to the load transmission surface 3F of the car body 10 on the front side relative to the load transmission surface 3F and that is counter to the load transmission surface 3F in the front-to-rear direction. The load receiving surface 4F can receive a part of the front load (a load including a front load component) from the load transmission surface 3F.

The load receiving surface 4R of the front axle 11 is a surface that is adjacent to the load transmission surface 3R of the car body 10 on the right side relative to the load transmission surface 3R and that is counter to the load transmission surface 3R in the left-to-right direction. The load receiving surface 4R can receive a part of the front load (a load including a right load component) from the load transmission surface 3R.

The load receiving surface 4L of the front axle 11 is a surface that is adjacent to the load transmission surface 3L of the car body 10 on the left side relative to the load transmission surface 3L and that is counter to the load transmission surface 3L in the left-to-right direction. The load receiving surface 4L can receive a part of the front load (a load including a left load component) from the load transmission surface 3L.

The load receiving surface 4FR of the front axle 11 is a surface that is adjacent to the load transmission surface 3FR of the car body 10 on the diagonally rightward front side relative to the load transmission surface 3FR and that is counter to the load transmission surface 3FR. The load receiving surface 4FR can receive a part of the front load (a load including the front load component and the right load component) from the load transmission surface 3FR.

The load receiving surface 4FL of the front axle 11 is a surface that is adjacent to the load transmission surface 3FL of the car body 10 on the diagonally leftward front side relative to the load transmission surface 3FL and that is counter to the load transmission surface 3FL. The load receiving surface 4FL can receive a part of the front load (a load including the front load component and the left load component) from the load transmission surface 3FL.

The right front load transmission surface 6R of the front axle 11 is a surface that is adjacent to a load receiving surface 8R on the left side thereto, the load receiving surface 8R being a part of the right frame body 20R of the right crawler frame 2R, and that is counter to the load receiving surface 8R in the left-to-right direction. The right front load transmission surface 6R can transmit a part of the front load (a load including the front load component and the right load component) to the right frame body 20R.

The left front load transmission surface 6L of the front axle 11 is a surface that is adjacent to a load receiving surface 8L on the right side thereto, the load receiving surface 8L being a part of the left frame body 20L of the left crawler frame 2L, and that is counter to the load receiving surface 8L in the left-to-right direction. The left front load transmission surface 6L can transmit a part of the front load (a load including the front load component and the left load component) to the left frame body 20L.

In the first embodiment, the load receiving surfaces 4F, 4R, and 4L are planes perpendicular to the front-to-rear direction. The load receiving surfaces 4F, 4R, and 4L, however, are not necessarily planes perpendicular to the front-to-rear direction and may be planes or curved surfaces inclined against the front-to-rear direction. The load transmission surfaces 3R and 3L are planes perpendicular to the left-to-right direction. The load transmission surfaces 3R and 3L are, however, not necessarily planes perpendicular to the left-to-right direction and may be planes or curved surfaces inclined against the left-to-right direction.

The front axle 11 has a shape in which, in the plan view shown in FIG. 3, a right front straight line LA, which is a straight line passing through a point A1 included in the front load receiving surface of the front axle 11 and a point A2 included in the right front load transmission surface, passes through the right front end roller 261 and a left front straight line LC, which is a straight line passing through a point C1 included in the front load receiving surface and a point C2 included in the left front load transmission surface, passes through the left front end roller 261. In this embodiment, the right front straight line LA is the straight line passing through the slewing center axis C as well, and the left front straight line LC is the straight line passing through the slewing center axis C as well.

The specific example shown in FIG. 3 is an example in which the point A1 on the front load receiving surface is a point included in the load receiving surface 4FR facing diagonally frontward to the right among the load receiving surfaces making up the front load receiving surface of the front axle 11. The load receiving surface 4FR is the surface that can receive the front load from the load transmission surface 3FR of the car body 10. However, the point on the front load receiving surface for defining the right front straight line LA is not limited to the point included in the load receiving surface FR mentioned above, and may be a point included in the load receiving surface 4F or the load receiving surface 4R that can receive the front load from a load transmission surface of the car body 10. Specifically, the right front straight line LA may be, for example, a straight line that in the plan view shown in FIG. 3, passes through a rear end point on the load receiving surface 4R and through a front end point on the right front load transmission surface 6R.

Likewise, the specific example shown in FIG. 3 is an example in which the point C1 on the front load receiving surface is a point included in the load receiving surface 4FL facing diagonally frontward to the left among the load receiving surfaces making up the front load receiving surface of the front axle 11. The load receiving surface 4FL is the surface that can receive the front load from the load transmission surface 3FL of the car body 10. However, the point on the front load receiving surface for defining the left front straight line LC is not limited to the point included in the load receiving surface 4FL mentioned above, and may be a point included in the load receiving surface 4F or the load receiving surface 4L that can receive the front load from a load transmission surface of the car body 10. Specifically, the left front straight line LC may be, for example, a straight line that in the plan view shown in FIG. 3, passes through a rear end point on the load receiving surface 4L and through a front end point on the left front load transmission surface 6L.

In the lower travelling body 101 according to this embodiment, from the front middle part 11M, the right front part 11R of the front axle 11 is extended diagonally forward to the right as the left front part 11L of the same is extended diagonally forward to the left. This locates the right front load transmission surface 6R and the left front load transmission surface 6L further frontward than in conventional cases, thereby allowing a reduction in a warp of the left and right crawler frames 2R and 2L that is caused by the front load, and at the same, locates the front surface 61 of the front middle part 11M on the rear side relative to the front surface 62 of the right front part 11R and to the front surface 63 of the left front part 11L, thereby allowing suppression of an increase in the weight of the front axle 11.

In comparison with a lower travelling body (comparative example) having a structure that makes the front axle and rear axle parallel to the left-to-right direction, the lower travelling body 101 according to this embodiment offers the following advantages. In the lower travelling body 101 according to this embodiment, a difference between an amount of deformation of the crawler frame when the cargo-to-be-lifted is hung in the left-to-right direction relative to the slewing center axis C and an amount of deformation of the crawler frame when the cargo-to-be-lifted is hung in the front-to-rear direction relative to the slewing center axis C is reduced to be smaller than the difference in the comparative example.

The front axle 11 includes a right front continuous part CX extending continuously, in plan view, from the front load receiving surface (load receiving surfaces 4F, 4R, and 4FR) to the right front load transmission surface 6R along the right front straight line LA, and a left front continuous part CX extending continuously, in plan view, from the front load receiving surface (load receiving surfaces 4F, 4L, and 4FL) to the left front load transmission surface 6L along the left front straight line LC. Specifically, the right front continuous part CX extends continuously from the front load receiving surface to the right front load transmission surface 6R while overlapping the right front straight line LA in plan view. The left front continuous part CX extends continuously from the front load receiving surface to the left front load transmission surface 6L while overlapping the left front straight line LC in plan view.

Because the right front continuous part CX extends continuously without interruption, in plan view, from the front load receiving surface of the front axle 11 to the right front load transmission surface 6R and the left front continuous part CX extends continuously without interruption, in plan view, from the front load receiving surface of the front axle 11 to the left front load transmission surface 6L, the front load received by the front load receiving surface of the front axle 11 is efficiently transmitted continuously to the right front load transmission surface 6R and the left front load transmission surface 6L along the right front continuous part CX and the left front continuous part CX, and is transmitted from these load transmission surfaces 6R and 6L to the left and right crawler frames 2R and 2L.

### (Rear Axle)

The rear axle 12 has the structure that is substantially the same as that of the front axle 11, except for a difference in direction. Specifically, the structure of the rear axle 12 is described as follows.

The rear axle 12 includes a rear middle part 12M connected to a part of car body 10 that is located on the rear side relative to the slewing center axis C, a right rear part 12R extending diagonally rearward to the right from the rear middle part 12M and connected to the right crawler frame 2R, and a left rear part 12L extending diagonally rearward to the left from the rear middle part 12M and connected to the left crawler frame 2L. The rear axle 12 has a shape such that a rear surface 71 of the rear middle part 12M is located on the front side relative to a rear surface 72 of the right rear part 12R and to a rear surface 73 of the left rear part 12L.

The rear axle 12 includes a rear load receiving surface counter to the car body 10, a right rear load transmission surface 7R counter to the right crawler frame 2R, and a left rear load transmission surface 7L counter to the left crawler frame 2L. The rear load receiving surface is a surface capable of receiving a rear load from the car body 10. The right rear load transmission surface 7R is a surface capable of transmitting the rear load to the right crawler frame 2R. The left rear load transmission surface 7L is a surface capable of transmitting the rear load to the left crawler frame 2L.

Specifically, the rear load receiving surface of the rear axle 12 includes a plurality of load receiving surfaces 5B, 5R, 5L, 5BR, and 5BL.

The load receiving surface 5B of the rear axle 12 is a surface that is adjacent to the load transmission surface 3B of the car body 10 on the rear side relative to the load transmission surface 3B and that is counter to the load transmission surface 3B in the front-to-rear direction. The load receiving surface 5B can receive a part of the rear load (a load including a rear load component) from the load transmission surface 3B.

The load receiving surface 5R of the rear axle 12 is a surface that is adjacent to the load transmission surface 3R of the car body 10 on the right side relative to the load transmission surface 3R and that is counter to the load transmission surface 3R in the left-to-right direction. The load receiving surface 5R can receive a part of the rear load (a load including a right load component) from the load transmission surface 3R.

The load receiving surface 5L of the rear axle 12 is a surface that is adjacent to the load transmission surface 3L of the car body 10 on the left side relative to the load transmission surface 3L and that is counter to the load transmission surface 3L in the left-to-right direction. The load receiving surface 5L can receive a part of the rear load (a load including a left load component) from the load transmission surface 3L.

The load receiving surface 4BR of the rear axle 12 is a surface that is adjacent to the load transmission surface 3BR of the car body 10 on the diagonally rightward rear side relative to the load transmission surface 3BR and that is counter to the load transmission surface 3BR. The load receiving surface 5BR can receive a part of the rear load (a load including the rear load component and the right load component) from the load transmission surface 3BR.

The load receiving surface 4BL of the rear axle 12 is a surface that is adjacent to the load transmission surface 3BL of the car body 10 on the diagonally leftward rear side relative to the load transmission surface 3BL and that is counter to the load transmission surface 3BL. The load receiving surface 5BL can receive a part of the rear load (a load including the rear load component and the left load component) from the load transmission surface 3BL.

The right rear load transmission surface 7R of the rear axle 12 is a surface that is adjacent to a load receiving surface 9R on the left side thereto, the load receiving surface 9R being a part of the right frame body 20R of the right crawler frame 2R, and that is counter to the load receiving surface 9R in the left-to-right direction. The right rear load transmission surface 7R can transmit a part of the rear load (a load including the rear load component and the right load component) to the right frame body 20R.

The left rear load transmission surface 7L of the rear axle 12 is a surface that is adjacent to a load receiving surface 9L on the right side thereto, the load receiving surface 9L being a part of the left frame body 20L of the left crawler frame 2L, and that is counter to the load receiving surface 9L in the left-to-right direction. The left rear load transmission surface 7L can transmit a part of the rear load (a load including the rear load component and the left load component) to the left frame body 20L.

In this embodiment, the load receiving surfaces 5B, 5R, and 5L are planes perpendicular to the front-to-rear direction. The load receiving surfaces 5B, 5R, and 5L, however, are not necessarily planes perpendicular to the front-to-rear direction and may be planes or curved surfaces inclined against the front-to-rear direction.

The rear axle 12 has a shape in which, in the plan view shown in FIG. 3, a right rear straight line LB, which is a straight line passing through a point B1 included in the rear load receiving surface of the rear axle 12 and a point B2 included in the right rear load transmission surface, passes through the right rear end roller 262 and a left rear straight line LD, which is a straight line passing through a point D1 included in the rear load receiving surface and a point D2 included in the left rear load transmission surface, passes through the left rear end roller 262. In this embodiment, the right rear straight line LB is the straight line passing through the slewing center axis C as well, and the left rear straight line LD is the straight line passing through the slewing center axis C as well.

The specific example shown in FIG. 3 is an example in which the point B1 on the rear load receiving surface is a point included in the load receiving surface 5BR facing diagonally rearward to the right among the load receiving surfaces making up the rear load receiving surface of the rear axle 12. The load receiving surface 5BR is the surface that can receive the rear load from the load transmission surface 3BR of the car body 10. However, the point on the rear load receiving surface for defining the right rear straight line LB is not limited to the point included in the load receiving surface BR mentioned above, and may be a point included in the load receiving surface 5B or the load receiving surface 5R that can receive the rear load from a load transmission surface of the car body 10. Specifically, the right rear straight line LB may be, for example, a straight line that in the plan view shown in FIG. 3, passes through a front end point on the load receiving surface 5R and through a front end point on the right rear load transmission surface 7R.

Likewise, the specific example shown in FIG. 3 is an example in which the point D1 on the rear load receiving surface is a point included in the load receiving surface 5BL facing diagonally rearward to the left among the load receiving surfaces making up the rear load receiving surface of the rear axle 12. The load receiving surface 5BL is the surface that can receive the front load from the load transmission surface 3BL of the car body 10. However, the point on the rear load receiving surface for defining the left rear straight line LD is not limited to the point included in the load receiving surface 5BL mentioned above, and may be a point included in the load receiving surface 5B or the load receiving surface 5L that can receive the front load from a load transmission surface of the car body 10. Specifically, the left rear straight line LD may be, for example, a straight line that in the plan view shown in FIG. 3, passes through a front end point on the load receiving surface 5L and through a front end point on the left rear load transmission surface 7L.

In the lower travelling body 101 according to this embodiment, from the rear middle part 12M, the right rear part 12R of the rear axle 12 is extended diagonally rearward to the right as the left rear part 12L of the same is extended diagonally rearward to the left. This locates the right rear load transmission surface 7R and the left rear load transmission surface 7L further rearward than in conventional cases, thereby allowing a reduction in a warp of the left and right crawler frames 2R and 2L that is caused by the rear load, and at the same, locates the rear surface 71 of the rear middle part 12M on the front side relative to the rear surface 72 of the right rear part 12R and to the rear surface 73 of the left rear part 12L, thereby allowing suppression of an increase in the weight of the rear axle 12.

The rear axle 12 includes a right rear continuous part CX extending continuously, in plan view, from the rear load receiving surface (load receiving surfaces 5B, 5R, and 5BR) to the right rear load transmission surface 7R along the right rear straight line LB, and a left rear continuous part CX extending continuously, in plan view, from the rear load receiving surface (load receiving surfaces 5B, 5L, and 5BL) to the left rear load transmission surface 7L along the left rear straight line LD. Specifically, the right rear continuous part CX extends continuously from the rear load receiving surface to the right rear load transmission surface 7R while overlapping the right rear straight line LB in plan view. The left rear continuous part CX extends continuously from the rear load receiving surface to the left rear load transmission surface 7L while overlapping the left rear straight line LD in plan view.

Because the right rear continuous part CX extends continuously without interruption, in plan view, from the rear load receiving surface of the rear axle 12 to the right rear load transmission surface 7R and the left rear continuous part CX extends continuously without interruption, in plan view, from the rear load receiving surface of the rear axle 12 to the left rear load transmission surface 7L, the rear load received by the rear load receiving surface of the rear axle 12 is efficiently transmitted continuously to the right rear load transmission surface 7R and the left rear load transmission surface 7L along the right rear continuous part CX and the left rear continuous part CX, and is transmitted from these load transmission surfaces 7R and 7L to the left and right crawler frames 2R and 2L.

### [Attachment/Detachment Structure]

An attachment/detachment structure of the lower travelling body 101 according to this embodiment will then be described.

The lower travelling body 101 according to this embodiment has a structure in which the front axle 11 and the rear axle 12 can each be attached to or detached from the car body 10, the right crawler frame 2R, and the left crawler frame 2L. The width of each of the components making up the lower travelling body 101, therefore, can be made small, and therefore, even if the mobile crane 100 is relatively large in size, the width of a component to be transported can be kept within a transportation limit width. This advantage will be described specifically as follows.

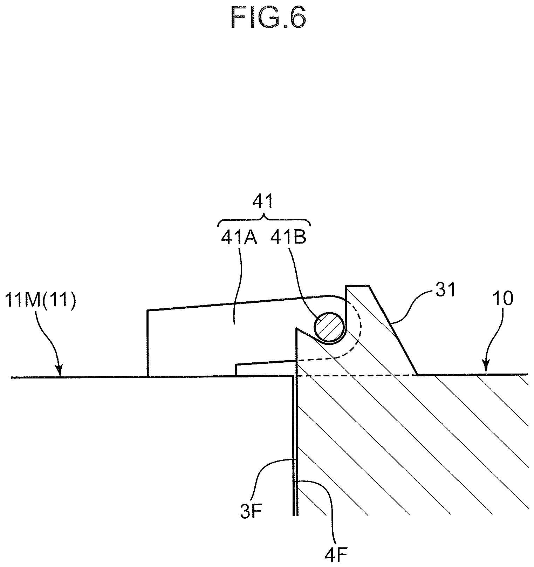

FIG. 6 is a perspective view of an engaging portion 41 of the front axle 11 and an engaged portion 31 of the car body 10 in the lower travelling body 101 according to this embodiment. As shown in FIGS. 4 and 6, a plurality of engaging portions 41 are arranged at intervals in the left-to-right direction on an upper surface of the front middle part 11M of the front axle 11, and a plurality of engaged portions 31 are arranged on an upper surface of a front part of the car body 10 such that the engaged portions 31 correspond in position to the engaging portions 41.

Each engaging portion 41 includes a pair of support pieces 41A extending rearward from the upper surface of the front middle part 11M to a position at which the support pieces 41A overlap the upper surface of the front part of the car body 10, and a rod portion 41B extending over these support pieces 41A in the left-to-right direction. As shown in FIG. 6, each engaged portion 31 has a recess formed at a position corresponding to the rod portion 41B, and the recess can receive and support the rod portion 41B.

A plurality of engaging portions 51 similar to the above engaging portions 41 are arranged at intervals in the left-to-right direction on an upper surface of the rear middle part 12M of the rear axle 12, and a plurality of engaged portions 31 are arranged on an upper surface of a rear part of the car body 10 such that the engaged portions 31 correspond in position to the engaging portions 51. Detailed description of these engaging portions 51 and engaged portions 31, however, will be omitted.

As shown in FIGS. 4 and 5, the car body 10 has a plurality of pin insertion holes for connecting the car body 10 to the front axle 11, and a plurality of pin insertion holes for connecting the car body 10 to the rear axle 12.

Specifically, the plurality of pin insertion holes used for connection to the front axle 11 include a pin insertion hole H3 that at a corner on the diagonally rightward front side relative to the slewing center axis C, penetrates the car body 10 in a diagonally rightward rear direction from the front surface (load transmission surface 3F) of the car body 10 to the right side surface (load transmission surface 3R) of the car body 10, and a pin insertion hole H3 that at a corner on the diagonally leftward front side relative to the slewing center axis C, penetrates the car body 10 in a diagonally leftward rear direction from the front surface (load transmission surface 3F) of the car body 10 to the left side surface (load transmission surface 3L) of the car body 10.

The plurality of pin insertion holes used for connection to the rear axle 12 include a pin insertion hole H3 that at a corner on the diagonally rightward rear side relative to the slewing center axis C, penetrates the car body 10 in a diagonally rightward front direction from the rear surface (load transmission surface 3B) of the car body 10 to the right side surface (load transmission surface 3R) of the car body 10, and a pin insertion hole H3 that at a corner on the diagonally leftward rear side relative to the slewing center axis C, penetrates the car body 10 in a diagonally leftward front direction from the rear surface (load transmission surface 3B) of the car body 10 to the left side surface (load transmission surface 3L) of the car body 10.

As shown in FIG. 4, the front axle 11 has two pin insertion holes H4 positioned counter to two pin insertion holes H3 on the front side of the car body 10. As shown in FIG. 5, the rear axle 12 has two pin insertion holes H5 positioned counter to two pin insertion holes H3 on the rear side of the car body 10.

To connect the front axle 11 to the car body 10, as the plurality of engaging portions 41 of the front axle 11 are hooked on the plurality of engaged portions 31 of the car body 10,.an operator rotates the front axle 11 about the rod portions 41B making up the engaging portions 41, respectively. This fits the front axle 11 to the front part of the car body 10. At this time, the two pin insertion holes H4 of the front axle 11 are located at positions corresponding to the two pin insertion holes H3 on the front side of the car body 10. Thereafter, two pins P are inserted into two pairs of pin insertion holes H3 and H4 in one-to-one correspondence. Hence the front axle 11 is connected to the car body 10. When the lower travelling body 101 is disassembled for transportation of the mobile crane 100, the work reverse in procedure to the above work is carried out to detach the front axle 11 from the car body 10.

A procedure of connecting the rear axle 12 to the car body 10 and a procedure of detaching the rear axle 12 from the car body 10 are the same as the procedures of connecting and detaching the front axle 11 to and from the car body 10, and are therefore not described in detail.

It should be noted that the attachment/detachment structure (connection structure) for attaching and detaching the front axle 11 and the rear axle 12 to and from the car body 10 is not limited to the above structure and that, for example, the following structures may be adopted as the attachment/detachment structure.

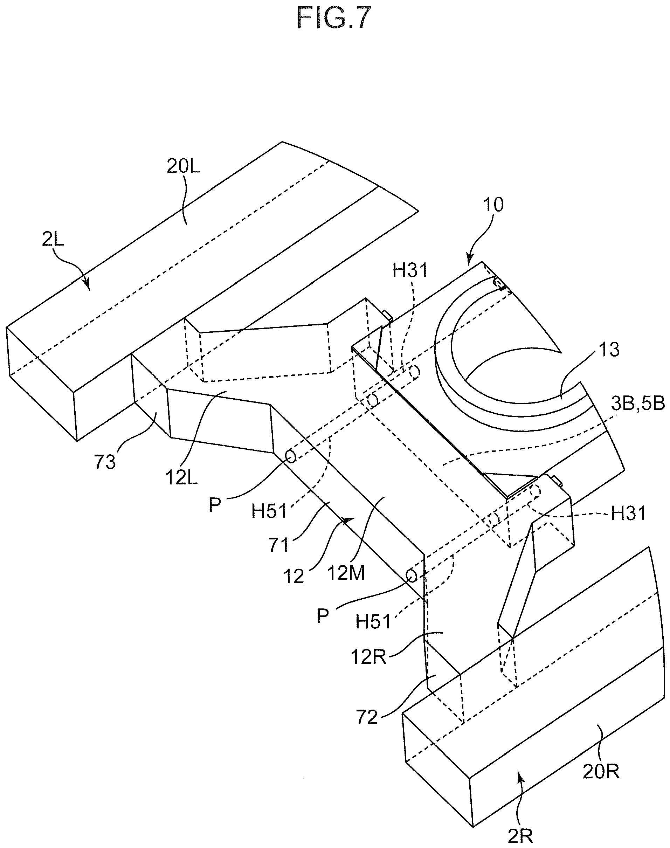

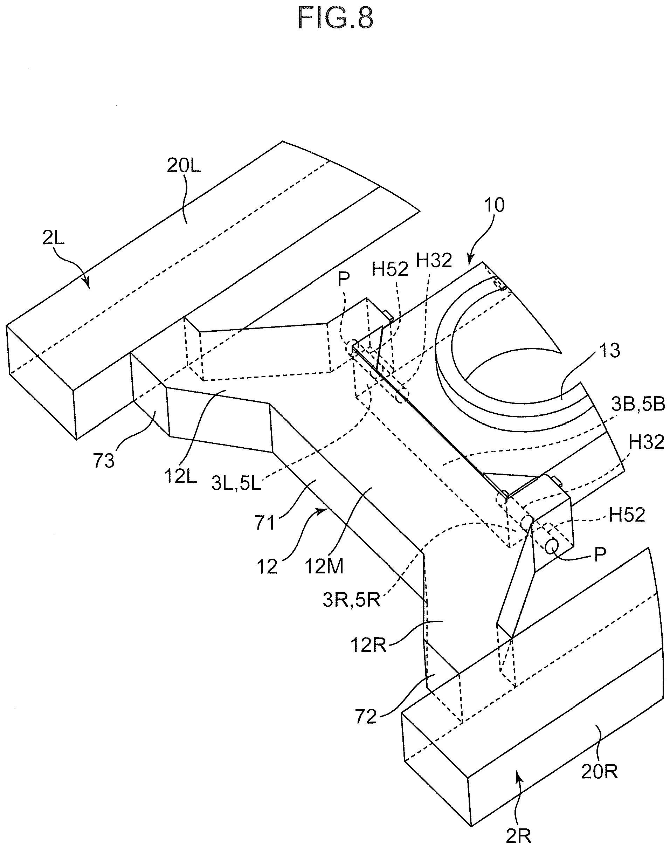

FIGS. 7 and 8 are perspective views each showing another example of the connection structure of the car body 10 and the axle. An attachment/detachment structure shown in FIG. 7 is different from the attachment/detachment structure shown in FIGS. 4 and 5 in that pin insertion holes and pins extend in the front-to-rear direction, and an attachment/detachment structure shown in FIG. 8 is different from the attachment/detachment structure shown in FIGS. 4 and 5 in that pin insertion holes and pins extend in the left-to-right direction.

In the structure shown in FIG. 7, the car body 10 has a plurality of pin insertion holes H31 for connecting the car body 10 to the front axle 11, and a plurality of pin insertion holes H31 for connecting the car body 10 to the rear axle 12. These pin insertion holes H31 are each formed in the front-to-rear direction. The rear axle 12 has a plurality of pin insertion holes H51 formed in the front-to-rear direction at positions corresponding to the pin insertion holes H31. Likewise, the front axle 11 too has a plurality of pin insertion holes formed in the front-to-rear direction.

In the structure shown in FIG. 8, the car body 10 has a plurality of pin insertion holes H32 for connecting the car body 10 to the front axle 11, and a plurality of pin insertion holes H32 for connecting the car body 10 to the rear axle 12. These pin insertion holes H32 are each formed in the left-to-right direction. The rear axle 12 has a plurality of pin insertion holes H52 formed in the front-to-rear direction at positions corresponding to the pin insertion holes H32. Likewise, the front axle 11 too has a plurality of pin insertion holes formed in the front-to-rear direction.

In the structures shown in FIGS. 7 and 8, as the front axle 11 is fitted to the front side of the car body 10 and the rear axle 12 is fitted to the rear side of the car body 10, the plurality of pins P are inserted respectively into the corresponding pin insertion holes. This connects the front axle 11 and the rear axle 12 to the car body 10.

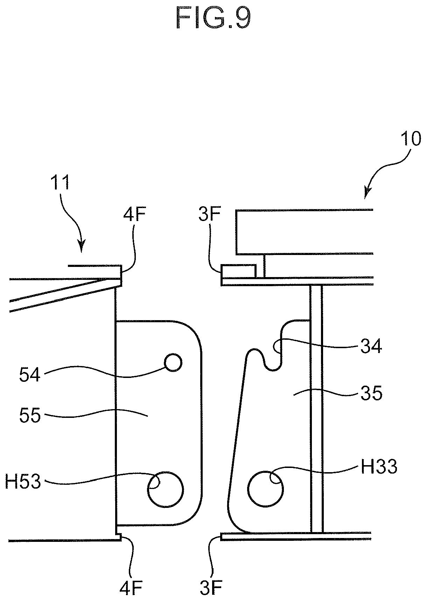

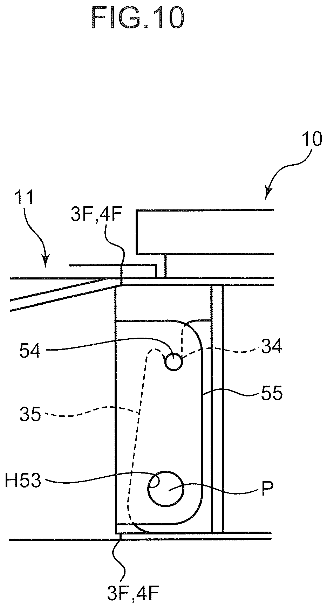

FIGS. 9 and 10 are front views showing still another example of the connection structure of the car body 10 and the axle. In the structure shown in FIGS. 9 and 10, the car body 10 has a projection piece 35 projecting from the main part of the car body 10 toward the front axle 11, and the front axle 11 has a projection piece 55 projecting from the main part of the front axle 11 toward the car body 10. The projection piece 35 has a pin insertion hole H33 and an engaged portion 34. The projection piece 55 has a pin insertion hole H53 formed at the position corresponding to the pin insertion hole H33 of the projection piece 35, and a rod-like engaging portion 54 that can be engaged with the engaged portion 34 of the projection piece 35. As shown in FIG. 10, as the engaging portion 54 of the projection piece 55 is engaged with the engaged portion 34 of the projection piece 35, the pin P is inserted into the pin insertion holes H33 and H53. Hence the front axle 11 is connected to the car body 10. The attachment/detachment structure of the rear axle 12 and the car body 10 may be similar to this attachment/detachment structure.

In the structure shown in FIG. 10, when the front axle 11 is connected to the car body 10, load transmission surfaces 3F formed respectively on upper and lower parts of the car body 10 are set counter to load receiving surfaces 4F formed respectively on upper and lower parts of the front axle 11, so that the front load is transmitted from the load transmission surfaces 3F to the load receiving surfaces 4F. In the specific example shown in FIGS. 9 and 10, the car body 10 has two upper and lower load transmission surfaces 3F while the front axle 11 has two upper and lower load receiving surfaces 4F corresponding in position to the two load transmission surfaces 3F. The connection structure, however, is not limited to this form. For example, the lower load transmission surface 3F and the lower load receiving surface 4F in FIGS. 9 and 10 may be dispensed with, in which case the car body 10 has the upper load transmission surface 3F only and the front axle 11 has the upper load receiving surface 4F only, which corresponds to the upper load transmission surface 3F. This connection structure applies also to connection between the load transmission surface 3B of the car body 10 and the load receiving surface 5B of the rear axle 12, which case, however, is not illustrated and is not described in detail, either.

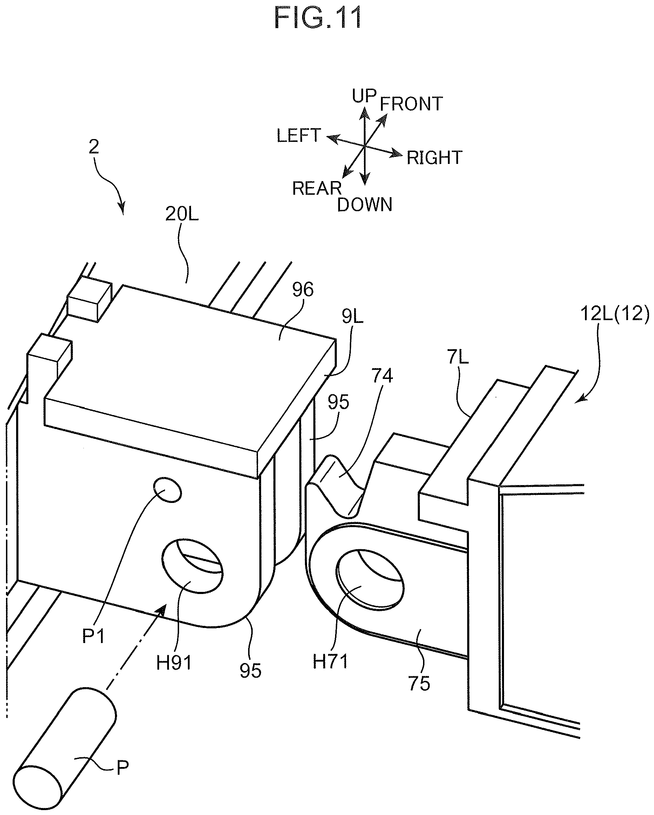

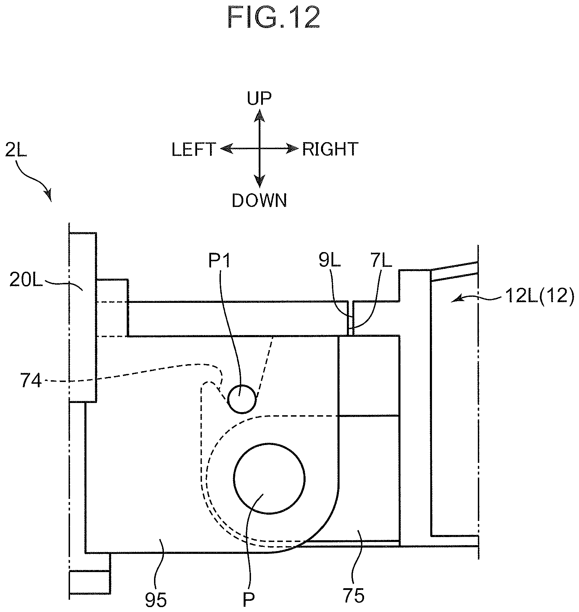

FIGS. 11 and 12 are perspective views of a connection structure of the rear axle 12 and the left crawler frame 2L of the lower travelling body according to the first embodiment. FIG. 11 shows a state of the left rear part 12L of the rear axle 12 before the left rear part 12L being connected to the left crawler frame 2L, and FIG. 12 shows a state of the left rear part 12L of the rear axle 12 being connected to the left crawler frame 2L.

As shown in FIGS. 11 and 12, the left crawler frame 2L has a connection portion projecting rightward from the left frame body 20L. The connection portion has two plate members 95 and 95 attached to the left frame body 20L. The plate members 95 and 95 each have a plate shape set in a position perpendicular to the front-to-rear direction, are lined up in the front-to-rear direction across a gap separating the plate members 95 and 95 from each other, and extend rightward from the left frame body 20L.

The rear axle 12 has a plate member 75 attached to the left rear part 12L. The plate member 75 has a plate shape set in a position perpendicular to the front-to-rear direction, and extends leftward from the left rear part 12L. The gap between the two plate members 95 and 95 of the connection portion of the left crawler frame 2L is made slightly larger than the thickness of the plate member 75 of the rear axle 12 so that the plate member 75 can be inserted in the gap.

The plate members 95 and 95 of the connection portion each have a pin insertion hole H91 penetrating in the front-to-rear direction, and the plate member 75 of the rear axle 12 has a pin insertion hole H71 penetrating in the front-to-rear direction and corresponding in position to the pin insertion hole H91.

The connection portion has a pillar P1 disposed above the pin insertion hole H91 in such a way as to bridge the plate members 95 and 95 in the front-to-rear direction. The pillar P1 is fixed to the plate members 95 and 95 such that the axial direction of the pillar P1 matches the front-to-rear direction.

The plate member 75 of the rear axle 12 has a hook 74 that can be engaged with the pillar P1. In a state where the hook 74 is engaged with the pillar P1 and the pin insertion holes H91 of the plate members 95 and 95 and the pin insertion hole H71 of the plate member 75 are aligned with each other, the connection pin P is inserted into the pin insertion holes H91 and H71. This connects the rear axle 12 to the left crawler frame 2L.

In the structure shown in FIG. 12, when the rear axle 12 is connected to the left crawler frame 2L, the left rear load transmission surface 7L formed on an upper part of the left rear part 12L of the rear axle 12 is set counter to the load receiving surface 9L formed on the left crawler frame 2L. As a result, the rear load is transmitted from the left rear load transmission surface 7L to the load receiving surface 9L.

A structure in which the right rear part 12R of the rear axle 12 is connected to the right crawler frame 2R and a structure in which the right front part 11R and the left front part 11L of the front axle 11 are connected to the right crawler frame 2R and the left crawler frame 2L are the same as the structure shown in FIGS. 11 and 12, and are therefore not described.

### [Structure of Lower Travelling Body According to Second Embodiment]

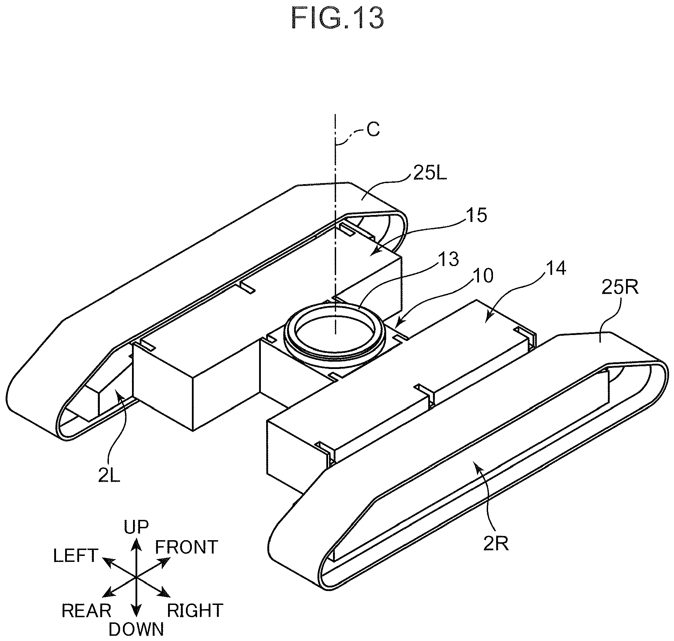

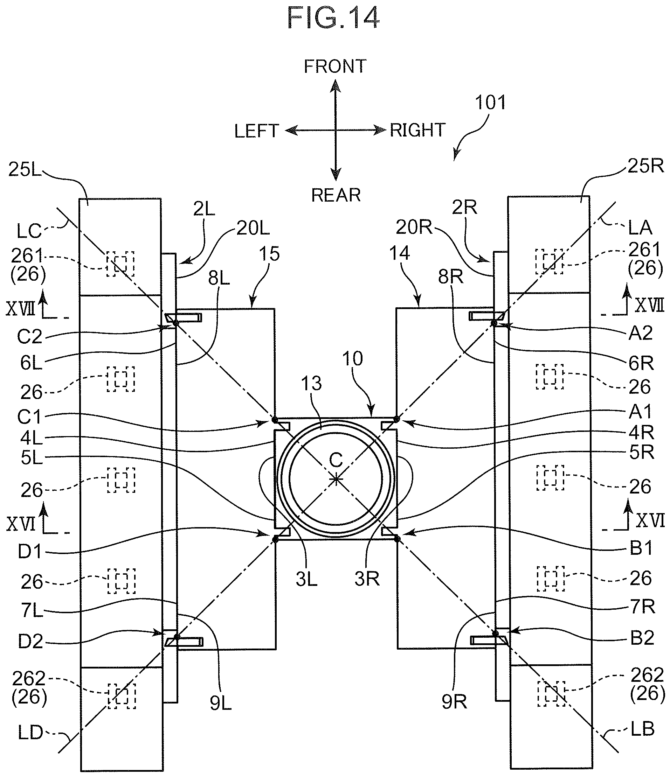

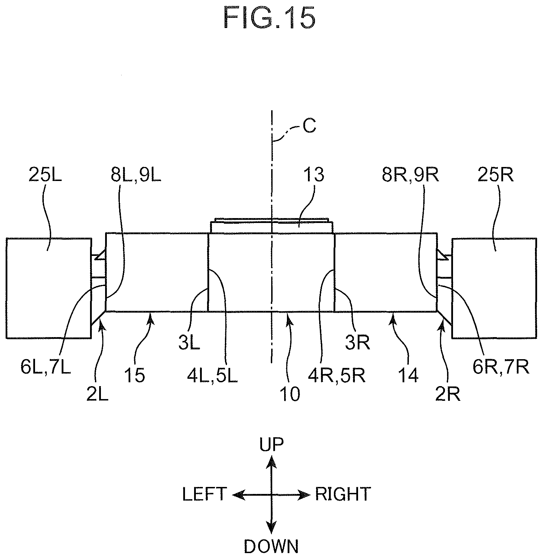

FIG. 13 is a perspective view of the lower travelling body 101 according to a second embodiment, FIG. 14 is a plan view of the lower travelling body 101 of the second embodiment, and FIG. 15 is a front view of the lower travelling body 101 of the second embodiment.

The lower travelling body 101 according to the second embodiment is different from the lower travelling body 101 according to the first embodiment in coupling portion structure, and, except for this main difference, is similar to the lower travelling body 101 according to the first embodiment in other structural aspects. In the following description, therefore, a configuration of the lower travelling body 101 of the second embodiment that is different from that of the lower travelling body 101 of the first embodiment will be mainly explained, and description of the same configuration as that of the lower travelling body 101 of the first embodiment will be omitted.

As shown in FIGS. 13 to 15, while the coupling portion according to the first embodiment is configured by the front axle 11 and the rear axle 12, a coupling portion according to the second embodiment is configured by a right coupling member 14 and a left coupling member 15.

Specifically, in the second embodiment, the coupling portion is configured by the right coupling member 14 that couples the car body 10 to the right crawler frame 2R on the right side relative to the slewing center axis C, and the left coupling member 15 that couples the car body 10 to the left crawler frame 2L on the left side relative to the slewing center axis C.

The right coupling member 14 and the left coupling member 15 each have a substantially rectangular parallelepiped shape whose dimensions in the front-to-rear direction are larger than dimensions in the left-to-right direction. At the right coupling member 14, its middle part in the front-to-rear direction has a left side connected to the right side of the car body 10. The right coupling member 14, therefore, has a front part projecting frontward from the middle part to be on the front side relative to the car body 10 and a rear part projecting rearward from the middle part to be on the rear side relative to the car body 10. Similarly, at the left coupling member 15, its middle part in the front-to-rear direction has a right side connected to the left side of the car body 10. The left coupling member 15, therefore, has a front part projecting frontward from the middle part to be on the front side relative to the car body 10 and a rear part projecting rearward from the middle part to be on the rear side relative to the car body 10.

### [Load Transmission Structure]

In the second embodiment, the front load receiving surface includes a right front load receiving surface 4R located on the right side relative to the slewing center axis C and a left front load receiving surface 4L located on the left side relative to the slewing center axis C, and the rear load receiving surface includes a right rear load receiving surface 5R located on the right side relative to the slewing center axis C and a left rear load receiving surface 5L located on the left side relative to the slewing center axis C.

The right coupling member 14 has the right front load receiving surface 4R, the right rear load receiving surface 5R, a right front load transmission surface 6R, and a right rear load transmission surface 7R.

The right front load receiving surface 4R of the right coupling member 14 is a surface that is adjacent to the load transmission surface 3R of the car body 10 on the right side relative to the load transmission surface 3R and that is counter to the load transmission surface 3R in the left-to-right direction. The right front load receiving surface 4R can receive a part of the front load (a load including a right load component) from the load transmission surface 3R.

The right rear load receiving surface 5R of the right coupling member 14 is a surface that is adjacent to the load transmission surface 3R of the car body 10 on the right side relative to the load transmission surface 3R and that is counter to the load transmission surface 3R in the left-to-right direction. The right rear load receiving surface 5R can receive a part of the rear load (a load including the right load component) from the load transmission surface 3R.

The right front load transmission surface 6R of the right coupling member 14 is a surface that is adjacent to the load receiving surface 8R, which is a part of the right frame body 20R of the right crawler frame 2R, on the left side relative to the load receiving surface 8R and that is counter to the load receiving surface 8R in the left-to-right direction. The right front load transmission surface 6R can transmit a part of the front load (a load including the front load component and the right load component) to the right frame body 20R.

The right rear load transmission surface 7R of the right coupling member 14 is a surface that is adjacent to the load receiving surface 9R, which is a part of the right frame body 20R of the right crawler frame 2R, on the left side relative to the load receiving surface 9R and that is counter to the load receiving surface 9R in the left-to-right direction. The right rear load transmission surface 7R can transmit a part of the rear load (a load including the rear load component and the right load component) to the right frame body 20R.

The left coupling member 15 has the left front load receiving surface 4L, the left rear load receiving surface 5L, a left front load transmission surface 6L, and a left rear load transmission surface 7L.

The load receiving surface 4L of the left coupling member 15 is a surface that is adjacent to the load transmission surface 3L of the car body 10 on the left side relative to the load transmission surface 3L and that is counter to the load transmission surface 3L in the left-to-right direction. The load receiving surface 4L can receive a part of the front load (a load including a left load component) from the load transmission surface 3L.

The load receiving surface 5L of the left coupling member 15 is a surface that is adjacent to the load transmission surface 3L of the car body 10 on the left side relative to the load transmission surface 3L and that is counter to the load transmission surface 3L in the left-to-right direction. The load receiving surface 5L can receive a part of the rear load (a load including the left load component) from the load transmission surface 3L.

The left front load transmission surface 6L of the left coupling member 15 is a surface that is adjacent to the load receiving surface 8L, which is a part of the left frame body 20L of the left crawler frame 2L, on the right side relative to the load receiving surface 8L and that is counter to the load receiving surface 8L in the left-to-right direction. The left front load transmission surface 6L can transmit a part of the front load (a load including the front load component and the left load component) to the left frame body 20L.

The left rear load transmission surface 7L of the left coupling member 15 is a surface that is adjacent to the load receiving surface 9L, which is a part of the left frame body 20L of the left crawler frame 2L, on the right side relative to the load receiving surface 9L and that is counter to the load receiving surface 9L in the left-to-right direction. The left rear load transmission surface 7L can transmit a part of the rear load (a load including the rear load component and the left load component) to the left frame body 20L.

In the second embodiment, the right coupling member 14 has a shape such that in the plan view shown in FIG. 14, a right front straight line LA, which is a straight line passing through a point A1 included in the right front load receiving surface 4R of the right coupling member 14 and a point A2 included in the right front load transmission surface 6R, passes through the right front end roller 261, and a right rear straight line LB, which is a straight line passing through a point B1 included in the right rear load receiving surface 5R of the right coupling member 14 and a point B2 included in the right rear load transmission surface 7R, passes through the right rear end roller 262. In this embodiment, the right front straight line LA is the straight line passing through the slewing center axis C as well, and the right rear straight line LB is the straight line passing through the slewing center axis C as well.

The left coupling member 15 has a shape such that in the plan view shown in FIG. 14, a left front straight line LC, which is a straight line passing through a point C1 included in the left front load receiving surface 4L of the left coupling member 15 and a point C2 included in the left front load transmission surface 6L, passes through the left front end roller 261, and a left rear straight line LD, which is a straight line passing through a point D1 included in the left rear load receiving surface 5L of the left coupling member 15 and a point D2 included in the left rear load transmission surface 7L, passes through the left rear end roller 262. In this embodiment, the left front straight line LC is the straight line passing through the slewing center axis C as well, and the left rear straight line LD is the straight line passing through the slewing center axis C as well.

### [Attachment/Detachment Structure]

The lower travelling body 101 according to the second embodiment has a structure in which the right coupling member 14 and the left coupling member 15 can each be attached to or detached from the car body 10, the right crawler frame 2R, and the left crawler frame 2L. The width of each of the components making up the lower travelling body 101, therefore, can be made small, and therefore, even if the mobile crane 100 is relatively large in size, the width of a component to be transported can be kept within a transportation limit width. This advantage will be described specifically as follows.

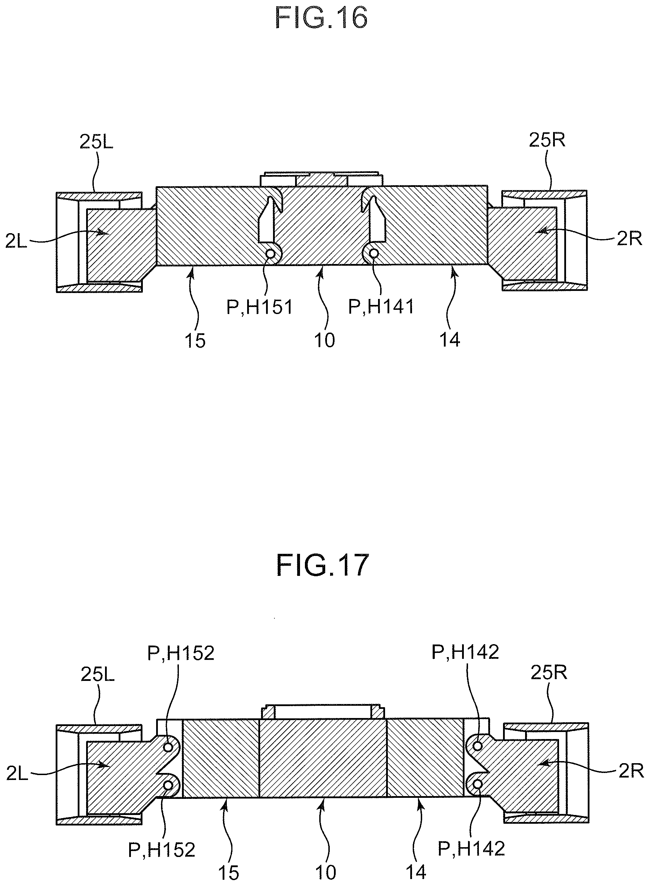

FIG. 16 is a sectional view taken along a line XVI-XVI of FIG. 14, and FIG. 17 is a sectional view taken along a line XVII-XVII of FIG. 14.

As shown in FIG. 16, the right coupling member 14 and the car body 10 have pin insertion holes H141, respectively, the pin insertion holes H141 being formed at two points separated from each other in the front-to-rear direction, and by inserting the pin P into these insertion holes H141, the right coupling member 14 and the car body 10 are connected to each other. In the same manner, the left coupling member 15 and the car body 10 have pin insertion holes H151, respectively, the pin insertion holes H151 being formed at two points separated from each other in the front-to-rear direction, and by inserting the pin P into these insertion holes H151, the left coupling member 15 and the car body 10 are connected to each other.

As shown in FIG. 17, the right coupling member 14 and the right crawler frame 2R have pairs of pin insertion holes H 142, respectively, the pair of pin insertion holes H 142 being formed respectively at two points separated from each other in the front-to-rear direction, and by inserting the pins P into these pairs of pin insertion holes H142, the right coupling member 14 and the right crawler frame 2R are connected to each other. In the same manner, the left coupling member 15 and the left crawler frame 2L have pairs of pin insertion holes H152, respectively, the pair of pin insertion holes H152 being formed respectively at two points separated from each other in the front-to-rear direction, and by inserting the pins P into these pairs of pin insertion holes H152, the left coupling member 15 and the left crawler frame 2L are connected to each other.

The present invention is not limited to the embodiments described above. The present invention includes, for example, the following modes.

### (A) Coupling Portion

The coupling portion includes the front axle 11 and the rear axle 12 according to the first embodiment, while the coupling portion includes the right coupling member 14 and the left coupling member 15 according to the second embodiment. The coupling portion, however, is not limited to the coupling portion of these forms. The coupling portion according to the present invention is applicable when including at least one coupling member, and therefore may be formed of a single coupling member.

### (B) Right Front Straight Line, Right Rear Straight line, Left Front Straight Line, and Left Rear Straight Line

In the above embodiment, the right front straight line LA is the straight line that passes through, in plan view, the position that is on the rotation center axis of the right front end roller 261 and that is at the center in the width direction (left-to-right direction) of the right front end roller 261 and through the slewing center axis C, and the right rear straight line LB, the left front straight line LC, and the left rear straight line LD are also defined in a similar manner. The right front straight line LA is, however, not limited to the straight line of this form. The right front straight line LA may be, for example, a straight line that in plan view, passes through the slewing center axis C and any pre-chosen part of the right front end roller 261. Any pre-chosen part of the right front end roller 261 is, for example, a part of right front end roller 261 that is, in plan view, at the rear end and right end of the right front end roller 261. Similarly, the right rear straight line LB may be a straight line that, in plan view, passes through the slewing center axis C and any pre-chosen part of the right rear end roller 262, the left front straight line LC may be, for example, a straight line that, in plan view, passes through the slewing center axis C and any pre-chosen part of the left front end roller 261, and the left rear straight line LD may be a straight line that, in plan view, passes through the slewing center axis C and any pre-chosen part of the left rear end roller 262.

### (C) Crane Specifications

The crane according to the above embodiments shown in FIG. 1 includes neither a jib nor a strut, but the specification of the crane is not limited to the specifications shown in FIG. 1. The crane according to the present disclosure may be a luffing crane including a jib, a front strut, and a rear strut, or may be a crane of a fixed jib type that includes a jib and one strut. The crane according to the present disclosure may be a crane (e.g., a large crane) equipped with a mast instead of a gantry.

### (D) Load Transmission

In the crane according to the embodiments shown in FIGS. 4 and 5, the car body 10 has the load transmission surfaces 3F, 3B, 3R, 3L, 3FR, 3BR, 3FL, and 3BL, the front axle 11 has the load receiving surfaces 4F, 4R, 4L, 4FR, and 4FL, and the rear axle 12 has the load receiving surfaces 5B, 5R, 5L, 5BR, and 5BL. The load transmission structure is, however, not limited to this form. For example, the load transmission surfaces 3F, 3B, 3R, and 3L, the load receiving surfaces 4F, 4R, and 4L, and the load receiving surfaces 5B, 5R, and 5L may be dispensed with. In this modification, the car body 10 has the load transmission surfaces 3FR, 3BR, 3FL, and 3BL facing diagonally, the front axle 11 has the load receiving surfaces 4FR and 4FL facing diagonally, and the rear axle 12 has the load receiving surfaces 5BR and 5BL facing diagonally. In the same manner as in the embodiment shown in FIGS. 4 and 5, by inserting a plurality of pins P into the corresponding pin insertion holes H3 and pin insertion holes H4, respectively, the front axle 11 and the rear axle 12 are connected to the car body 10.

### (E) Translifter

In the first embodiment shown in FIG. 3, two translifters TL are attached to the left and right of the car body 10, respectively. However, for example, a plurality of translifters (e.g., two translifters) may also be attached to the front axle 11, for example, at intervals in the left-to-right direction and a plurality of translifters (e.g., two transformer lifters) may also be attached to the rear axle 12, for example, at intervals in the left-to-right direction. This further improves the workability of work of connecting the front axle 11 and the rear axle 12 to the car body 10 and work of detaching the front axle 11 and the rear axle 12 from the car body 10. This description applies also to the second embodiment shown in FIG. 14. Specifically, two translifters may be attached to the front part of the car body 10 shown in FIG. 14 and to the rear part of the same at intervals in the left-to-right direction. Further, a plurality of translifters (e.g., two translifters) may be attached to the right coupling member 14 shown in FIG. 14 at intervals in the front-to-rear direction, and a plurality of translifters (e.g., two translifters) may be attached to the left coupling member 15 shown in FIG. 14 at intervals in the front-to-rear direction. This further improves the workability of work of connecting the right coupling member 14 and the left coupling member 15 to the car body 10 and work of detaching the right coupling member 14 and the left coupling member 15 from the car body 10.

As described above, according to the first invention of the present disclosure, a lower travelling body of a mobile crane, the lower travelling body being capable of reducing a warp that develops in a crawler frame when a cargo-to-be-lifted is hung on an upper slewing body on the front side or the rear side relative to the lower travelling body, is provided.

A lower travelling body of a mobile crane according to a first invention of the present disclosure includes: a car body that supports an upper slewing body of the mobile crane in such a way as to allow the upper slewing body to rotate around a slewing center axis; a right crawler frame extending in a front-to-rear direction on the right side relative to the slewing center axis; a left crawler frame extending in the front-to-rear direction on the left side relative to the slewing center axis; a coupling portion that couples the car body to the right crawler frame and to the left crawler frame, the coupling portion including at least one coupling member; a pair of right wheels supported rotatably on a front end part and a rear end part of the right crawler frame, respectively; a pair of left wheels supported rotatably on a front end part and a rear end part of the left crawler frame, respectively, a plurality of right rollers spaced in the front-to-rear direction between the pair of right wheels and rotatably supported on a lower part of the right crawler frame, the plurality of right rollers including a right front end roller located at the head of the right rollers and a right rear end roller located at the tail of the right rollers; and a plurality left rollers spaced in the front-to-rear direction between the pair of left wheels and rotatably supported on a lower part of the left crawler frame, the plurality of left rollers including a left front end roller located at the head of the left rollers and a left rear end roller located at the tail of the left rollers. The coupling portion includes a front load receiving surface and a rear load receiving surface that are counter to the car body, a right front load transmission surface and a right rear load transmission surface that are counter to the right crawler frame, and a left front load transmission surface and a left rear load transmission surface that are counter to the left crawler frame. The front load receiving surface is a surface configured to receive a front load from the car body, the front load being a load that the car body receives from the upper slewing body when a cargo-to-be-lifted is hung on the upper slewing body on the front side relative to the lower travelling body, the right front load transmission surface is a surface configured to transmit the front load to the right crawler frame, and the left front load transmission surface is a surface configured to transmit the front load to the left crawler frame. The rear load receiving surface is a surface configured to receive a rear load from the car body, the rear load being a load that the car body receives from the upper slewing body when the cargo-to-be-lifted is hung on the upper slewing body on a rear side relative to the lower travelling body, the right rear load transmission surface is a surface configured to transmit the rear load to the right crawler frame, and the left rear load transmission surface is a surface configured to transmit the rear load to the left crawler frame. The coupling portion is configured such that a right front straight line, which is a straight line passing through any point included in the front load receiving surface and through any point included in the right front load transmission surface, passes through, in plan view, the right front end roller or a point on the front side relative to the right front end roller, that a left front straight line, which is a straight line passing through any point included in the front load receiving surface and through any point included in the left front load transmission surface, passes through, in plan view, the left front end roller or a point on the front side relative to the left front end roller, that a right rear straight line, which is a straight line passing through any point included in the rear load receiving surface and through any point included in the right rear load transmission surface, passes through, in plan view, the right rear end roller or a point on the rear side relative to the right rear end roller, and that a left rear straight line, which is a straight line passing through any point included in the rear load receiving surface and through any point included in the left rear load transmission surface, passes through, in plan view, the left rear end roller or a point on the rear side relative to the left rear end roller.

The coupling portion of the lower travelling body is of a shape in which the right front straight line, the left front straight line, the right rear straight line, and the left rear straight line have the above positional relationship with the right front end roller, the left front end roller, the right rear end roller, and the left rear end roller. Because of this shape, at each of the left and right crawler frames, a distance in the front-to-rear direction between the front end part of the crawler frame and a part to which the front load is transmitted via the coupling portion can be made smaller than the distance in conventional cases, and at each of the left and right crawler frames, a distance in the front-to-rear direction between the rear end part of the crawler frame and a part to which the rear load is transmitted via the coupling portion can be made smaller than the distance in conventional cases. This makes it possible to reduce a warp the left and right crawler frames develop when the cargo-to-be-lifted is hung on the upper slewing body on the front side or the rear side relative to the lower travelling body.

According to the first invention, the above positional relationship between the right front straight line and the right front end roller is defined as the positional relationship in plan view of the lower travelling body, that is, the positional relationship when the lower travelling body is viewed from directly above in the vertical direction (downward). The right front straight line and the right front end roller, therefore, do not always have to be at the same height in the vertical direction and may be shifted in height from each other in the vertical direction. In other words, the height of the right front straight line and the height of the right front end roller may be the same or may be different from each other. This applies also to the positional relationship between the left front straight line and the left front end roller, to the positional relationship between the right rear straight line and the right rear end roller, and to the positional relationship between the left rear straight line and the left rear end roller.

In a case where the car body receives a relatively large front load from the upper slewing body, the right front end roller and the left front end roller serve as approximate tipping fulcrums (front tipping fulcrums). It is therefore preferable in this case that the right front straight line be a straight line passing through the right front end roller in plan view, and that the left front straight line be a straight line passing through the left front end roller in plan view.

In this mode, the coupling portion can directly transmit the front load to the part of left and right crawler frames that correspond to the front tipping fulcrums. This makes it possible to more effectively reduce a warp that the left and right crawler frames develop because of the front load.

It is more preferable that, in plan view, the right front straight line be a straight line passing through the slewing center axis as well and that, in plan view, the left front straight line be a straight line passing through the slewing center axis as well.

In this mode, in plan view, any point on the front load receiving surface of the coupling portion and any point on the right front load transmission surface of the coupling portion can be located on the right front straight line passing through the slewing center axis and the right front end roller, and, in plan view, any point on the front load receiving surface of the coupling portion and any point on the left front load transmission surface of the coupling portion can be located on the left front straight line passing through the slewing center axis and the left front end roller. As a result, a path in which the front load is transmitted to the right crawler frame by the coupling portion can be brought closer to the direction of heading from the slewing center axis toward the right front end roller, and a path in which the front load is transmitted to the left crawler frame by the coupling portion can be brought closer to the direction of heading from the slewing center axis toward the left front end roller. The front load is thus transmitted efficiently to the part of left and right crawler frames that correspond to the front tipping fulcrums.

In a case where the car body receives a relatively large rear load from the upper slewing body, the right rear end roller and the left rear end roller serve as approximate tipping fulcrums (rear tipping fulcrums). It is therefore preferable in this case that the right rear straight line be a straight line passing through the right rear end roller in plan view, and that the left rear straight line be a straight line passing through the left rear end roller in plan view.

In this mode, the coupling portion can directly transmit the rear load to the part of left and right crawler frames that correspond to the rear tipping fulcrums. This makes it possible to more effectively reduce a warp that the left and right crawler frames develop because of the rear load.

It is more preferable that, in plan view, the right rear straight line be a straight line passing through the slewing center axis as well and that, in plan view, the left rear straight line be a straight line passing through the slewing center axis as well.

In this mode, in plan view, any point on the rear load receiving surface of the coupling portion and any point on the right rear load transmission surface of the coupling portion can be located on the right rear straight line passing through the slewing center axis and the right rear end roller, and, in plan view, any point on the rear load receiving surface of the coupling portion and any point on the left rear load transmission surface of the coupling portion can be located on the left rear straight line passing through the slewing center axis and the left rear end roller. As a result, a path in which the rear load is transmitted to the right crawler frame by the coupling portion can be brought closer to the direction of heading from the slewing center axis toward the right rear end roller, and a path in which the rear load is transmitted to the left crawler frame by the coupling portion can be brought closer to the direction of heading from the slewing center axis toward the left rear end roller. The rear load is thus transmitted efficiently to the part of left and right crawler frames that correspond to the rear tipping fulcrums.

In the lower travelling body of the mobile crane according to the first invention, it is preferable that the coupling portion have a right front continuous part that, in plan view, extends continuously from the front load receiving surface to the right front load transmission surface along the right front straight line, and a left front continuous part that, in plan view, extends continuously from the front load receiving surface to the left front load transmission surface along the left front straight line.

In this mode, the right front continuous part extends continuously without interruption, in plan view, from the front load receiving surface to the right front load transmission surface, and the left front continuous part extends continuously without interruption, in plan view, from the front load receiving surface to the left front load transmission surface. The front load received by the front load receiving surface is thus efficiently transmitted continuously to the right front load transmission surface and to the left front load transmission surface along the right front continuous part and the left front continuous part, and then is transmitted from these load transmission surfaces to the left and right crawler frames.

In the lower travelling body of the mobile crane according to the first invention, it is preferable that the coupling portion have a right rear continuous part that, in plan view, extends continuously from the rear load receiving surface to the right rear load transmission surface along the right rear straight line, and a left rear continuous part that, in plan view, extends continuously from the rear load receiving surface to the left rear load transmission surface along the left rear straight line.

In this mode, the right rear continuous part extends continuously without interruption, in plan view, from the rear load receiving surface to the right rear load transmission surface, and the left rear continuous part extends continuously without interruption, in plan view, from the rear load receiving surface to the left rear load transmission surface. The rear load received by the rear load receiving surface is thus efficiently transmitted continuously to the right rear load transmission surface and to the left rear load transmission surface along the right rear continuous part and the left rear continuous part, and then is transmitted from these load transmission surfaces to the left and right crawler frames.

In the lower travelling body of the mobile crane according to the first invention, it is preferable that the coupling portion be connected such that it can be attached to or detached from at least one of the car body, the right crawler frame, and the left crawler frame.

In this mode, even when the mobile crane is relatively large in size, the width of each component to be transported is easily kept within a transportation limit width.

In the lower travelling body of the mobile crane according to the first invention, the at least one coupling member may include a front axle that couples the right crawler frame to the left crawler frame and that supports the car body, on the front side relative to the slewing center axis, and a rear axle that couples the right crawler frame to the left crawler frame and that supports the car body, on the rear side relative to the slewing center axis.

In this case, it is preferable that the front axle include a front middle part connected to a part of car body that is located on the front side relative to the slewing center axis, a right front part having the right front load transmission surface, the right front part extending diagonally frontward to the right from the front middle part and connected to the right crawler frame, and a left front part having the left front load transmission surface, the left front part extending diagonally frontward to the left from the front middle part and connected to the left crawler frame, and that the front axle have a shape in which a front surface of the front middle part is located on the rear side relative to a front surface of the right front part and to a front surface of the left front part.

In this mode, the right front part and the left front part are extended from the front middle part diagonally forward to the right and diagonally forward to the left, respectively. This locates the right front load transmission surface and the left front load transmission surface further frontward than in conventional cases, thereby allowing a reduction in a warp of the left and right crawler frames that is caused by the front load, and at the same, locates the front surface of the front middle part on the rear side relative to the front surface of the right front part and to the front surface of the left front part, thereby allowing suppression of an increase in the weight of the front axle.

It is more preferable that the rear axle include a rear middle part connected to a part of car body that is located on the rear side relative to the slewing center axis, a right rear part having the right rear load transmission surface, the right rear part extending diagonally rearward to the right from the rear middle part and connected to the right crawler frame, and a left rear part having the left rear load transmission surface, the left rear part extending diagonally rearward to the left from the rear middle part and connected to the left crawler frame, and that the rear axle have a shape in which a rear surface of the rear middle part is located on the front side relative to a rear surface of the right rear part and to a rear surface of the left rear part.

In this mode, the right rear part and the left rear part are extended from the rear middle part diagonally rearward to the right and diagonally rearward to the left, respectively. This locates the right rear load transmission surface and the left rear load transmission surface further rearward than in conventional cases, thereby allowing a reduction in a warp of the left and right crawler frames that is caused by the rear load, and at the same, locates the rear surface of the rear middle part on the front side relative to the rear surface of the right rear part and to the rear surface of the left rear part, thereby allowing suppression of an increase in the weight of the rear axle.

In the lower travelling body of the mobile crane according to the first invention, it is preferable that the front load receiving surface include a surface located on the front side relative to the car body and counter to the car body in the front-to-rear direction.

In this mode, when the car body receives a front load from the upper slewing body, the front load is transmitted to the front load receiving surface of the front axle in the front-to-rear direction.

In the lower travelling body of the mobile crane according to the first invention, it is preferable that the front load receiving surface include a surface located on the right side relative to the car body and counter to the car body in the left-to-right direction, and a surface located on the left side relative to the car body and counter to the car body in the left-to-right direction.

In this mode, when the car body receives a front load from the upper slewing body, the front load is transmitted to the front load receiving surface of the front axle in the left-to-right direction.

In the lower travelling body of the mobile crane according to the first invention, it is preferable that the rear load receiving surface include a surface located on the rear side relative to the car body and counter to the car body in the front-to-rear direction.

In this mode, when the car body receives a rear load from the upper slewing body, the rear load is transmitted to the rear load receiving surface of the rear axle in the front-to-rear direction.

In the lower travelling body of the mobile crane according to the first invention, it is preferable that the rear load receiving surface include a surface located on the right side relative to the car body and counter to the car body in the left-to-right direction, and a surface located on the left side relative to the car body and counter to the car body in the left-to-right direction.

In this mode, when the car body receives a rear load from the upper slewing body, the rear load is transmitted to the rear load receiving surface of the rear axle in the left-to-right direction.

In the lower travelling body of the mobile crane according to the first invention, the at least one coupling member may include a right coupling member that couples the car body to the right crawler frame on the right side relative to the slewing center axis and a left coupling member that couples the car body to the left crawler frame on the left side relative to the slewing center axis; the front load receiving surface may include a right front load receiving surface located on the right side relative to the slewing center axis and a left front load receiving surface located on the left side relative to the slewing center axis; the rear load receiving surface may include a right rear load receiving surface located on the right side relative to the slewing center axis and a left rear load receiving surface located on the left side relative to the slewing center axis; the right coupling member may include the right front load receiving surface, the right rear load receiving surface, the right front load transmission surface, and the right rear load transmission surface; and the left coupling member may include the left front load receiving surface, the left rear load receiving surface, the left front load transmission surface, and the left rear load transmission surface.

### [Embodiments of Second Invention]

Hereinafter, a lower travelling body of a mobile crane according to embodiments of a second invention and a mobile crane including the lower travelling body will be described with reference to FIGS. 18 to 30. In the drawings, "front", "rear", "right", "left", "up", and "down" are indicated. These letters refer to directions defined with reference to a direction in which the lower travelling body moves forward and backward. In other words, the front-to-rear direction of the lower travelling body is a horizontal direction in which crawler frames, which will be described later, extend, and the left-to-right direction of the lower travelling body is a horizontal direction perpendicular to the front-to-rear direction. The vertical direction of the lower travelling body is a direction parallel to a slewing center axis of an upper slewing body.

### [Overall Structure of Mobile Crane]

As shown in FIG. 18, a crane 100 includes a lower travelling body 101 capable of self-propelling, and an upper slewing body 102 mounted on the lower travelling body 101 in such a way as to be capable of turning around a vertical axis. The upper slewing body 102 includes a slewing frame 103, a raising/lowering member supported by the slewing frame 103, a mast 120, and a counterweight 113. The raising/lowering member includes a boom 114, a jib 117, a lower strut 121, and an upper strut 122.

The boom 114 is attached to the upper slewing body 102 such that the boom 114 is rotatable and can be attached to and detached from the upper slewing body 102. The boom 114 has a lattice structure, as shown in FIG. 18, but is not limited to a lattice type boom. The jib 117 is attached to a front end part of the boom 114 such that the jib 117 is rotatable and can be attached to and detached from the front end part. The jib 117 has a lattice structure, as shown in FIG. 18, but is not limited to a lattice type jib.

The lower strut 121 and the upper strut 122 are provided to allow the jib 117 to rotate. The upper strut 122 is attached rotatably to the front end part of the boom 114. The lower strut 121, which is located behind or below the upper strut 122, is attached rotatably to the front end part of the boom 114. Each of the lower strut 121 and the upper strut 122 can be attached to and detached from the front end part of the boom 114. The upper strut 122 is connected to the jib 117 so as to rotate in interlocked movement with the jib 117. Specifically, a pair of left and right jib guy lines 128 are stretched to connect a front end part of the upper strut 122 to a front end part of the jib 117. Rotating the upper strut 122, therefore, causes the jib 117 to rotate.

The mast 120 has a base end 120A and a pivotal end 120B. The base end 120A of the mast 120 is rotatably connected to the upper slewing body 102. The pivotal axis of the mast 120 is parallel with the pivotal axis of the boom 114 and is located right behind of the pivotal axis of the boom 114. This means that the mast 120 can rotate in the same direction in which the boom 114 rises and falls, i.e., rotates. Meanwhile, the pivotal end 120B of the mast 120 is connected to the front end part of the boom 114 via a pair of left and right boom guy lines 124. This connection structure couples the rotation of the mast 120 to the rotation of the boom 114.

The crane 100 is equipped with various winches. Specifically, the crane 100 includes a boom raising/lowering winch 130 that raises/lowers the boom 114, a jib raising/lowering winch 132 that rotates the jib 117 in a raising/lowering direction, and a main hoisting winch 134 and an auxiliary hoisting winch 136 that winch the cargo-to-be-lifted up and down.

The boom raising/lowering winch 130 winds up and pays out the boom raising/lowering rope 138. Winding up and paying out the boom raising/lowering rope 138 causes the mast 120 to rotate, thus causing the boom 114 interlocked with the mast 120 to rotate in the raising/lowering direction. The jib raising/lowering winch 132 winds up and pays out a jib raising/lowering rope 144. Winding up and paying out the jib raising/lowering rope 144 causes the upper strut 122 to rotate, thus causing the jib 117 interlocked with the upper strut 122 to rotate in the raising/lowering direction. The main hoisting winch 134 winches the cargo-to-be-lifted up and down by winding up and paying out a main hoisting rope 150. Winding up and paying out the main hoisting rope 150 moves a main hook 157 up and down. The auxiliary hoisting winch 136 winches the cargo-to-be-lifted up and down by winding up and paying out an auxiliary hoisting rope 160. Winding up and paying out the auxiliary hoisting rope 160 moves up and down an auxiliary hook for the cargo (not illustrated) that is connected to an end of the auxiliary hoisting rope 160.

### [Structure of Lower Travelling Body According to First Embodiment]

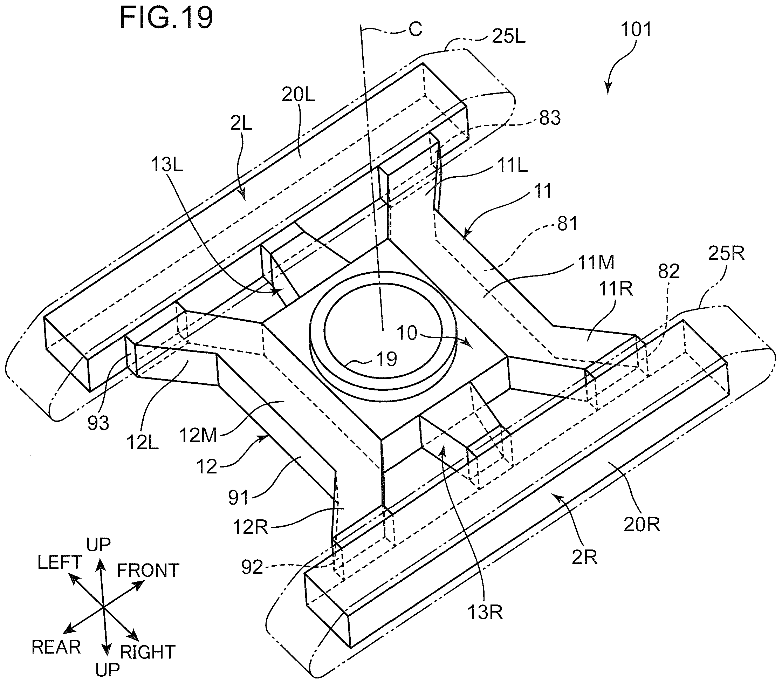

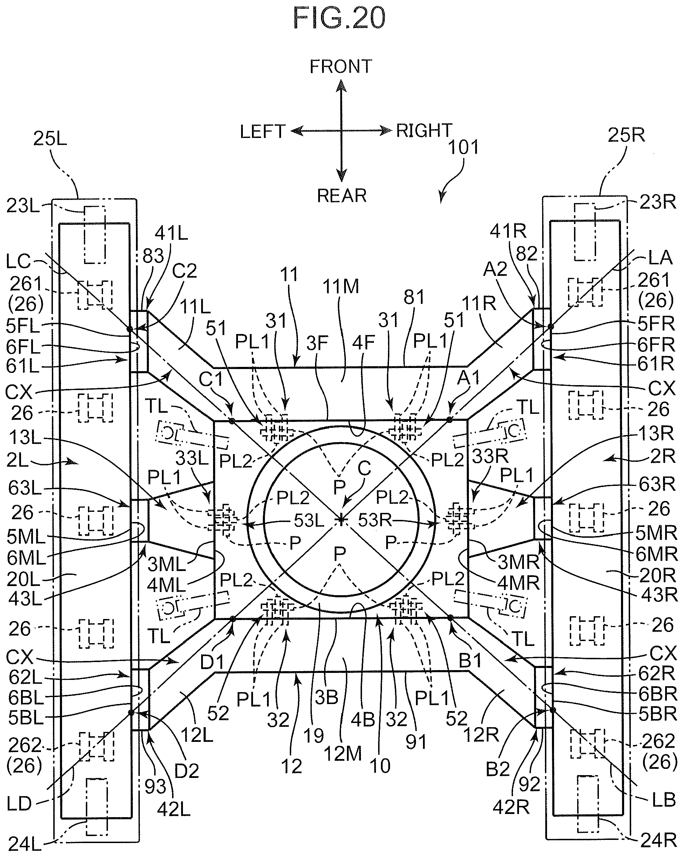

FIG. 19 is a perspective view of a lower travelling body 101 according to a first embodiment, and FIG. 20 is a plan view of the same. In this embodiment, as shown in FIGS. 18 and 20, the front-to-rear direction of the lower travelling body 101 is the longitudinal direction of crawler frames 2R and 2L, which will be described later, and a frontward direction along the front-to-rear direction is a direction of heading from a wheel 24R (drive tumbler) toward a wheel 23R (idler) in each crawler frame while a rearward direction along the same is the direction opposite to the direction of heading from the wheel 24R toward the wheel 23R. The front-to-rear direction of the lower travelling body 101, however, may be defined as the direction opposite to the front-to-rear direction defined in FIGS. 19 and 20. In FIG. 19, the wheels 23R and 24R are not illustrated.

The lower travelling body 101 includes a lower frame, a right travelling device, and a left travelling device. The lower frame is a frame for supporting the upper slewing body 102 in such a way as to allow it to turn. The right travelling device and the left travelling device each travel on the ground while supporting the lower frame.

The lower frame includes a car body 10, a slewing bearing 19 supported on the top of the car body 10, and a coupling portion. The upper slewing body 102 is mounted on the slewing bearing 19.

The car body 10 supports the upper slewing body 102 of the mobile crane 100 in such a way as to allow the upper slewing body 102 to turn about a slewing center axis C via the slewing bearing 19. The slewing center axis C is substantially parallel to the vertical direction when the ground is level. In this embodiment, the car body 10 has a substantially rectangular parallelepiped shape, but the shape of the car body 10 is not limited to the substantially rectangular parallelepiped shape. Details of the coupling portion will be described later.

The right travelling device includes a right crawler frame 2R, a pair of right wheels 23R and 24R, a right crawler belt 25R, a plurality of right rollers 26, and a travelling drive unit 29 (see FIG. 18). Likewise, the left travelling device includes a left crawler frame 2L, a pair of left wheels 23L and 24L, a left crawler belt 25L, a plurality of left rollers 26, and a travelling drive unit 29.

The right crawler frame 2R includes a right frame body 20R, and the left crawler frame 2L includes a left frame body 20L. The right frame body 20R has a shape extending in the front-to-rear direction on the right side relative to the slewing center axis C. The left frame body 20L has a shape extending in the front-to-rear direction on the left side relative to the slewing center axis C.

The pair of right wheels 23R and 24R are rotatably supported on a front end part and a rear end part of the right frame body 20 R, respectively. In this embodiment, the right wheel 23R located on the front side is configured by an idler, and the right wheel 24R located on the rear side is configured by a drive tumbler. The drive tumbler is connected to the travelling drive unit 29 (see FIG. 18) that is supported on the rear end part of the right frame body 20R at a position adjacent to the drive tumbler. The travelling drive unit 29 includes, for example, a travelling motor and a travelling speed reducer. The travelling drive unit 29 is not illustrated in the drawings other than FIG. 18.

The right crawler belt 25R is a belt that is annularly put around the pair of right wheels 23R and 24R to be capable of circling movement. In other words, the right crawler belt 25R is an endless belt supported by the pair of right wheels 23R and 24R. The right crawler belt 25R is configured by numbers of crawler shoes connected to each other.

On the outer periphery of the right wheel 24R configured by the drive tumbler, a plurality of projections are formed along the circumferential direction such that the projections can be engaged with the inner periphery of the right crawler belt 25R. The right wheel 24R is supplied with a driving force from the travelling drive unit 29, and this driving force is transmitted to the right crawler belt 25R. As a result, the right crawler belt 25R makes circling movement. The right wheel 23R configured by the idler rotates by following the movement of the right crawler belt 25R.

The plurality of right rollers 26 are each supported rotatably on a lower part of the right frame body 20R of the right crawler frame 2R. The plurality of right rollers 26 are spaced in the front-to-rear direction between the pair of right wheels 23R and 24R. The plurality of right rollers 26 presses the right crawler belt 25R against the ground and guides the circling movement of the right crawler belt 25R.

Hereinafter, the right roller 26 located at the head of the plurality of right rollers 26 (in this embodiment, the right roller 26 closest to the wheel 23R) will be referred to as a right front end roller 261, and the right roller 26 located at the tail of the plurality of right rollers 26 (in this embodiment, the right roller 26 closest to the wheel 24R) will be referred to as a right rear end roller 262.

The structure of the pair of left wheels 23L and 24L, the left crawler belt 25L, and the plurality of left rollers 26 in the left travelling device is the same as the above-described structure of the pair of right wheels 23R and 24R, the right crawler belt 25R, and the plurality of right rollers 26 in the right travelling device, except the fact that both structures are symmetrical with each other in the left-to-right direction, and is therefore not described in detail. Hereinafter, the left roller 26 located at the head of the plurality of left rollers 26 (in this embodiment, the left roller 26 closest to a wheel 23L) will be referred to as a left front end roller 261, and the left roller 26 located at the tail of the plurality of left rollers 26 (in this embodiment, the left roller 26 closest to a wheel 24L) will be referred to as a left rear end roller 262.

### [Structure of Coupling Portion]

The coupling portion couples the car body 10 to the right crawler frame 2R and to the left crawler frame 2L and supports the car body 10. The coupling portion is a member that supports the car body 10 and that can transmit a load including the weight of the upper slewing body 102 having the raising/lowering member and the weight of the cargo-to-be-lifted, from the car body 10 to the left and right crawler frames 2R and 2L. This coupling portion, therefore, does not include, for example, a crawler moving cylinder for extending and contracting a pair of crawler units in the left-to-right direction in a crawler crane described in Patent Literature 1.

In the lower travelling body 101 of the first embodiment shown in FIGS. 19 and 20, the coupling portion is formed of a plurality of coupling members. The plurality of coupling members include a front axle 11, a rear axle 12, a right middle axle 13R, and a left middle axle 13L.

The front axle 11 couples the right crawler frame 2R to the left crawler frame 2L on the front side relative to the slewing center axis C, and is connected to the car body 10. The front axle 11 includes a front middle part 11M connected to a part of car body 10 that is located on the front side relative to the slewing center axis C, a right front part 11R extending diagonally frontward to the right from the front middle part 11M and connected to the right crawler frame 2R, and a left front part 11L extending diagonally frontward to the left from the front middle part 11M and connected to the left crawler frame 2L. The front axle 11 has a shape in which a front surface 81 of the front middle part 11M is located on the rear side relative to a front surface 82 of the right front part 11R and to a front surface 83 of the left front part 11L.

The rear axle 12 couples the right crawler frame 2R to the left crawler frame 2L on the rear side relative to the slewing center axis C, and is connected to the car body 10. The rear axle 12 includes a rear middle part 12M connected to a part of car body 10 that is located on the rear side relative to the slewing center axis C, a right rear part 12R extending diagonally rearward to the right from the rear middle part 12M and connected to the right crawler frame 2R, and a left rear part 12L extending diagonally rearward to the left from the rear middle part 12M and connected to the left crawler frame 2L_{∘} The rear axle 12 has a shape in which a rear surface 91 of the rear middle part 12M is located on the front side relative to a rear surface 92 of the right rear part 12R and to a rear surface 93 of the left rear part 12L.

The right middle axle 13R couples the car body 10 to the right crawler frame 2R on the rear side relative to the front axle 11 and on the front side relative to the rear axle 12. The front axle 11, the right middle axle 13R, and the rear axle 12 are arranged in descending order at intervals in the front-to-rear direction. The right middle axle 13R has a shape extending rightward from a part of car body 10 that is located on the right side relative to the slewing center axis C, to the right crawler frame 2R.

The left middle axle 13L couples the car body 10 to the left crawler frame 2L on the rear side relative to the front axle 11 and on the front side relative to the rear axle 12. The front axle 11, the left middle axle 13L, and the rear axle 12 are arranged in descending order at intervals in the front-to-rear direction. The left middle axle 13L has a shape extending leftward from a part of car body 10 that is located on the left side relative to the slewing center axis C, to the left crawler frame 2L.

### [Connection Structure of Coupling Portion and Car Body]

A connection structure of the coupling portion and the car body 10 will be described.

The coupling portion has a plurality of connection portions connected to the car body 10. As shown in FIG. 20, the plurality of connection portions include two front connection portions 31, two rear connection portions 32, a right middle connection portion 33R, and a left middle connection portion 33L. Specifically, the structure of the rear axle 12 is described as follows.

The front axle 11 of the coupling portion has the two front connection portions 31. These front connection portions 31 are disposed on the front middle part 11M of the front axle 11. The car body 10 has two connected portions 51 at positions corresponding respectively to the two front connection portions 31. These connected portions 51 are disposed on a part of car body 10 that is on the front side relative to the slewing center axis C. The two front connection portions 31 of the front axle 11 are connected detachably to the two connected portions 51 of the car body 10, respectively.

The rear axle 12 of the coupling portion has the two rear connection portions 32. These rear connection portions 32 are disposed on the rear middle part 12M of the rear axle 12. The car body 10 has two connected portions 52 at positions corresponding respectively to the two rear connection portions 32. These connected portions 52 are disposed on a part of car body 10 that is on the rear side relative to the slewing center axis C. The two rear connection portions 32 of the rear axle 12 are connected detachably to the two connected portions 52 of the car body 10, respectively.

The right middle axle 13R of the coupling portion has the right middle connection portion 33R. The car body 10 has a connected portion 53R at a position corresponding to the right middle connection portion 33R. The connected portion 53R is disposed on the part of car body 10 that is on the right side relative to the slewing center axis C. The right middle connection portion 33R of the right middle axle 13R is connected to the connected portion 53R of the car body 10.

The left middle axle 13L of the coupling portion has the left middle connection portion 33L. The car body 10 has a connected portion 53L at a position corresponding to the left middle connection portion 33L. The connected portion 53L is disposed on the part of car body 10 that is on the left side relative to the slewing center axis C. The left middle connection portion 33L of the left middle axle 13L is connected to the connected portion 53L of the car body 10. In this embodiment shown in FIG. 20, the right middle axle 13R and the left middle axle 13L are connected to the car body 10 such that they cannot be detached from the car body 10. This is because that the right middle axle 13R and the left middle axle 13L are relatively small and light and therefore connecting the right middle axle 13R and the left middle axle 13L to the car body 10 as undetachable integral part thereof does not pose any specific problem from the viewpoint of weight limitations and dimensional limitations to clear in transportation of the right middle axle 13R and the left middle axle 13L. Besides, since attaching or detaching the right middle axle 13R and the left middle axle 13L to or from the car body 10 is unnecessary during assembling or disassembling of components to be transported, an increase in manhour for assembling/disassembling work can be suppressed.

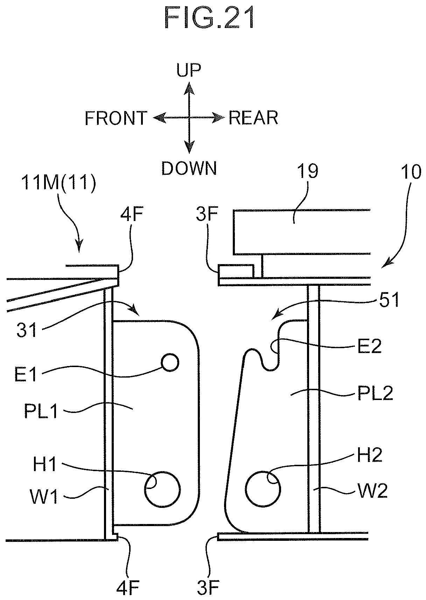

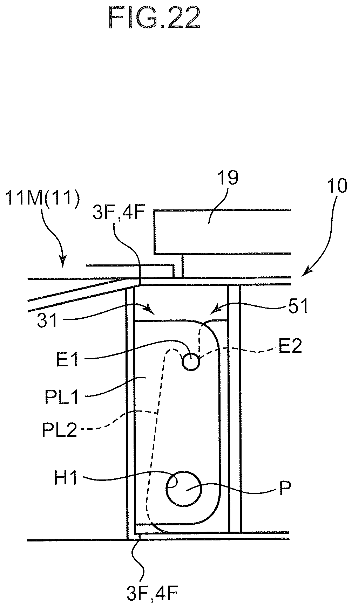

FIGS. 21 and 22 are side views of a specific example of a connection structure of the car body 10 and the front axle 11. In this embodiment, each of the two front connection portions 31 and each of the two connected portions 51 have the same connection structure shown in FIGS. 21 and 22.

As shown in FIGS. 20 to 22, each of the two front connection portions 31 has a pair of projection pieces PL1 projecting rearward from a wall W1 of the front middle part 11M of the front axle 11, and a rod-like engaging portion E1 that is disposed between the projection pieces PL1 to bridge them and that is supported by the projection pieces PL1. The pair of projection pieces PL1 each have a pin insertion hole H1. The engaging portion E1 is disposed above the pin insertion hole H1.

Each of the two connected portions 51 has a pair of projection pieces PL2 projecting frontward from a wall W2 of the car body 10. The projection piece PL2 has a pin insertion hole H2 corresponding in position to the pin insertion hole H1, and an engaged portion E2 corresponding in position to the engaging portion E1. The engaged portion E2 has a concave shape with an open top.

The rod-like engaging portion E1 is configured such that the rod-like engaging portion E1 can be placed in the engaged portion E2 through the opening of the engaged portion E2 and be engaged with the engaged portion E2. As shown in FIG. 22, as the engaging portion E1 of the front axle 11 is engaged with the engaged portion E2 of the car body 10, a pin P is inserted into the pin insertion holes H1 and H2. This connects the front connection portion 31 of the front axle 11 to the connected portion 51 of the car body 10. When the front connection portion 31 of the front axle 11 is removed from the connected portion 51 of the car body 10 for transportation of the mobile crane 100, an operation reverse in procedure to the above operation is carried out.

A connection structure of the rear connection portion 32 of the rear axle 12 and the connected portion 52 of the car body 10, a connection structure of the right middle connection portion 33R of the right middle axle 13R and the connected portion 53R of the car body 10, and a connection structure of the left middle connection portion 33L of the left middle axle 13L and the connected portion 53L of the car body 10 are each similar to the connection structure shown in FIGS. 21 and 22, and are therefore not described.

### [Connection Structure of Coupling Portion and Car Body]

A connection structure of the coupling portion and the left and right crawler frames 2R and 2L will then be described.

The coupling portion includes three connection portions that are connected to the right crawler frame 2R at intervals in the front-to-rear direction, and these connection portions include a right front connection portion 41R, a right rear connection portion 42R, and a right middle connection portion 43R. The coupling portion further includes three connection portions that are connected to the left crawler frame 2L at intervals in the front-to-rear direction, and these connection portions include a left front connection portion 41L, a left rear connection portion 42L, and a left middle connection portion 43L.

The front axle 11 of the coupling portion includes the right front connection portion 41R and the left front connection portion 41L. The right crawler frame 2R includes a right front connected portion 61R located on the front side relative to the slewing center axis C, and the left crawler frame 2L includes a left front connected portion 61L located on the front side relative to the slewing center axis C. The right front connection portion 41R of the front axle 11 is detachably connected to the right front connected portion 61R of the right crawler frame 2R. The left front connection portion 41L of the front axle 11 is detachably connected to the left front connected portion 61L of the left crawler frame 2L. The right front connection portion 41R, the left front connection portion 41L, the right front connected portion 61R, and the left front connected portion 61L are each located on the front side relative to a load transmission surface 3F on a front end of the car body 10, which load transmission surface 3F will be described later.

The rear axle 12 of the coupling portion includes the right rear connection portion 42R and the left rear connection portion 42 L. The right crawler frame 2R includes a right rear connected portion 62R located on the rear side relative to the slewing center axis C, and the left crawler frame 2L includes a left rear connected portion 62L located on the rear side relative to the slewing center axis C. The right rear connection portion 42R of the rear axle 12 is detachably connected to the right rear connected portion 62R of the right crawler frame 2R. The left rear connection portion 42L of the rear axle 12 is detachably connected to the left rear connected portion 62L of the left crawler frame 2L. The right rear connection portion 42R, the left rear connection portion 42L, the right rear connected portion 62R, and the left rear connected portion 62L are each located on the rear side relative to a load transmission surface 3B on a rear end of the car body 10, which load transmission surface 3B will be described later.

The right middle axle 13R of the coupling portion includes the right middle connection portion 43R. The right crawler frame 2R includes a right middle connected portion 63R disposed between the right front connected portion 61R and the right rear connected portion 62R in the front-to-rear direction. The right middle connection portion 43R of the right middle axle 13R is detachably connected to the right middle connected portion 63R of the right crawler frame 2R. The right middle connection portion 43R and the right middle connected portion 63R are each located between the front end and the rear end of the car body 10.

The left middle axle 13L of the coupling portion includes the left middle connection portion 43L. The left crawler frame 2L includes a left middle connected portion 63L disposed between the left front connected portion 61L and the left rear connected portion 62L in the front-to-rear direction. The left middle connection portion 43L of the left middle axle 13L is detachably connected to the left middle connected portion 63L of the left crawler frame 2L. The left middle connection portion 43L and the left middle connected portion 63L are each located between the front end and the rear end of the car body 10.

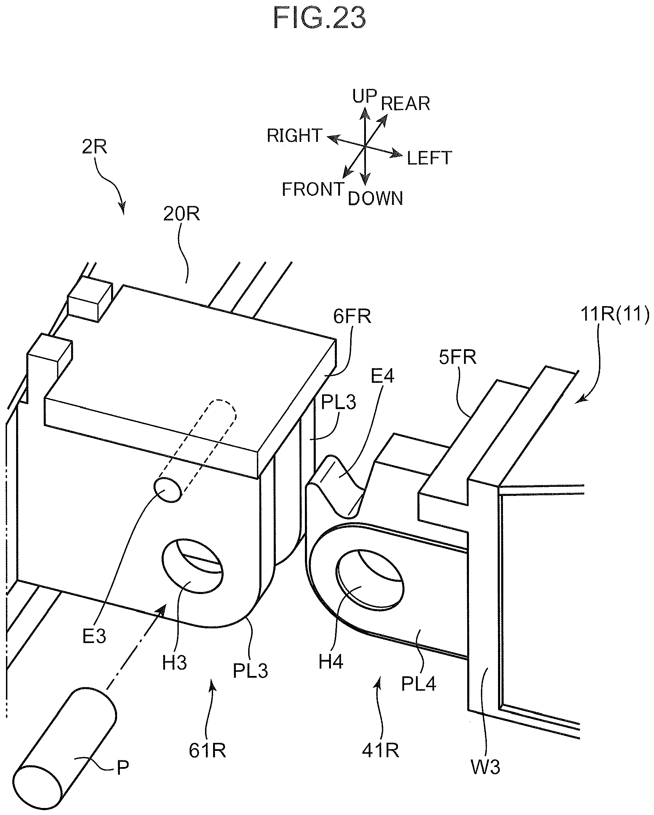

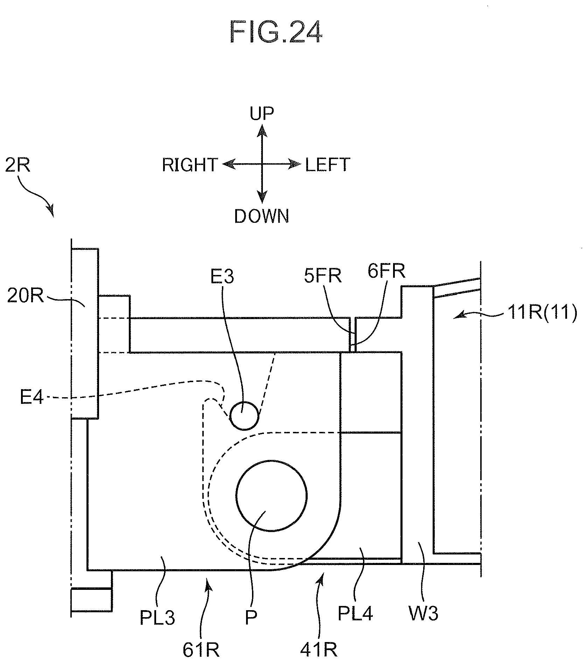

FIG. 23 is a perspective view of a connection structure of the front axle 11 and the right crawler frame 2R, and FIG. 24 is a front view of the same. The connection structure includes the right front connection portion 41R of the front axle 11, and the right front connected portion 61R of the right crawler frame 2R.

As shown in FIGS. 20, 23, and 24, the right front connected portion 61R includes a pair of projection pieces PL3 projecting leftward from the right frame body 20R of the right crawler frame 2R, and a rod-like engaging portion E3 that is disposed between the projection pieces PL3 to bridge them and that is supported by the projection pieces PL3. The pair of projection pieces PL3 each have a pin insertion hole H3. The engaging portion E3 is disposed above the pin insertion hole H3.

The right front connection portion 41R has a projection piece PL4 projecting rightward from a wall W3 of the right front part 11R of the front axle 11. The projection piece PL4 has a pin insertion hole H4 and an engaged portion E4. The engaged portion E4 has a concave shape with an open top.

The rod-like engaging portion E3 is configured such that the rod-like engaging portion E3 can be placed in the engaged portion E4 through the opening of the engaged portion E4 and be engaged with the engaged portion E4. As shown in FIG. 24, as the engaging portion E3 of the right crawler frame 2R is engaged with the engaged portion E4 of the front axle 11, a pin P is inserted into the pin insertion holes H3 and H4. This connects the right front connection portion 41R of the front axle 11 to the connected portion 61 of the right crawler frame 2R. When the right crawler frame 2R is removed from the front axle 11 for transportation of the mobile crane 100, an operation reverse in procedure to the above operation is carried out.

A connection structure of the left front connection portion 41L of the front axle 11 and the left front connected portion 61L of the left crawler frame 2L, a connection structure of the right rear connection portion 42R of the rear axle 12 and the right rear connected portion 62R of the right crawler frame 2R, a connection structure of the left rear connection portion 42L of the rear axle 12 and the left rear connected portion 62L of the left crawler frame 2L, a connection structure of the right middle connection portion 43R of the right middle axle 13R and the right middle connected portion 63R of the right crawler frame 2R, and a connection structure of the left middle connection portion 43L of the left middle axle 13L and the left middle connected portion 63L of the left crawler frame 2L are each similar to the connection structure shown in FIGS. 23 and 24, and are therefore not described.

In FIG. 20, four translifters TL indicated by two-dot chain lines TL are shown. It is preferable, as shown in FIG. 20, that the lower travelling body 101 be equipped with first to fourth translifters TL capable of holding the car body 10 lifted above the ground in assembling/disassembling work of the mobile crane 100. The first translifter TL can be set in a position in which, in the plan view of FIG. 20, the first translifter TL extends rightward from the car body 10 between the front axle 11 and the right middle axle 13R. The second translifter TL can be set in a position in which, in the plan view of FIG. 20, the second translifter TL extends rightward from the car body 10 between the rear axle 12 and the right middle axle 13R. The third translifter TL can be set in a position in which, in the plan view of FIG. 20, the third translifter TL extends leftward from the car body 10 between the front axle 11 and the left middle axle 13L. The fourth translifter TL can be set in a position in which, in the plan view of FIG. 20, the fourth translifter TL extends leftward from the car body 10 between the rear axle 12 and the left middle axle 13L.

In assembling work of the mobile crane 100, the car body 10 is held lifted above the ground by the first to fourth translifters TL. In this state, the front axle 11, the rear axle 12, the right middle axle 13R, and the left middle axle 13L are connected to the car body 10. Thereafter, the right crawler frame 2R is connected to the front axle 11, the rear axle 12, and the right middle axle 13R, while the left crawler frame 2L is connected to the front axle 11, the rear axle 12, and the left middle axle 13L. Disassembling work of the mobile crane 100 is carried out by the procedure reverse to the procedure of the above assembling work.

### [Load Transmission Structure]

A load transmission structure the lower travelling body 101 has will then be described in detail.

In the lower travelling body 101, during crane work, the front axle 11 can transmit the front load diagonally frontward to the right and diagonally frontward to the left, and the rear axle 12 can transmit the rear load diagonally rearward to the right and diagonally rearward to the left. This allows a further reduction of a warp that develops on a front part and a rear part of the left and right crawler frames 2R and 2L because of the front load and the rear load. The front load is a load that the car body 10 receives from the upper slewing body 102 when the cargo-to-be-lifted is hung on the hook device 109 of the upper slewing body 102 in such a way as to be located on the front side relative to the lower travelling body 101, and the rear load is a load that the car body 10 receives from the upper slewing body 102 when the cargo-to-be-lifted is hung on the hook device 109 of the upper slewing body 102 in such a way as to be located on the rear side relative to the lower travelling body 101. The front load that the front axle 11 transmits diagonally frontward to the right and diagonally frontward to the left is part of the entire load that the car body 10 receives from the upper slewing body 102 when the cargo-to-be-lifted is hung on the upper slewing body 102 on the front side relative to the lower travelling body 101. The rear load that the rear axle 12 transmits diagonally rearward to the right and diagonally rearward to the left is a part of the entire load that the car body 10 receives from the upper slewing body 102 when the cargo-to-be-lifted is hung on the upper slewing body 102 on the rear side relative to the lower travelling body 101. The front part of the right crawler frame 2R is a part of right crawler frame 2R that is on the front side relative to the right front connected portion 61R, and the rear part of the right crawler frame 2R is a part of right crawler frame 2R that is on the rear side relative to the right rear connected portion 62R. The front part of the left crawler frame 2L is a part of left crawler frame 2L that is on the front side relative to the left front connected portion 61L, and the rear part of the left crawler frame 2L is a part of left crawler frame 2L that is on the rear side relative to the left rear connected portion 62L.

As shown in FIGS. 19 to 22, the car body 10 includes a plurality of load transmission surfaces for transmitting a load received from the upper slewing body 102 to the front axle 11, the rear axle 12, the right middle axle 13R, and the left middle axle 13L, respectively. The plurality of load transmission surfaces include a load transmission surface 3F that is a surface facing the front side, a load transmission surface 3B that is a surface facing the rear side, a load transmission surface 3MR that is a surface facing the right side, and a load transmission surface 3ML that is a surface facing the left side.

The front axle 11 includes a front load receiving surface 4F for receiving the load from the car body 10, a right front load transmission surface 5FR for transmitting the load to the right crawler frame 2R, and a left front load transmission surface 5FL for transmitting the load to the left crawler frame 2L. In the specific example shown in FIGS. 21 and 22, the car body 10 includes two upper and lower load transmission surfaces 3F, and the front axle 11 includes two upper and lower front load receiving surfaces 4F corresponding in position to the two load transmission surfaces 3F. The load transmission structure, however, is not limited to this form. For example, the lower load transmission surface 3F and lower load receiving surface 4F shown in FIGS. 21 and 22 may be dispensed with, in which case the car body 10 has the upper load transmission surface 3F only, and the front axle 11 has the upper load receiving surface 4F only, which corresponds to the upper load transmission surface 3F. This structure, which is not illustrated and is not described in detail, either, applies also to the load transmission surface 3B of the car body 10 and to a rear load receiving surface 4B of the rear axle 12 that will be described next.

The rear axle 12 includes the rear load receiving surface 4B for receiving the load from the car body 10, a right rear load transmission surface 5BR for transmitting the load to the right crawler frame 2R, and a left rear load transmission surface 5BL for transmitting the load to the left crawler frame 2L.

The right middle axle 13R includes a right middle load receiving surface 4MR for receiving the load from the car body 10, and a right middle load transmission surface 5MR for transmitting the load to the right crawler frame 2R.

The left middle axle 13L includes a left middle load receiving surface 4ML for receiving the load from the car body 10, and a left middle load transmission surface 5ML for transmitting the load to the left crawler frame 2L.

The right crawler frame 2R includes a right front load receiving surface 6FR for receiving the load from the front axle 11, a right rear load receiving surface 6BR for receiving the load from the rear axle 12, and a right middle load receiving surface 6MR for receiving the load from the right middle axle 13R.

The left crawler frame 2L includes a left front load receiving surface 6FL for receiving the load from the front axle 11, a left rear load receiving surface 6BL for receiving the load from the rear axle 12, and a left middle load receiving surface 6ML for receiving the load from the left middle axle 13L.

The front load receiving surface 4F of the front axle 11 is located adjacent on the front side relative to the load transmission surface 3F of the car body 10 so as to receive the load from the car body 10. As shown in FIG. 20, in this embodiment, the front load receiving surface 4F is formed on the front middle part 11M of the front axle 11.

The rear load receiving surface 4B of the rear axle 12 is located adjacent on the rear side relative to the load transmission surface 3B of the car body 10 so as to receive the load from the car body 10. As shown in FIG. 20, in this embodiment, the rear load receiving surface 4B is formed on the rear middle part 12M of the rear axle 12.

The right middle load receiving surface 4MR of the right middle axle 13R is located adjacent on the right side relative to the load transmission surface 3MR of the car body 10 so as to receive the load from the car body 10.

The left middle load receiving surface 4ML of the left middle axle 13L is located adjacent on the left side relative to the load transmission surface 3ML of the car body 10 so as to receive the load from the car body 10.

Specifically, as shown in FIGS. 21 and 22, the front axle 11 may include a plurality of front load receiving surfaces 4F. The plurality of front load receiving surfaces 4F include a rear surface of front axle 11 that is above the front connection portion 31 and that faces the rear side, and a rear surface of front axle 11 that is below the front connection portion 31 and that faces the rear side. Similarly, the car body 10 may include a plurality of load transmission surfaces 3F. The plurality of load transmission surfaces 3F include a front surface of car body 10 that is above the connected portion 51 and that faces the front side, and a front surface of car body 10 that is below the connected portion 51 and that faces the front side. The specific structure of the load receiving surfaces 4B, 4MR, and 4ML other than the front load receiving surface 4F in the coupling portion and the specific structure of the load transmission surfaces 3B, 3MR, and 3ML other than the load transmission surface 3F in the car body 10 are each similar to the structure shown in FIGS. 21 and 22, except for differences in direction, and are therefore not described in detail. It should be noted, however, that the structure of each load receiving surface and load transmission surface is not limited to the structure shown in FIGS. 21 and 22 and that various structures allowing transmission of the load from the load transmission surface to the load receiving surface may be adopted.

The right front load transmission surface 5FR of the front axle 11 is located adjacent on the left side relative to the right front load receiving surface 6FR of the right crawler frame 2R so as to transmit the load to the right crawler frame 2R. As shown in FIG. 20, in this embodiment, the right front load transmission surface 5FR is formed on the right front part 11R of the front axle 11.

The left front load transmission surface 5FL of the front axle 11 is located adjacent on the right side relative to the left front load receiving surface 6FL of the left crawler frame 2L so as to transmit the load to the left crawler frame 2L. As shown in FIG. 20, in this embodiment, the left front load transmission surface 5FL is formed on the left front part 11L of the front axle 11.

The right rear load transmission surface 5BR of the rear axle 12 is located adjacent on the left side relative to the right rear load receiving surface 6BR of the right crawler frame 2R so as to transmit the load to the right crawler frame 2R. As shown in FIG. 20, in this embodiment, the right rear load transmission surface 5BR is formed on the right rear part 12R of the rear axle 12.

The left rear load transmission surface 5BL of the rear axle 12 is located adjacent on the right side relative to the left rear load receiving surface 6BL of the left crawler frame 2L so as to transmit the load to the left crawler frame 2L. As shown in FIG. 20, in this embodiment, the left rear load transmission surface 5BL is formed on the left rear part 12L of the rear axle 12.

The right middle load transmission surface 5MR of the right middle axle 13R is located adjacent on the left side relative to the right middle load receiving surface 6MR of the right crawler frame 2R so as to transmit the load to the right crawler frame 2R.

The left middle load transmission surface 5ML of the left middle axle 13L is located adjacent on the right side relative to the left middle load receiving surface 6ML of the left crawler frame 2L so as to transmit the load to the left crawler frame 2L.

As shown in FIGS. 23 and 24, the right front load transmission surface 5FR of the front axle 11 is configured by a right surface of front axle 11 that is above the right front connection portion 41R and that faces the right side. The right front load receiving surface 6FR of the right crawler frame 2R is configured by a left surface of right crawler frame 2R that is above the right front connected portion 61R and that faces the left side. The specific structure of the load transmission surfaces 5BR, 5FL, 5BL, 5MR, and 5ML other than the right front load transmission surface 5FR in the coupling portion and the specific structure of the load receiving surfaces 6BR, 6FL, 6BL, 6MR, and 6ML other than the load receiving surface 6FR in the crawler frame are each similar to the structure shown in FIGS. 23 and 24, except for differences in direction, and are therefore not described in detail. It should be noted, however, that the structure of each load transmission surface and load receiving surface is not limited to the structure shown in FIGS. 23 and 24 and that various structures allowing transmission of the load from the load transmission surface to the load receiving surface may be adopted.

Each of the load transmission surfaces 3F and 3B of the car body 10, the front load receiving surface 4F of the front axle 11, and the rear load receiving surface 4B of the rear axle 12 is a plane perpendicular to the front-to-rear direction, but is not necessarily a plane perpendicular to the front-to-rear direction and may be a plane or a curved surface inclined against the front-to-rear direction. Each of the load transmission surfaces 3MR, 3ML, 5FR, 5FL, 5BR, 5BL,5MR, and 5ML and the load receiving surfaces 4MR, 4ML, 6FR, 6BR, 6FL, 6BL, 6MR, and 6ML is a plane perpendicular to the left-to-right direction, but is not necessarily a plane perpendicular to the left-to-right direction and may be a plane or a curved surface inclined against the left-to-right direction.

The front axle 11 has a shape in which, in the plan view shown in FIG. 20, a right front straight line LA, which is a straight line passing through a point A1 included in the front load receiving surface 4F of the front axle 11 and a point A2 included in the right front load transmission surface 5FR, passes through the right front end roller 261, and a left front straight line LC, which is a straight line passing through a point C1 included in the front load receiving surface 4F and a point C2 included in the left front load transmission surface 5FL, passes through the left front end roller 261. In this embodiment, the right front straight line LA is the straight line passing through the slewing center axis C as well, and the left front straight line LC is the straight line passing through the slewing center axis C as well.

However, the point A1 on the front load receiving surface 4F and the point A2 on the right front load transmission surface 5FR for defining the right front straight line LA are not limited to the points at the positions defined above. The point A1 may be a different point included in the front load receiving surface 4F, the different point capable of receiving a front load from the load transmission surface 3F of the car body 10, and the point A2 may be a different point included in the right front load transmission surface 5FR, the different point capable of transmitting the front load to the right front load receiving surface 6FR of the right crawler frame 2R. Specifically, the right front straight line LA may be, for example, a straight line that in plan view shown in FIG. 20, passes through a right end point on the front load receiving surface 4F and a front end point on the right front load transmission surface 5FR.

Likewise, the point C1 on the front load receiving surface 4F and the point C2 on the left front load transmission surface 5FL for defining the left front straight line LC are not limited to the points at the positions defined above. The point C1 may be a different point included in the front load receiving surface 4F, the different point capable of receiving the front load from the load transmission surface 3F of the car body 10, and the point C2 may be a different point included in the left front load transmission surface 5FL, the different point capable of transmitting the front load to the left front load receiving surface 6FL of the left crawler frame 2L. Specifically, the left front straight line LC may be, for example, a straight line that in plan view shown in FIG. 20, passes through a left end point on the front load receiving surface 4F and a front end point on the left front load transmission surface 5FL.

The front axle 11 includes a right front continuous part CX extending continuously, in plan view, from the front load receiving surface 4F to the right front load transmission surface 5FR along the right front straight line LA, and a left front continuous part CX extending continuously, in plan view, from the front load receiving surface 4F to the left front load transmission surface 5FL along the left front straight line LC. Specifically, the right front continuous part CX extends continuously from the front load receiving surface 4F to the right front load transmission surface 5FR while overlapping the right front straight line LA in plan view, and left front continuous part CX extends continuously from the front load receiving surface 4F to the left front load transmission surface 5FL while overlapping the left front straight line LC in plan view.

The rear axle 12 has a shape in which, in the plan view shown in FIG. 20, a right rear straight line LB, which is a straight line passing through a point B1 included in the rear load receiving surface 4B of the rear axle 12 and a point B2 included in the right rear load transmission surface 5BR, passes through the right rear end roller 262 and a left rear straight line LD, which is a straight line passing through a point D1 included in the rear load receiving surface 4B and a point D2 included in the left rear load transmission surface 5BL, passes through the left rear end roller 262. In this embodiment, the right rear straight line LB is the straight line passing through the slewing center axis C as well, and the left rear straight line LD is the straight line passing through the slewing center axis C as well.

The point B1 on the rear load receiving surface 4B and the point B2 on the right rear load transmission surface 5BR for defining the right rear straight line LB are not limited to the points at the positions defined above. The point B1 may be a different point included in the rear load receiving surface 4B, the different point capable of receiving the rear load from the load transmission surface 3B of the car body 10, and the point B2 may be a different point included in the right rear load transmission surface 5BR, the different point capable of transmitting the rear load to the right rear load receiving surface 6BR of the right crawler frame 2R. Specifically, the right rear straight line LB may be, for example, a straight line that in plan view shown in FIG. 20, passes through a right end point on the rear load receiving surface 4B and a rear end point on the right rear load transmission surface 5BR.

Likewise, the point D1 on the rear load receiving surface 4B and the point D2 on the left rear load transmission surface 5BL for defining the left rear straight line LD are not limited to the points at the positions defined above. The point D1 may be a different point included in the rear load receiving surface 4B, the different point capable of receiving the rear load from the load transmission surface 3B of the car body 10, and the point D2 may be a different point included in the left rear load transmission surface 5BL, the different point capable of transmitting the rear load to the left rear load receiving surface 6BL of the left crawler frame 2L. Specifically, the left rear straight line LD may be, for example, a straight line that in plan view shown in FIG. 20, passes through a left end point on the rear load receiving surface 4B and a rear end point on the left rear load transmission surface 5BL.

The rear axle 12 includes a right rear continuous part CX extending continuously, in plan view, from the rear load receiving surface 4B to the right rear load transmission surface 5BR along the right rear straight line LB, and a left rear continuous part CX extending continuously, in plan view, from the rear load receiving surface 4B to the left rear load transmission surface 5BL along the left rear straight line LD. Specifically, the right rear continuous part CX extends continuously from the rear load receiving surface 4B to the right rear load transmission surface 5BR while overlapping the right rear straight line LB in plan view, and left rear continuous part CX extends continuously from the rear load receiving surface 4B to the left rear load transmission surface 5BL while overlapping the left rear straight line LD in plan view.

As described above, according to the lower travelling body 101 of the embodiment of the second invention, between the right front connection portion 41R and the right rear connection portion 42R that are connected respectively to the right crawler frame 2R, the right middle connection portion 43R is further connected to the right crawler frame 2R. This suppresses deformation of a middle part of the right crawler frame 2R, that is, a middle part between a part to which the right front connection portion 41R is connected and a part to which the right rear connection portion 42R is connected. Likewise, between the left front connection portion 41L and the left rear connection portion 42L that are connected respectively to the left crawler frame 2L, the left middle connection portion 43L is further connected to the Left crawler frame 2L. This suppresses deformation of a middle part of the left crawler frame 2L, that is, a middle part between a part to which the left front connection portion 41L is connected and a part to which the left rear connection portion 42L is connected. Hence, in lifting work, deformation of the middle part of each crawler frame, such as torsional distortion of the middle part, can be reduced. Specifically, the structure of the rear axle 12 is described as follows.

In the conventional lower travelling body, for example, when the cargo-to-be-lifted is hung on the upper slewing body as the cargo-to-be-lifted is located on the front side relative to the lower travelling body, a load applied to the car body by the cargo-to-be-lifted and the upper slewing body contains a large amount of a downward load component and a frontward load component. Consequently, the car body develops warping deformation in a direction in which the load acts (e.g., the downward direction or frontward direction). When the car body develops such warping deformation, for example, the front axle connected to the car body too develops downward warping deformation while undergoing torsional deformation, and the rear axle deforms as well. In this situation, a difference between a degree of deformation of the front axle and a degree of deformation of the rear axle is likely to arise. As a result, on the middle part of each crawler frame, the middle part being between the part to which the front axle is connected and the part to which the rear axle is connected, torsional deformation or the like develops following the above-mentioned deformation having developed on the front axle and the rear axle.

In the lower travelling body 101 according to the embodiment of the second invention, on the other hand, because the right middle connection portion 43R of the coupling portion is connected to the right crawler frame 2R between the right front connection portion 41R and the right rear connection portion 42R, the movement of the middle part of the right crawler frame 2R is suppressed by the right middle connection portion 43R. As a result, torsional deformation or the like of the middle part of the right crawler frame 2R is suppressed. Likewise, because the left middle connection portion 43L of the coupling portion is connected to the left crawler frame 2L between the left front connection portion 41L and the left rear connection portion 42L, the movement of the middle part of the left crawler frame 2L is suppressed by the left middle connection portion 43L. As a result, torsional deformation or the like of the middle part of the left crawler frame 2L is suppressed. In this manner, when deformation of the middle part of each of the left and right crawler frames 2R and 2L is suppressed, the movement of the coupling portion connected to the crawler frames 2R and 2L is suppressed and therefore deformation of the coupling portion is suppressed, and consequently deformation of the car body 10 supported by the coupling portion is suppressed as well. Hence torsional deformation or the like developing on the middle part of each crawler frame can be reduced in lifting work. In particular, when the cargo-to-be-lifted is hung from the hook device of the upper slewing body 102 as the cargo-to-be-lifted is located on the front side or the rear side relative to the lower travelling body 101, a growth in torsional deformation or the like developing on the middle part of each crawler frame can be suppressed.

When the mobile crane 100 is transported, the front axle 11 and the rear axle 12 can be removed from each of the car body 10, the right crawler frame 2R, and the left crawler frame 2L. In addition, a set of the car body 10, the right middle axle 13R, and the left middle axle 13L that are integrated together can be removed from each of the right crawler frame 2R and the left crawler frame 2L. Even if the mobile crane 100 is relatively large in size, therefore, the width of each component to be transported can be kept within a transportation limit width. The lower travelling body 101 thus offers both advantages: suppression of deformation of the middle parts of the crawler frames 2R and 2L during crane work; and suppression of an increase in the width of the component during transportation.

In the lower travelling body 101 according to the embodiment of the second invention, the right front part 11R and the left front part 11L of the front axle 11 are extended diagonally frontward to the right and diagonally frontward to the left, respectively, from the front middle part 11M. This locates the right front load transmission surface 5FR and the left front load transmission surface 5FL further frontward than in conventional cases, thereby allowing a reduction in a warp of the front parts of the left and right crawler frames 2R and 2L that is caused by the front load, and at the same, locates the front surface 81 of the front middle part 11M on the rear side relative to the front surface 82 of the right front part 11R and to the front surface 83 of the left front part 11L, thereby allowing suppression of an increase in the weight of the front axle 11.

Similarly, in the lower travelling body 101 according to the embodiment of the second invention, the right rear part 12R and the left rear part 12L of the rear axle 12 are extended diagonally rearward to the right and diagonally rearward to the left, respectively, from the rear middle part 12M. This locates the right rear load transmission surface 5BR and the left rear load transmission surface 5BL further rearward than in conventional cases, thereby allowing a reduction in a warp of the rear parts of the left and right crawler frames 2R and 2L that is caused by the rear load, and at the same, locates the rear surface 91 of the rear middle part 12M on the front side relative to the rear surface 92 of the right rear part 12R and to the rear surface 93 of the left rear part 12L, thereby allowing suppression of an increase in the weight of the rear axle 12.

The right front continuous part CX extends continuously without interruption, in plan view, from the front load receiving surface 4F to the right front load transmission surface 5FR of the front axle 11, and the left front continuous part CX extends continuously without interruption, in plan view, from the front load receiving surface 4F to the left front load transmission surface 5FL of the front axle 11. The front load received by the front load receiving surface 4F of the front axle 11 is thus efficiently transmitted continuously to the right front load transmission surface 5FR and to the left front load transmission surface 5FL along the right front continuous part CX and the left front continuous part CX, and then is transmitted from these load transmission surfaces 5FR and 5FL to the left and right crawler frames 2R and 2L.

The right rear continuous part CX extends continuously without interruption, in plan view, from the rear load receiving surface 4B to the right rear load transmission surface 5BR of the rear axle 12, and the left rear continuous part CX extends continuously without interruption, in plan view, from the rear load receiving surface 4B to the left rear load transmission surface 5BL of the rear axle 12. The rear load received by the rear load receiving surface 4B of the rear axle 12 is thus efficiently transmitted continuously to the right rear load transmission surface 5BR and to the left rear load transmission surface 5BL along the right rear continuous part CX and the left rear continuous part CX, and then is transmitted from these load transmission surfaces 5BR and 5BL to the left and right crawler frames 2R and 2L.

### [Modification of First Embodiment]

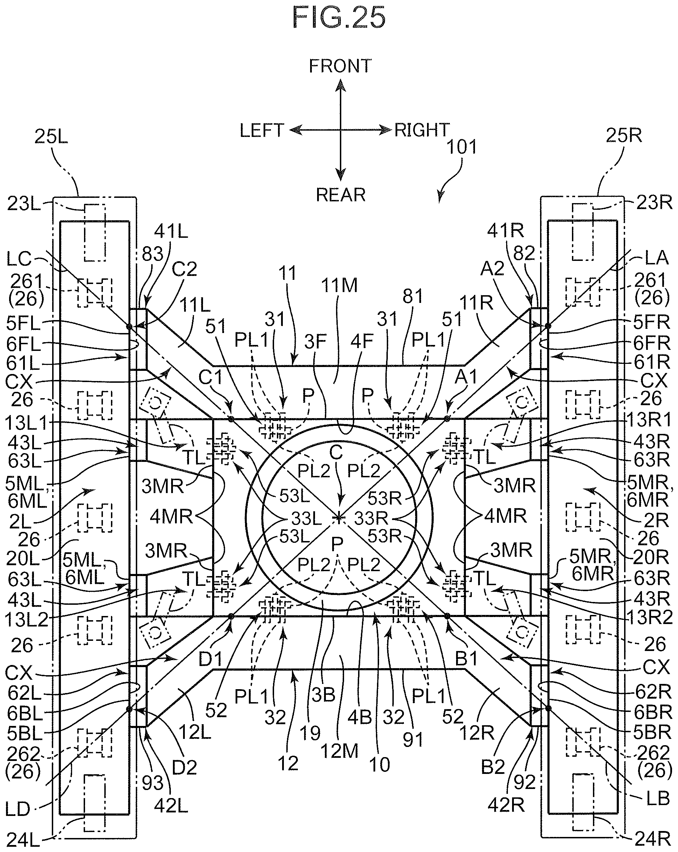

FIG. 25 is a plan view of a lower travelling body 101 according to a modification of the first embodiment of the second invention. In the lower travelling body 101 according to the modification shown in FIG. 25, the coupling portion is formed of a plurality of coupling members, and the plurality of coupling members include the front axle 11, the rear axle 12, a first right middle axle 13R1, a second right middle axle 13R2, a first left middle axle 13L1, and a second left middle axle 13L2.

The lower travelling body 101 according to the modification shown in FIG. 25 is different from the lower travelling body 101 shown in FIG. 20 in that two right middle axles 13R1 and 13R2 and two left middle axles 13L1 and 13L2 are disposed between the front axle 11 and the rear axle 12 in the front-to-rear direction, but is similar to the lower travelling body 101 shown in FIG. 20 in other aspects of the configuration. Hereinafter, differences between the modification and the lower travelling body 101 shown in FIG. 20 will be mainly described, and the same constitutional elements as those of the lower travelling body 101 shown in FIG. 20 will be denoted by the same reference signs and omitted in further description.

In the modification shown in FIG. 25, the right middle axle 13R1 couples the car body 10 to the right crawler frame 2R on the rear side relative to the front axle 11 and on the front side relative to the slewing center axis C. The right middle axle 13R2 couples the car body 10 to the right crawler frame 2R on the front side relative to the rear axle 12 and on the rear side relative to the slewing center axis C. Two right middle axles 13R1 and 13R2 are arranged at intervals in the front-to-rear direction, i.e., separated from each other in the front-to-rear direction. The left middle axle 13L1 couples the car body 10 to the left crawler frame 2L on the rear side relative to the front axle 11 and on the front side relative to the slewing center axis C. The left middle axle 13L2 couples the car body 10 to the left crawler frame 2L on the front side relative to the rear axle 12 and on the rear side relative to the slewing center axis C. Two left middle axles 13L1 and 13L2 are arranged at intervals in the front-to-rear direction, i.e., separated from each other in the front-to-rear direction. In the modification shown in FIG. 25, the two right middle axles 13R1 and 13R2 are connected to the car body 10 such that they cannot be detached from the car body 10, and the two left middle axles 13L1 and 13L2 are connected to the car body 10 such that they cannot be detached from the car body 10, in the same manner as in the embodiment shown in FIG. 20.

In the lower travelling body 101 according to the modification, the two right middle axles 13R1 and 13R2 are connected to the middle part of the right crawler frame 2R, and therefore deformation of the middle part is suppressed more effectively than is in the embodiment shown in FIG. 20. Likewise, the two left middle axles 13L1 and 13L2 are connected to the middle part of the left crawler frame 2L, and therefore deformation of the middle part is suppressed more effectively than is in the embodiment shown in FIG. 20.

### [Second Embodiment]

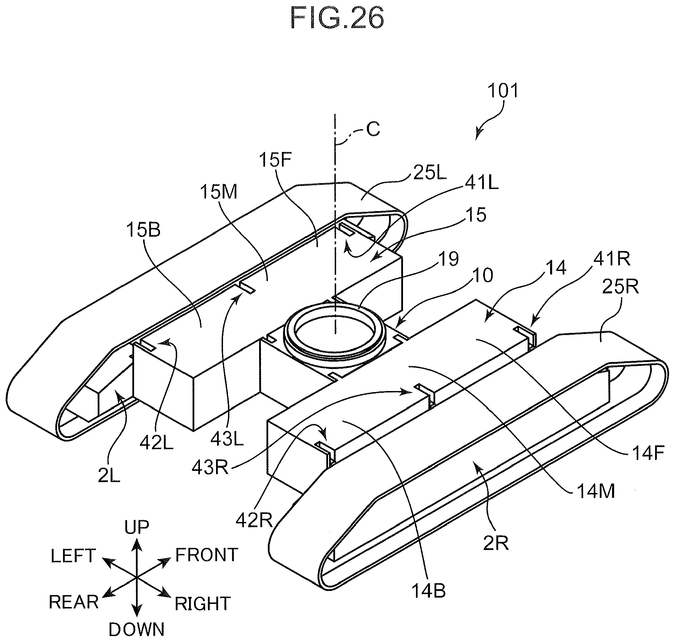

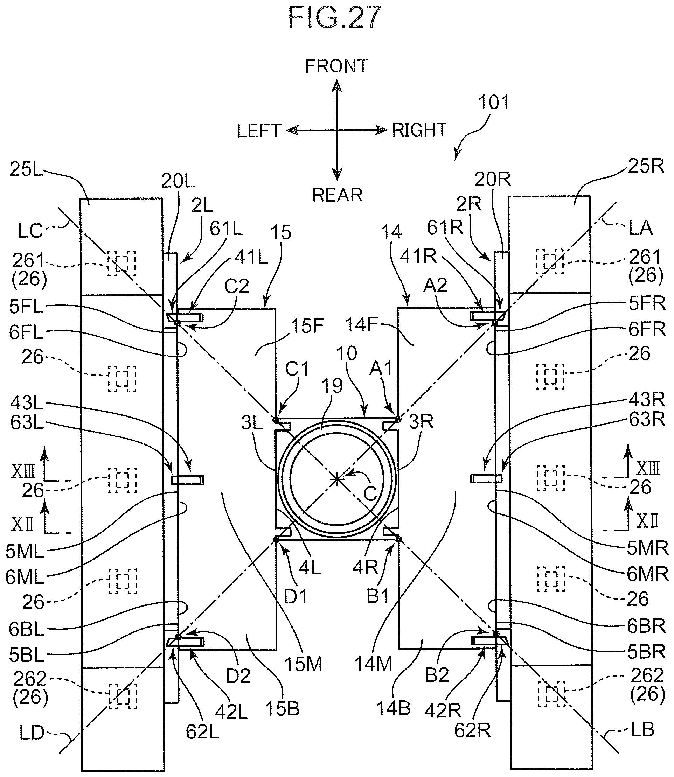

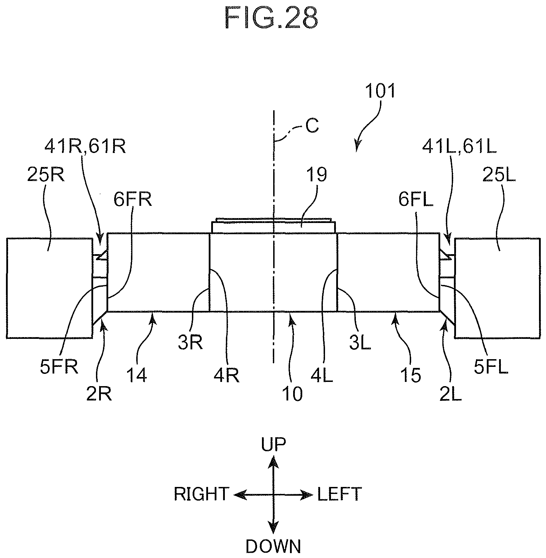

FIG. 26 is a perspective view of a lower travelling body 101 according to a second embodiment of the second invention, FIG. 27 is a plan view of the same, and FIG. 28 is a front view of the same.

The lower travelling body 101 according to the second embodiment is different from the lower travelling body 101 according to the first embodiment in coupling portion structure, and, except for this main difference, is similar to the lower travelling body 101 according to the first embodiment in other structural aspects. In the following description, therefore, a configuration of the lower travelling body 101 of the second embodiment that is different from that of the lower travelling body 101 of the first embodiment will be mainly explained, and description of the same configuration as that of the lower travelling body 101 of the first embodiment will be omitted.

According to the first embodiment, the coupling portion is configured by the front axle 11, the rear axle 12, the right middle axle 13R, and the left middle axle 13L. According to the second embodiment, however, the coupling portion is configured by a right coupling member 14 and a left coupling member 15, as shown FIGS. 26 to 28.

Specifically, in the second embodiment, the coupling portion is configured by the right coupling member 14 that couples the car body 10 to the right crawler frame 2R on the right side relative to the slewing center axis C, and the left coupling member 15 that couples the car body 10 to the left crawler frame 2L on the left side relative to the slewing center axis C.

The right coupling member 14 and the left coupling member 15 each have a substantially rectangular parallelepiped shape whose dimensions in the front-to-rear direction are larger than dimensions in the left-to-right direction. The right coupling member 14 has a part of its left side connected to a right side of the car body 10, the part being close to the center in the front-to-rear direction. The right coupling member 14 includes a middle part 14M connected to the car body 10, a front part 14F extending frontward from the middle part 14M to the front side relative to the car body 10, and a rear part 14B extending rearward from the middle part 14M to the rear side relative to the car body 10.

Similarly, the left coupling member 15 has a part of its right side connected to a left side of the car body 10, the part being close to the center in the front-to-rear direction. The left coupling member 15 includes a middle part 15M connected to the car body 10, a front part 15F extending frontward from the middle part 15M to the front side relative to the car body 10, and a rear part 15B extending rearward from the middle part 15M to the rear side relative to the car body 10.

As shown in FIG. 27, the right coupling member 14 includes a right front connection portion 41R, a right rear connection portion 42 R, and a right middle connection portion 43R. The right front connection portion 41R is detachably connected to a right front connected portion 61R of the right crawler frame 2R on the front side relative to the slewing center axis C. The right rear connection portion 42R is detachably connected to a right rear connected portion 62R of the right crawler frame 2R on the rear side relative to the slewing center axis C. The right middle connection portion 43R is detachably connected to a right middle connected portion 63R of the right crawler frame 2R at a position where the right middle connection portion 43R is separated rearward from the right front connection portion 41R and is separated frontward from the right rear connection portion 42R. The right front connection portion 41R, the right middle connection portion 43R, and the right rear connection portion 42R are arranged in descending order at intervals in the front-to-rear direction.

The left coupling member 15 includes a left front connection portion 41L, a left rear connection portion 42L, and a left middle connection portion 43L. The left front connection portion 41L is detachably connected to a left front connected portion 61L of the left crawler frame 2L on the front side relative to the slewing center axis C. The left rear connection portion 42L is detachably connected to a left rear connected portion 62L of the left crawler frame on the rear side relative to the slewing center axis C. The left middle connection portion 43L is connected detachably to a left middle connected portion 63L of the left crawler frame 2L at a position where the left middle connection portion 43L is separated rearward from the left front connection portion 41L and is separated frontward from the left rear connection portion 42L. The left front connection portion 41L, the left middle connection portion 43L, and the left rear connection portion 42L are arranged in descending order at intervals in the front-to-rear direction.

In this embodiment, the right front connection portion 41R and the left front connection portion 41L are connected respectively to the right front connected portion 61R and the left front connected portion 61L on the front side relative to the front end of the car body 10. The right rear connection portion 42R and the left rear connection portion 42L are connected respectively to the right rear connected portion 62R and the left rear connected portion 62L on the rear side relative to the rear end of the car body 10. The right middle connection portion 43R and the left middle connection portion 43L are connected respectively to the right middle connected portion 63R and the left middle connected portion 63L between the front end and the rear end of the car body 10.

The lower travelling body 101 according to the second embodiment has a structure in which the right coupling member 14 and the left coupling member 15 can each be attached to or detached from the car body 10, the right crawler frame 2R, and the left crawler frame 2L. The width of each of the components making up the lower travelling body 101, therefore, can be made small, and therefore, even if the mobile crane 100 is relatively large in size, the width of a component to be transported can be kept within a transportation limit width.

The car body 10 includes a plurality of load transmission surfaces for transmitting a load received from the upper slewing body 102 to each of the right coupling member 14 and the left coupling member 15. The plurality of load transmission surfaces include a load transmission surface 3R that faces the right side and a load transmission surface 3L that faces the left side.

The right coupling member 14 includes a load receiving surface 4R for receiving the load from the car body 10, and a right front load transmission surface 5FR, a right rear load transmission surface 5BR, and a right middle load transmission surface 5MR for transmitting the load to the right crawler frame 2R.

The left coupling member 15 includes a load receiving surface 4L for receiving the load from the car body 10, and a left front load transmission surface 5FL, a left rear load transmission surface 5BL, and a left middle load transmission surface 5ML for transmitting the load to the left crawler frame 2L.

The right crawler frame 2R includes a right front load receiving surface 6FR, a right rear load receiving surface 6BR, and a right middle load receiving surface 6MR for receiving the load from the right coupling member 14.

The left crawler frame 2L includes a left front load receiving surface 6FL, a left rear load receiving surface 6BL, and a left middle load receiving surface 6ML for receiving the load from the left coupling member 15.

The load receiving surface 4R of the right coupling member 14 is located adjacent on the right side relative to the load transmission surface 3R of the car body 10 so as to receive the load from the car body 10. In this embodiment, the load receiving surface 4R is formed on the middle part 14M of the right coupling member 14.

The right front load transmission surface 5FR of the right coupling member 14 is located adjacent on the left side relative to the right front load receiving surface 6FR of the right crawler frame 2R so as to transmit the load to the right crawler frame 2R. In this embodiment, the right front load transmission surface 5FR is formed on the front part 14F of the right coupling member 14.

The right rear load transmission surface 5BR of the right coupling member 14 is located adjacent on the left side relative to the right rear load receiving surface 6BR of the right crawler frame 2R so as to transmit the load to the right crawler frame 2R. In this embodiment, the right rear load transmission surface 5BR is formed on the rear part 14B of the right coupling member 14.

The right middle load transmission surface 5MR of the right coupling member 14 is located adjacent on the left side relative to the right middle load receiving surface 6MR of the right crawler frame 2R so as to transmit the load to the right crawler frame 2R. In this embodiment, the right middle load transmission surface 5MR is formed on the middle part 14M of the right coupling member 14.

The load receiving surface 4L of the left coupling member 15 is located adjacent on the left side relative to the load transmission surface 3L of the car body 10 so as to receive the load from the car body 10. In this embodiment, the load receiving surface 4L is formed on the middle part 15M of the left coupling member 15.

The left front load transmission surface 5FL of the left coupling member 15 is located adjacent on the right side relative to the left front load receiving surface 6FL of the left crawler frame 2L so as to transmit the load to the left crawler frame 2L. In this embodiment, the left front load transmission surface 5FL is formed on the front part 15F of the left coupling member 15.

The left rear load transmission surface 5BL of the left coupling member 15 is located adjacent on the right side relative to the left rear load receiving surface 6BL of the left crawler frame 2L so as to transmit the load to the left crawler frame 2L. In this embodiment, the left rear load transmission surface 5BL is formed on the rear part 15B of the left coupling member 15.

The left middle load transmission surface 5ML of the left coupling member 15 is located adjacent on the right side relative to the left middle load receiving surface 6ML of the left crawler frame 2L so as to transmit the load to the left crawler frame 2L. In this embodiment, the left middle load transmission surface 5ML is formed on the middle part 15M of the left coupling member 15.

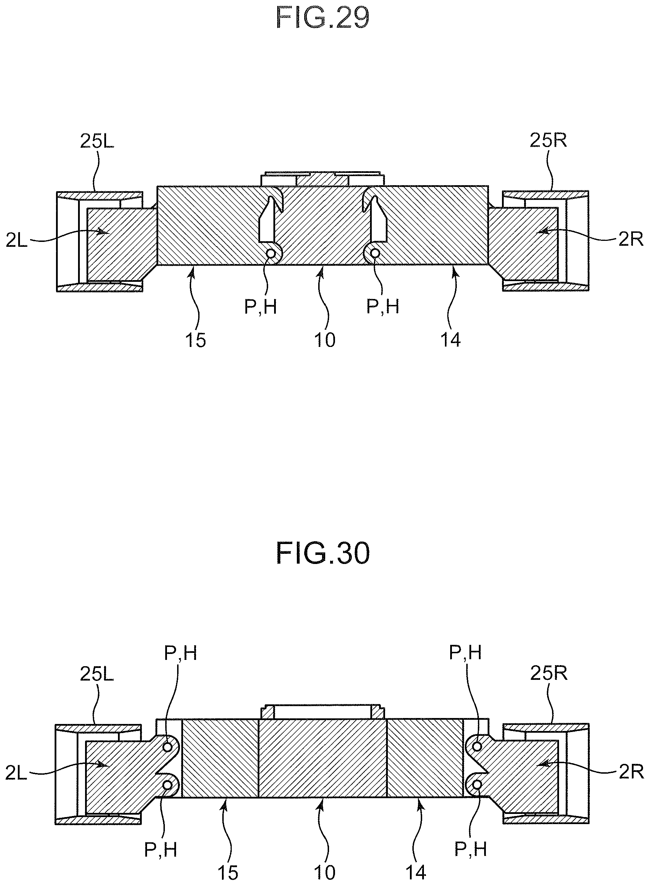

FIG. 29 is a sectional view taken along a line XVII-XVII of FIG. 27, and FIG. 30 is a sectional view taken along a line XVIII-XVIII of FIG. 27.

As shown in FIG. 29, the right coupling member 14 and the car body 10 have insertion holes H, respectively, and by inserting a pin P into these insertion holes H, the right coupling member 14 and the car body 10 are connected to each other. In the same manner, the left coupling member 15 and the car body 10 have pin insertion holes H, respectively, and by inserting the pin P into these insertion holes H, the left coupling member 15 and the car body 10 are connected to each other.

As shown in FIG. 30, the right coupling member 14 and the right crawler frame 2R have pairs of pin insertion holes H, respectively, and by inserting the pins P into these pairs of pin insertion holes H, the right coupling member 14 and the right crawler frame 2R are connected to each other. In the same manner, the left coupling member 15 and the left crawler frame 2L have pairs of pin insertion holes H, respectively, and by inserting the pins P into these pairs of pin insertion holes H, the left coupling member 15 and the left crawler frame 2L are connected to each other.

In the second embodiment, in the same manner as in the first embodiment, the right coupling member 14 has a shape in which, in the plan view shown in FIG. 27, the right front straight line LA, which is the straight line passing through the point A1 included in the load receiving surface 4R of the right coupling member 14 and the point A2 included in the right front load transmission surface 5FR, passes through the right front end roller 261, and the right rear straight line LB, which is the straight line passing through the point B1 included in the load receiving surface 4R of the right coupling member 14 and the point B2 included in the right rear load transmission surface 5BR, passes through the right rear end roller 262. In this embodiment, the right front straight line LA is the straight line passing through the slewing center axis C as well, and the right rear straight line LB is the straight line passing through the slewing center axis C as well.

In the second embodiment, in the same manner as in the first embodiment, the left coupling member 15 has a shape in which, in the plan view shown in FIG. 27, the left front straight line LC, which is the straight line passing through the point C1 included in the load receiving surface 4L of the left coupling member 15 and the point C2 included in the left front load transmission surface 5FL, passes through the left front end roller 261, and the left rear straight line LD, which is the straight line passing through the point D1 included in the load receiving surface 4L of the left coupling member 15 and the point D2 included in the left rear load transmission surface 5BL, passes through the left rear end roller 262. In this embodiment, the left front straight line LC is the straight line passing through the slewing center axis C as well, and the left rear straight line LD is the straight line passing through the slewing center axis C as well.

In the lower travelling body 101 according to the second embodiment, between the right front connection portion 41R and the right rear connection portion 42R that are connected to the right crawler frame 2R, the right middle connection portion 43R is further connected to the right crawler frame 2R. This suppresses deformation of a middle part of the right crawler frame 2R, that is, a middle part between a part to which the right front connection portion 41R is connected and a part to which the right rear connection portion 42R is connected. Likewise, between the left front connection portion 41L and the left rear connection portion 42L that are connected respectively to the left crawler frame 2L, the left middle connection portion 43L is further connected to the Left crawler frame 2L. This suppresses deformation of a middle part of the left crawler frame 2L, that is, a middle part between a part to which the left front connection portion 41L is connected and a part to which the left rear connection portion 42L is connected. Hence, in lifting work, deformation of the middle part of each crawler frame, such as torsional distortion of the middle part, can be reduced.

The second invention is not limited to the embodiments described above. The second invention includes, for example, the following modes.

### (A) Coupling Portion

In the first embodiment of the second invention, the coupling portion includes the front axle 11, the rear axle 12, the right middle axle 13R, and the left middle axle 13L, whereas in the second embodiment of the second invention, the coupling portion includes the right coupling member 14 and the left coupling member 15. The coupling portion, however, is not limited to these forms. The coupling portion according to the second invention is applicable when including at least one coupling member, and therefore may be formed of a single coupling member.

In the first and second embodiments of the second invention, the coupling portion is configured such that in plan view, the right front straight line LA passes through the right front end roller 261, the right rear straight line LB passes through the right rear end roller 262, the left front straight line LC passes through the left front end roller 261, and the left rear straight line LD passes through the left rear end roller 262. The coupling portion is, however, not limited to this configuration. The right front straight line LA may pass through a point on the front side or the rear side relative to the right front end roller 261, the right rear straight line LB may pass through a point on the rear side or the front side relative to the right rear end roller 262, the left front straight line LC may pass through a point on the front side or the rear side relative to the left front end roller 261, and the left rear straight line LD may pass through a point on the rear side or the front side relative to the left rear end roller 262.

### (B) Right Front Straight Line, Right Rear Straight line, Left Front Straight Line, and Left Rear Straight Line

In the embodiments of the second invention, the right front straight line LA is defined as a straight line that, in plan view, connects a point on the rotation center axis of the right front end roller 261 and at the center in the width direction (left-to-right direction) of the right front end roller 261 to the slewing center axis C, and the right rear straight line LB, the left front straight line LC, and the left rear straight line LD are also defined in a similar manner. The right front straight line LA is, however, not limited to this form. The right front straight line LA may be, for example, a straight line that, in plan view, connects the slewing center axis C to any pre-chosen part of the right front end roller 261. Any pre-chosen part of the right front end roller 261 is, for example, a part of right front end roller 261 that is, in plan view, at the rear end and right end of the right front end roller 261. Likewise, the right rear straight line LB may be a straight line that, in plan view, connects the slewing center axis C to any pre-chosen part of the right rear end roller 262, the left front straight line LC may be a straight line that, in plan view, connects the slewing center axis C to any pre-chosen part of the left front end roller 261, and the left rear straight line LD may be a straight line that, in plan view, connects the slewing center axis C to any pre-chosen part of the left rear end roller 262.

According to the second invention, the above positional relationship between the right front straight line and the right front end roller is defined as the positional relationship in plan view of the lower travelling body, that is, the positional relationship when the lower travelling body is viewed from directly above in the vertical direction (downward). The right front straight line and the right front end roller, therefore, do not always have to be at the same height in the vertical direction and may be shifted in height from each other in the vertical direction. In other words, the height of the right front straight line and the height of the right front end roller may be the same or may be different from each other. This applies also to the positional relationship between the left front straight line and the left front end roller, to the positional relationship between the right rear straight line and the right rear end roller, and to the positional relationship between the left rear straight line and the left rear end roller.

### (C) Front Axle and Rear Axle

In the first embodiment of the second invention, the front axle 11 includes the front middle part 11M, the right front part 11R, and the left front part 11L, and the rear axle 12 includes the rear middle part 12M, the right rear part 12R, and the left rear part 12L. However, the front axle 11 and rear axle 12 are not limited to this form. At least one of the front axle 11 and the rear axle 12 may be configured by, for example, a structural member linearly extending horizontally from its right end to left end in the left-to-right direction.

### (D) Direction of Cargo-to-be-lifted Hung on Upper Slewing Body

In the second invention, deformation of each crawler frame can be suppressed when the cargo-to-be-lifted is hung from the hook device of the upper slewing body as the cargo-to-be-lifted is located on the front side or the rear side relative to the lower travelling body. However, the present invention may be applied also to a case where the cargo-to-be-lifted is hung from the hook device of the upper slewing body as the cargo-to-be-lifted is located on the left side or the right side relative to the lower travelling body.

### (E) Crane Specifications

The crane according to the embodiment of the second invention shown in FIG. 18 includes the jib, the lower strut, and the upper strut. The specifications of the crane, however, are not limited to the specifications shown in FIG. 18. The crane according to the present disclosure may be a crane that does not include a jib, a lower strut, and an upper strut and may also be a crane with a fixed jib that includes a jib and one strut only. The crane according to the present disclosure may also be a crane including a gantry in place of a mast (e.g., a middle-sized crane or a small-sized crane).

### (F) Translifter

In the second embodiment of the second invention shown in FIG. 27, two translifters may be attached to respective front part and rear part of the car body 10 at intervals in the left-to-right direction. Further, a plurality of the transformer lifters (e.g., two translifters) may be attached to the right coupling member 14 shown in FIG. 27 at intervals in the front-to-rear direction, and a plurality of the transformer lifters (e.g., two translifters) may be attached to the left coupling member 15 shown in FIG. 27 at intervals in the front-to-rear direction. This further improves the workability of work of connecting the right coupling member 14 and the left coupling member 15 to the car body 10 and work of detaching the right coupling member 14 and the left coupling member 15 from the car body 10.

### [Background Art Related to Second Invention and Problem to be Solved by Second Invention]

A mobile crane is conventionally known (e.g., Patent Literatures 1 and 2). The mobile crane includes a lower travelling body capable of travelling on the ground, and an upper slewing body mounted on the lower travelling body. The upper slewing body includes a work device including a boom and a lifting rope. The lower travelling body includes a car body that supports the upper slewing body in such a way as to allow it to turn around a slewing center axis, a right crawler frame and a left crawler frame that extend in the front-to-rear direction on the right side and the left side of the car body, respectively, and a coupling portion that couples the car body to the left and right crawler frames.

Specifically, for example, in the mobile crane of Patent Literature 1, the coupling portion includes a front axle extending rightward and leftward from the car body, and a rear axle extending rightward and leftward from the car body on the rear side relative to the front axle. A right part of the front axle and a right part of the rear axle are connected to the right crawler frame, while a left part of the front axle and a left part of the rear axle are connected to the left crawler frame.

In lifting work (crane work) of lifting a cargo-to-be-lifted by the mobile crane, a load applied by the upper slewing body and the cargo-to-be-lifted is transmitted to each of the crawler frames via connections between the front and rear axles and the crawler frames. Consequently, each crawler frame develop deformation. In particular, when the cargo-to-be-lifted is hung from the hook device of the upper slewing body via the lifting rope of the work device as the cargo-to-be-lifted is located on the front side or the rear side relative to the lower travelling body, the load applied by the upper slewing body and the cargo-to-be-lifted causes the car body to partially deform frontward or rearward. This creates a difference between a degree of deformation of the front axle and a degree of deformation of the rear axle. As a result, at each crawler frame, torsional deformation or the like is likely to develop on a middle part between a part to which the front axle is connected and a part to which the rear axle is connected. In the case where the cargo-to-be-lifted is hung from the hook device of the upper slewing body as the cargo-to-be-lifted is located on the front side or the rear side relative to the lower travelling body, therefore, deformation of the middle part of each crawler frame tends to grow larger than the deformation in the case where the cargo-to-be-lifted is hung from the hook device of the upper slewing body as the cargo-to-be-lifted is located on the left side or right side relative to the lower travelling body. In this manner, when the magnitude of deformation of the middle part differs depending on the position (slewing position) of the cargo-to-be-lifted relative to the lower travelling body, the workability of lifting work may drop. It is thus desirable that deformation developing on the middle part of each crawler frame be reduced in lifting work.

Patent Literature 2 discloses a technique by which, to improve respective rigidities of the front and rear parts of the car body, a pair of reinforcing members are provided respectively on a front part and a rear part in the trunk of the car body. These pair of reinforcing members of a mobile crane described in Patent Literature 2, however, does not suppress warping of the crawler frame.

The second invention of the present disclosure has been conceived in view of the above problems, and an object of the second invention is to provide a lower travelling body of a mobile crane, the lower travelling body capable of reducing deformation developing on a middle part of each crawler frame in lifting work.

A lower travelling body of a mobile crane according to a second invention includes: a car body that supports an upper slewing body of the mobile crane in such a way as to allow the upper slewing body to turn around a slewing center axis; a right crawler frame that extends in a front-to-rear direction on the right side relative to the car body; a left crawler frame that extends in the front-to-rear direction on the left side relative to the car body; and a coupling portion including at least one coupling member that is interposed between the car body and the right crawler frame to couple the car body and the right crawler frame together and that is interposed between the car body and the left crawler frame to couple the car body and the left crawler frame together, thereby supporting the car body. The coupling portion includes: a right front connection portion connected to the right crawler frame on the front side relative to the slewing center axis; a right rear connection portion connected to the right crawler frame on the rear side relative to the slewing center axis; and a right middle connection portion connected to the right crawler frame at a position at which the right middle connection portion is separated rearward from the right front connection portion and is separated frontward from the right rear connection portion. The coupling portion includes: a left front connection portion connected to the left crawler frame on the front side relative to the slewing center axis; a left rear connection portion connected to the left crawler frame on the rear side relative to the slewing center axis; and a left middle connection portion connected to the left crawler frame at a position at which the left middle connection portion is separated rearward from the left front connection portion and is separated frontward from the left rear connection portion.

In this lower travelling body, the coupling portion is configured such that the right middle connection portion is further connected to the right crawler frame between the right front connection portion and the right rear connection portion that are connected to the right crawler frame. This suppresses deformation of a middle part that is a part of right crawler frame that is between a part to which the right front connection portion is connected and a part to which the right rear connection portion is connected. Similarly, the coupling portion is configured such that the left middle connection portion is further connected to the left crawler frame between the left front connection portion and the left rear connection portion that are connected to the left crawler frame. This suppresses deformation of a middle part that is a part of left crawler frame that is between a part to which the left front connection portion is connected and a part to which the left rear connection portion is connected. Hence, in lifting work, torsional deformation or the like developing on the middle part of each crawler frame can be reduced.

In the lower travelling body of the mobile crane according to the second invention, it is preferable that the right front connection portion and the left front connection portion be connected to the right crawler frame and the left crawler frame, respectively, on the front side relative to a front end of the car body, that the right rear connection portion and the left rear connection portion be connected to the right crawler frame and the left crawler frame, respectively, on the rear side relative to a rear end of the car body, and that the right middle connection portion and the left middle connection portion be connected to the right crawler frame and the left crawler frame, respectively, between the front end and the rear end of the car body.

In this mode, the right front connection portion, the right middle connection portion, and the right rear connection portion are disposed in a relatively balanced manner in the front-to-rear direction and therefore torsional deformation or the like of the middle part of the right crawler frame is suppressed more effectively. In the same manner, the left front connection portion, the left middle connection portion, and the left rear connection portion are disposed in a relatively balanced manner in the front-to-rear direction and therefore torsional deformation or the like of the middle part of the left crawler frame is suppressed more effectively.

In the lower travelling body of the mobile crane according to the second invention, it is preferable that the at least one coupling member include: a front axle having the right front connection portion and the left front connection portion, the front axle coupling the right crawler frame to the left crawler frame on the front side relative to the slewing center axis and being connected to the car body; a rear axle having the right rear connection portion and the left rear connection portion, the rear axle coupling the right crawler frame to the left crawler frame on the rear side relative to the slewing center axis and being connected to the car body; a right middle axle having the right middle connection portion, the right middle axle coupling the car body to the right crawler frame on the rear side relative to the front axle and on the front side relative to the rear axle; and a left middle axle having a left middle connection portion, the left middle axle coupling the car body to the left crawler frame on the rear side relative to the front axle and on the front side relative to the rear axle.

In this mode, the right middle axle, which is a coupling member different from the front axle and the rear axle, connects the car body to the right crawler frame, and the left middle axle, which is a coupling member different from the front axle and the rear axle, connects the car body to the left crawler frame. This configuration makes it easy to dispose each of the right middle axle and the left middle axle of a required size at a required position to suppress torsional deformation or the like of the left and right crawler frames. As a result, suppressing torsional deformation or the like of the left and right crawler frames and keeping the size of the right middle axle and the left middle axle within a proper size to suppress an increase in the weight of the coupling portion can be achieved simultaneously.

In the lower travelling body of the mobile crane according to the second invention, it is preferable that the front axle include a front middle part connected to a part of car body that is located on the front side relative to the slewing center axis, a right front part having the right front connection portion, the right front part extending diagonally frontward to the right from the front middle part and connected to the right crawler frame, and a left front part having the left front connection portion, the left front part extending diagonally frontward to the left from the front middle part and connected to the left crawler frame, and that the front axle have a shape in which a front surface of the front middle part is located on the rear side relative to a front surface of the right front part and to a front surface of the left front part.

In this mode, by extending the right front part and the left front part diagonally frontward to the right and diagonally frontward to the left, respectively, from the front middle part, the right front connection portion and the left front connection portion of the front axle can be located further frontward than in conventional cases. As a result, the distance in the front-to-rear direction between a part of the right crawler frame to which part a front load is transmitted via the front axle (a right front connected portion that is a part of the right crawler frame to which part the right front connection portion of the coupling portion is connected) and the front end part of the right crawler frame can be made smaller than in conventional cases, and the distance in the front-to-rear direction between a part of the left crawler frame to which part the front load is transmitted via the front axle (a left front connected portion that is a part of the left crawler frame to which part the left front connection portion of the coupling portion is connected) and the front end part of the left crawler frame can be made smaller than in conventional cases. This allows reducing a warp that develops on a part (front part) between the right front connected portion and the front end part of the right crawler frame and on a part (front part) between the left front connected portion and the front end part of the left crawler frame when the cargo-to-be-lifted is hung from the hook device of the upper slewing body as the cargo-to-be-lifted is located on the front side relative to the lower travelling body. In this mode, therefore, as deformation of the middle part of each crawler frame is suppressed and deformation of the front part of each crawler frame is suppressed as well, an increase in the weight of the front axle can be suppressed by locating the front surface of the front middle part on the rear side relative to the front surface of the right front part and to the front surface of the left front part.

It is preferable that the rear axle include a rear middle part connected to a part of car body that is located on the rear side relative to the slewing center axis, a right rear part having the right rear connection portion, the right rear part extending diagonally rearward to the right from the rear middle part and connected to the right crawler frame, and a left rear part having the left rear connection portion, the left rear part extending diagonally rearward to the left from the rear middle part and connected to the left crawler frame, and that the rear axle have a shape in which a rear surface of the rear middle part is located on the front side relative to a rear surface of the right rear part and to a rear surface of the left rear part.

In this mode, by extending the right rear part and the left rear part diagonally rearward to the right and diagonally rearward to the left, respectively, from the rear middle part, the right rear connection portion and the left rear connection portion of the rear axle can be located further rearward than in conventional cases. As a result, the distance in the front-to-rear direction between a part of the right crawler frame to which part a rear load is transmitted via the rear axle (a right rear connected portion that is a part of the right crawler frame to which part the right rear connection portion of the coupling portion is connected) and the rear end part of the right crawler frame can be made smaller than in conventional cases, and the distance in the front-to-rear direction between a part of the left crawler frame to which part the rear load is transmitted via the rear axle (a left rear connected portion that is a part of the left crawler frame to which part the left rear connection portion of the coupling portion is connected) and the rear end part of the left crawler frame can be made smaller than in conventional cases. This allows reducing a warp that develops on a part (rear part) between the right rear connected portion and the rear end part of the right crawler frame and on a part (rear part) between the left rear connected portion and the rear end part of the left crawler frame when the cargo-to-be-lifted is hung from the hook device of the upper slewing body as the cargo-to-be-lifted is located on the rear side relative to the lower travelling body. In this mode, therefore, as deformation of the middle part of each crawler frame is suppressed and deformation of the rear part of each crawler frame is suppressed as well, an increase in the weight of the rear axle can be suppressed by locating the rear surface of the rear middle part on the rear side relative to the rear surface of the right rear part and to the rear surface of the left rear part.

In the lower travelling body of the mobile crane according to the second invention, the at least one coupling member may include: a right coupling member having the right front connection portion, the right rear connection portion, and the right middle connection portion, the right coupling member coupling the car body to the right crawler frame on the right side relative to the slewing center axis; and a left coupling member having the left front connection portion, the left rear connection portion, and the left middle connection portion, the left coupling member coupling the car body to the left crawler frame on the left side relative to the slewing center axis.

It is preferable that the lower travelling body of the mobile crane according to the second invention further include: a pair of right wheels rotatably supported respectively on the front end part and the rear end part of the right crawler frame; a pair of left wheels rotatably supported respectively on the front end part and the rear end part of the left crawler frame; a plurality of right rollers spaced between the pair of right wheels in the front-to-rear direction and rotatably supported on a lower part of the right crawler frame, the plurality of right rollers including a right front end roller located at the head of the right rollers and a right rear end roller located at the tail of the right rollers; and a plurality of left rollers spaced between the pair of left wheels in the front-to-rear direction and rotatably supported on a lower part of the left crawler frame, the plurality of left rollers including a left front end roller located at the head of the left rollers and a left rear end roller located at the tail of the left rollers, that the coupling portion include a front load receiving surface counter to the car body, a right front load transmission surface counter to the right crawler frame, and a left front load transmission surface counter to the left crawler frame, that the front load receiving surface be a surface capable of receiving a front load from the car body, the front load being a load that the car body receives from the upper slewing body when a cargo-to-be-lifted is hung from the hook device of the upper slewing body on the front side relative to the lower travelling body, the right front load transmission surface be a surface capable of transmitting the front load to the right crawler frame, and the left front load transmission surface be a surface capable of transmitting the front load to the left crawler frame, and that the coupling portion be configured such that in plan view, a right front straight line, which is a straight line passing through any point included in the front load receiving surface and through any point included in the right front load transmission surface, passes through the right front end roller or a point on the front side relative to the right front end roller and that in plan view, a left front straight line, which is a straight line passing through any point included in the front load receiving surface and any point included in the left front load transmission surface, passes through the left front end roller or a point on the front side relative to the left front end roller.

Because the coupling portion of the lower travelling body is configured such that the right front straight line and the left front straight line have the above positional relationships respectively with the right front end roller and the left front end roller, the distance in the front-to-rear direction between a part of the right crawler frame to which part the front load is transmitted via the coupling portion and the front end part of the right crawler frame can be made smaller than in conventional cases, and the distance in the front-to-rear direction between a part of the left crawler frame to which part the front load is transmitted via the coupling portion and the front end part of the left crawler frame can be made smaller than in conventional cases. This allows reducing a warp that develops on the front part of the left and right crawler frames when the cargo-to-be-lifted is hung from the hook device of the upper slewing body as the cargo-to-be-lifted is located on the front side relative to the lower travelling body.

In a case where the car body receives a relatively large front load from the upper slewing body, the right front end roller and the left front end roller serve as approximate tipping fulcrums (front tipping fulcrums). It is therefore preferable in this case that the right front straight line be a straight line passing through the right front end roller in plan view, and that the left front straight line be a straight line passing through the left front end roller in plan view.

In this mode, the coupling portion can directly transmit the front load to the parts of left and right crawler frames that correspond to the front tipping fulcrums. This allows further reducing a warp that develops on the front part of the left and right crawler frames because of the front load.

It is more preferable that, in plan view, the right front straight line be a straight line passing through the slewing center axis as well and that, in plan view, the left front straight line be a straight line passing through the slewing center axis as well.

In this mode, in plan view, any point on the front load receiving surface of the coupling portion and any point on the right front load transmission surface of the coupling portion can be located on the right front straight line passing through the slewing center axis and the right front end roller, and, in plan view, any point on the front load receiving surface of the coupling portion and any point on the left front load transmission surface of the coupling portion can be located on the left front straight line passing through the slewing center axis and the left front end roller. As a result, a path through which the front load is transmitted to the right crawler frame by the coupling portion can be brought closer to the direction of heading from the slewing center axis toward the right front end roller, and a path through which the front load is transmitted to the left crawler frame by the coupling portion can be brought closer to the direction of heading from the slewing center axis toward the left front end roller. The front load is thus efficiently transmitted to the parts of left and right crawler frames that correspond to the front tipping fulcrums.

In the lower travelling body of the mobile crane according to the second invention, it is preferable that the coupling portion include a right front continuous part that in plan view, extends continuously from the front load receiving surface to the right front load transmission surface along the right front straight line, and a left front continuous part that in plan view, extends continuously from the front load receiving surface to the left front load transmission surface along the left front straight line.

In this mode, the right front continuous part extends continuously without interruption, in plan view, from the front load receiving surface to the right front load transmission surface along the right front straight line, and the left front continuous part extends continuously without interruption, in plan view, from the front load receiving surface to the left front load transmission surface along the left front straight line. The front load received by the front load receiving surface is therefore efficiently transmitted continuously to the right front load transmission surface and the left front load transmission surface along the right front continuous part and the left front continuous part, and is then transmitted from these load transmission surfaces to the left and right crawler frames.

In the lower travelling body of the mobile crane according to the second invention, it is preferable that the coupling portion include a rear load receiving surface counter to the car body, a right rear load transmission surface counter to the right crawler frame, and a left rear load transmission surface counter to the left crawler frame, that the rear load receiving surface be a surface capable of receiving a rear load from the car body, the rear load being a load that the car body receives from the upper slewing body when a cargo-to-be-lifted is hung from the hook device of the upper slewing body on the rear side relative to the lower travelling body, the right rear load transmission surface be a surface capable of transmitting the rear load to the right crawler frame, and the left rear load transmission surface be a surface capable of transmitting the rear load to the left crawler frame, and that the coupling portion be configured such that in plan view, a right rear straight line, which is a straight line passing through any point included in the rear load receiving surface and through any point included in the right rear load transmission surface, passes through the right rear end roller or a point on the rear side relative to the right rear end roller and that in plan view, a left rear straight line, which is a straight line passing through any point included in the rear load receiving surface and any point included in the left rear load transmission surface, passes through the left rear end roller or a point on the rear side relative to the left rear end roller.

Because the coupling portion of the lower travelling body is configured such that the right rear straight line and the left rear straight line have the above positional relationships respectively with the right rear end roller and the left rear end roller, the distance in the front-to-rear direction between a part of the right crawler frame to which part the rear load is transmitted via the coupling portion and the rear end part of the right crawler frame can be made smaller than in conventional cases, and the distance in the front-to-rear direction between a part of the left crawler frame to which part the rear load is transmitted via the coupling portion and the rear end part of the left crawler frame can be made smaller than in conventional cases. This allows reducing a warp that develops on the rear part of the left and right crawler frames when the cargo-to-be-lifted is hung from the hook device of the upper slewing body as the cargo-to-be-lifted is located on the rear side relative to the lower travelling body.

In a case where the car body receives a relatively large rear load from the upper slewing body, the right rear end roller and the left rear end roller serve as approximate tipping fulcrums (rear tipping fulcrums). It is therefore preferable in this case that the right rear straight line be a straight line passing through the right rear end roller in plan view, and that the left rear straight line be a straight line passing through the left rear end roller in plan view.

In this mode, the coupling portion can directly transmit the rear load to the parts of left and right crawler frames that correspond to the rear tipping fulcrums. This allows further reducing a warp that develops on the rear part of the left and right crawler frames because of the rear load.

It is more preferable that, in plan view, the right rear straight line be a straight line passing through the slewing center axis as well and that, in plan view, the left rear straight line be a straight line passing through the slewing center axis as well.

In this mode, in plan view, any point on the rear load receiving surface of the coupling portion and any point on the right rear load transmission surface of the coupling portion can be located on the right rear straight line passing through the slewing center axis and the right rear end roller, and, in plan view, any point on the rear load receiving surface of the coupling portion and any point on the left rear load transmission surface of the coupling portion can be located on the left rear straight line passing through the slewing center axis and the left rear end roller. As a result, a path through which the rear load is transmitted to the right crawler frame by the coupling portion can be brought closer to the direction of heading from the slewing center axis toward the right rear end roller, and a path through which the rear load is transmitted to the left crawler frame by the coupling portion can be brought closer to the direction of heading from the slewing center axis toward the left rear end roller. The rear load is thus efficiently transmitted to the parts of left and right crawler frames that correspond to the rear tipping fulcrums.

In the lower travelling body of the mobile crane according to the second invention, it is preferable that the coupling portion include a right rear continuous part that in plan view, extends continuously from the rear load receiving surface to the right rear load transmission surface along the right rear straight line, and a left rear continuous part that in plan view, extends continuously from the rear load receiving surface to the left rear load transmission surface along the left rear straight line.

In this mode, the right rear continuous part extends continuously without interruption, in plan view, from the rear load receiving surface to the right rear load transmission surface along the right rear straight line, and the left rear continuous part extends continuously without interruption, in plan view, from the rear load receiving surface to the left rear load transmission surface along the left rear straight line. The rear load received by the rear load receiving surface is therefore efficiently transmitted continuously to the right rear load transmission surface and the left rear load transmission surface along the right rear continuous part and the left rear continuous part, and is then transmitted from these load transmission surfaces to the left and right crawler frames.

In the lower travelling body of the mobile crane according to the second invention, it is preferable that the coupling portion be connected to the car body, the right crawler frame, and the left crawler frame such that the coupling portion can be detached from at least one of them.

In this mode, even when the mobile crane is relatively large in size, the width of each component to be transported is easily kept within a transportation limit width.

### [Embodiment of Third Invention]

Hereinafter, a crawler crane that is a mobile crane according to an embodiment of a third invention will be described with reference to FIGS. 31 to 42.

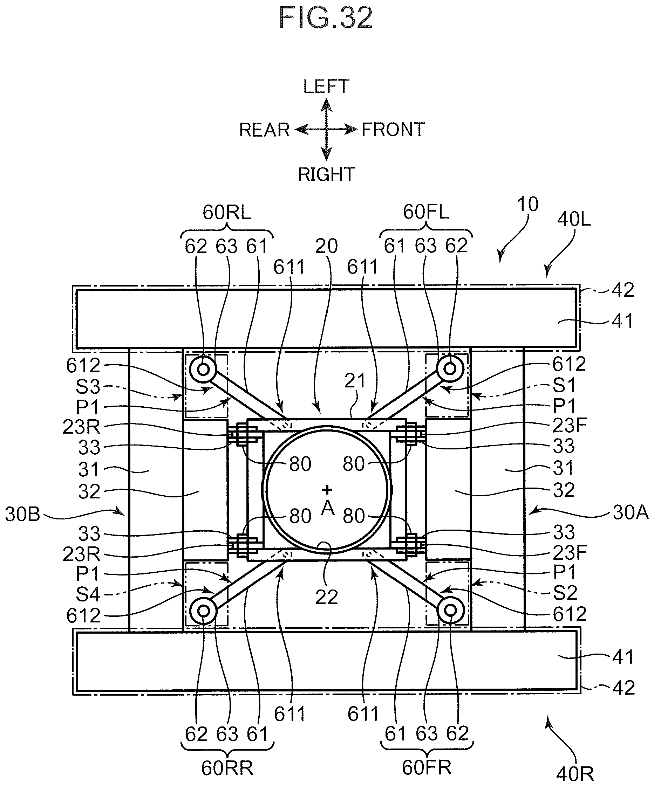

As shown in FIGS. 31 and 32, a crawler crane 100 includes a lower travelling body 10, an upper slewing body 50, a plurality of jack devices, a raising/lowering member 70, and a lifting tool 90.

The upper slewing body 50 is supported by the lower travelling body 10 in such a way as to be capable of turning around a vertical axis (a slewing center axis A shown in FIG. 32) extending in the vertical direction. The upper slewing body 50 includes a slewing main part 51 including a slewing frame attached to the lower travelling body 10, a cabin 52 supported on a front part of the slewing main part 51, a counterweight 53 attached to a rear part of the slewing main part 51, a box mast 54 supported by the slewing main part 51 in such a way as to be capable of rotating around an axis extending in a horizontal direction, a raising/lowering rope 55, a guy line 56, and a raising/lowering winch device 57.

The raising/lowering member 70 includes a boom 71 supported on the slewing main part 51 of the upper slewing body 50 in such a way as to be capable of rising/falling around an axis extending in a horizontal direction perpendicular to the longitudinal direction of the slewing main part 51. The raising/lowering member 70 may further include a jib (not illustrated) rotatably connected to a front end part of the boom 71. The lifting tool 90 is hung from a front end part of the raising/lowering member 70 via a rope. The lifting tool 90 is raised and lowered by a cargo-lifting winch device 58 capable of winding or unwinding a rope.

The box mast 54 is supported on the slewing main part 51 of the upper slewing body 50 in such a way as to be capable of rotating in a direction in which the boom 71 rises and falls. The guy line 56 is a pair of guy lines disposed along the left-to-right direction. The guy line 56 connects a front end part of the box mast 54 to an upper end part of the boom 71. The raising/lowering rope 55 is stretched between a sheave block including a plurality of sheaves, the sheave block being disposed on the slewing main part 51 of the upper slewing body 50, and a sheave block including a plurality of sheaves, the sheave block being disposed on the front end part of the box mast 54, and is put around the sheave blocks several times.

The raising/lowering winch device 57 is disposed near the box mast 54. The raising/lowering winch device 57 winds and unwinds the raising/lowering rope 55. Winding and unwinding the raising/lowering rope 55 by the raising/lowering winch device 57 changes the distance between the sheave block disposed on the front end part of the box mast 54 and the sheave block disposed on the slewing main part 51 of the upper slewing body 50. As a result, the box mast 54 and the boom 71 rotate together with respect to the slewing main part 51. It should be noted that rotation of the box mast 54 is carried out, for example, at execution of ancillary work involved in transportation of the crawler crane 100, which will be described later, and that the position of the box mast 54 (an angle of the box mast 54 against the slewing main part 51 of the upper slewing body 50) is almost fixed during use of the crawler crane 100 (during cargo lifting work).

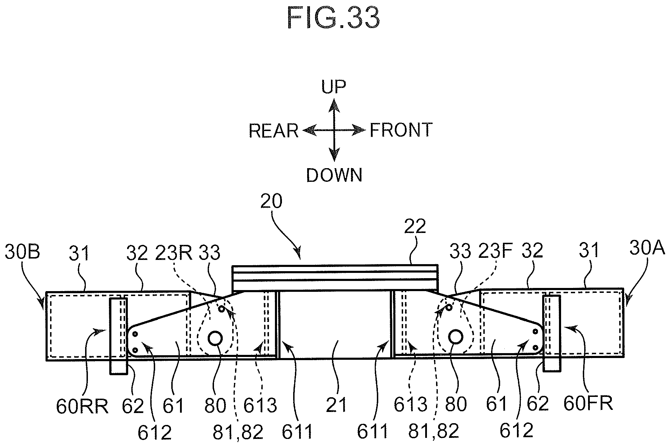

The lower travelling body 10 is a crawler type travelling body capable of self-propelling on the ground. As shown in FIGS. 32 and 33, the lower travelling body 10 includes a car body 20, a front axle 30A, a rear axle 30B, and left and right crawler travelling devices 40L and 40 R. The directions of "up", "down", "front", "rear", "left", and "right" indicated in the drawings refer to directions defined with reference to the direction of the lower travelling body 10. A direction in which the left and right crawler travelling devices 40L and 40R each extend is a front-to-rear direction, and a horizontal direction perpendicular to the front-to-rear direction is a left-to-right direction.

The left and right crawler travelling devices 40L and 40R are lined up at intervals in the left-to-right direction, and each have a shape extending frontward and rearward. The left and right crawler travelling devices 40L and 40R are similar in structure with each other, except for the fact that they are structurally symmetrical in the left-to-right direction. For this reason, in the following description, one crawler travelling device will mainly be explained. As shown in FIG. 32, the crawler travelling device includes a crawler frame 41 extending in the front-to-rear direction, front and rear wheels (not illustrated) rotatably supported respectively on a front end part and a rear end part of the crawler frame 41, a crawler belt 42 annularly put around these wheels to be capable of circling movement, and a drive unit (not illustrated) that drives one of the front and rear wheels. The crawler belt 42 is configured by numbers of crawler shoes coupled together to give the crawler belt 42 an annular shape. The drive unit includes, for example, a motor and a speed reducer (not illustrated). The drive unit drives one wheel, which puts the crawler belt 42 into circling movement. In FIG. 32, the crawler belts 42 and 42 of the left and right crawler travelling devices 40L and 40R are each indicated by a single-dot chain line.

The front axle 30A extends in the left-to-right direction and couples the crawler frames 41 and 41 of the left and right crawler travelling devices 40L and 40R to each other. A left end part of the front axle 30A is connected to a part of left crawler frame 41 that is on the front side relative to the center of the left crawler frame 41 in the front-to-rear direction, while a right end part of the front axle 30A is connected to a part of right crawler frame 41 that is on the front side relative to the center of the right crawler frame 41 in the front-to-rear direction.

The rear axle 30B extends in the left-to-right direction on the rear side relative to the front axle 30A, and couples the crawler frames 41 and 41 of the left and right crawler travelling devices 40L and 40R to each other. A left end part of the rear axle 30B is connected to a part of left crawler frame 41 that is on the rear side relative to the center of the left crawler frame 41 in the front-to-rear direction, while a right end part of the rear axle 30B is connected to a part of right crawler frame 41 that is on the rear side relative to the center of the right crawler frame 41 in the front-to-rear direction.

The car body 20 is disposed between the front axle 30A and the rear axle 30B. The car body 20 has dimensions in the left-to-right direction smaller than dimensions in the left-to-right direction of the front axle 30A and the rear axle 30B. The car body 20 includes a car body main part 21 of a rectangular shape in plan view, a slewing device 22 disposed on the top of the car body main part 21, front connection portions 23F and 23F disposed on a front part of the car body main part 21, and rear connection portions 23R and 23R disposed in a rear part of the car body main part 21. The front connection portions 23F and 23F are an example of the front part of the car body 20, serving as a part to which the front axle 30A is connected. The rear connection portions 23R and 23R are an example of the rear part of the car body 20, serving as a part to which the rear axle 30B is connected.

To the car body 20, the upper slewing body 50 is attached in such a way as to be capable of turning. The slewing device 22 includes an outer circle, an inner circle, and a slewing motor. One of the outer circle and the inner circle is fixed to the car body main part 21, and the other of the same is fixed to a slewing frame of the upper slewing body 50. The inner circle has a slewing gear formed thereon, and this slewing gear meshes with a pinion rotated by the slewing motor. The slewing motor causes the inner circle to rotate relative to the outer circle, which causes the upper slewing body 50 to turn around a slewing center axis A shown in FIG. 32, relative to the lower travelling body 10.

The plurality of jack devices include a left front jack device 60FL disposed on the diagonally leftward front side relative to the slewing center axis A, a right front jack device 60FR disposed on the diagonally rightward front side relative to the slewing center axis A, a left rear jack device 60RL disposed on the diagonally leftward rear side relative to the slewing center axis A, and a right rear jack device 60RR disposed on the diagonally rightward rear side relative to the slewing center axis A.

The left front jack device 60FL and the right front jack device 60FR are arranged at intervals in the left-to-right direction. Each of the left front jack device 60FL and the right front jack device 60FR has a beam 61 and a leg 62. The beam 61 of each of the left front jack device 60FL and the right front jack device 60FR is an example of a front beam. The beam 61 has a base end 611 connected to the car body main part 21 of the car body 20 and a front end 612 located opposite to the base end, and has a shape extending diagonally frontward from the base end 611 to the front end 612. The leg 62 of each of the left front jack device 60FL and the right front jack device 60FR is an example of a front leg. The leg 62 is supported by the beam 61 at its front end 612 and extends vertically. The leg 62 of each of the left front jack device 60FL and the right front jack device 60FR has a leg body including a cylinder unit that is driven by, for example, a hydraulic mechanism to be able to expand/contract vertically, and a seat 63 attached to a lower end of the leg body, and can change the vertical length of the leg 62. The seat 63 has an area larger than that of the leg body in plan view.

The left rear jack device 60RL and the right rear jack device 60RR are arranged at intervals in the left-to-right direction on the rear side relative to the left front jack device 60FL and the right front jack device 60FR. Each of the left rear jack device 60RL and the right rear jack device 60RR has a beam 61 and a leg 62. The beam 61 of each of the left rear jack device 60RL and the right rear jack device 60RR is an example of a rear beam. The beam 61 has a base end 611 connected to the car body main part 21 of the car body 20 and a front end 612 located opposite to the base end, and has a shape extending diagonally rearward from the base end 611 to the front end 612. The leg 62 of each of the left rear jack device 60RL and the right rear jack device 60RR is an example of a rear leg. The leg 62 is supported by the beam 61 at its front end 612 and extends vertically. The leg 62 of each of the left rear jack device 60RL and the right rear jack device 60RR has a leg body including a cylinder unit that is driven by, for example, a hydraulic mechanism to be able to expand/contract vertically, and a seat 63 attached to a lower end of the leg body, and can change the vertical length of the leg 62. The seat 63 has an area larger than that of the leg body in plan view.

As shown in FIG. 32, the base end 611 of the beam 61 of the left front jack device 60FL is connected to a part of a left end part of the car body main part 21, the part being on the front side relative to the slewing center axis A, in such a way as to be capable of rotating around a pivotal axis extending vertically. The base end 611 of the beam 61 of the right front jack device 60FR is connected to a part of a right end part of the car body main part 21, the part being on the front side relative to the slewing center axis A, in such a way as to be capable of rotating around a pivotal axis extending vertically. The base end 611 of the beam 61 of the left rear jack device 60RL is connected to a part of the left end part of the car body main part 21, the part being on the rear side relative to the slewing center axis A, in such a way as to be capable of rotating around a pivotal axis extending vertically. The base end 611 of the beam 61 of the right rear jack device 60RR is connected to a part of the right end part of the car body main part 21, the part being on the rear side relative to the slewing center axis A, in such a way as to be capable of rotating around a pivotal axis extending vertically.

For example, the base end 611 of the beam 61 of the right front jack device 60FR has an insertion hole extending vertically, and the car body main part 21 has an insertion hole extending vertically on the part corresponding to the insertion hole of the beam 61. By inserting a pin 613 shown in FIG. 33 into these insertion holes, the beam 61 is supported on the car body 20 in such a way as to be capable of rotating on the base end 611. The other three jack devices 60FL, 60RL, and 60RR have the same rotary structure as that of the right front jack device 60FR.

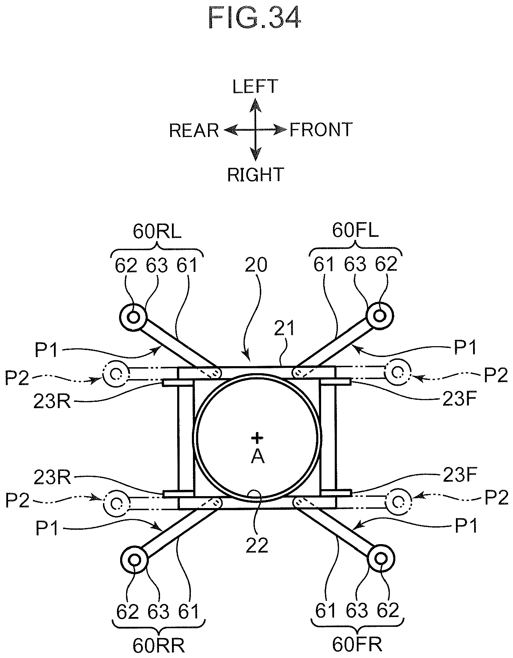

As shown in FIG. 34, each of the left front jack device 60FL and the right front jack device 60FR rotates on the base end 611 of the beam 61, thus being able to shift between a diagonal front position P1 and a front storage position P2. Each of the left rear jack device 60RL and the right rear jack device 60RR rotates on the base end 611 of the beam 61, thus being able to shift between a diagonal rear position P1 and a rear storage position P2. The four jack devices 60FL, 60FR, 60RL, and 60RR may be rotated by, for example, an actuator, such as a hydraulic cylinder (not illustrated), or may be manually rotated by an operator. Each jack device may be configured such that it can be positioned by a positioning mechanism at each of the diagonal front position P1 and the front storage position P2. One example of the positioning mechanism is a pin inserted into a pin hole formed on each of the beams 61 of the four jack devices 60FL, 60FR, 60RL, and 60RR and a pin hole formed on the car body main part 21. The positioning mechanism is, however, not limited to such a form.

The diagonal front position P1 of the left front jack device 60FL is a position at which the beam 61 of the left front jack device 60FL extends diagonally frontward to the left from the left end part of the car body main part 21. The diagonal front position P1 of the right front jack device 60FR is a position at which the beam 61 of the right front jack device 60FR extends diagonally frontward to the right from the right end part of the car body main part 21. The diagonal rear position P1 of the left rear jack device 60RL is a position at which the beam 61 of the left rear jack device 60RL extends diagonally rearward to the left from the left end part of the car body main part 21. The diagonal rear position P1 of the right rear jack device 60RR is a position at which the beam 61 of the right rear jack device 60RR extends diagonally rearward to the right from the right end part of the car body main part 21.

The front storage position P2 of the left front jack device 60FL and the front storage position P2 of the right front jack device 60FR are positions at which the beam 61 of the left front jack device 60FL and the beam 61 of the right front jack device 60FR extend frontward from the car body main part 21. The distance in the left-to-right direction between the leg 62 of the left front jack device 60FL and the leg 62 of the right front jack device 60FR when the jack devices 60FL and 60FR are at the front storage positions P2 is smaller than that when the left front jack device 60FL and the right front jack device 60FR are set at the diagonal front positions P1. The rear storage position P2 of the left rear jack device 60RL and the rear storage position P2 of the right rear jack device 60RR are positions at which the beam 61 of the left rear jack device 60RL and the beam 61 of the right rear jack device 60RR extend rearward from the car body main part 21. The distance in the left-to-right direction between the leg 62 of the left rear jack device 60RL and the leg 62 of the right rear jack device 60RR when the jack devices 60RL and 60RR are at the rear storage positions P2 is smaller than that when the left rear jack device 60RL and the right rear jack device 60RR are set at the diagonal rear positions P1.

As shown in FIGS. 32 and 33, the front axle 30A includes an axle body 31 (an example of a front axle body) that is a part extending in the left-to-right direction and coupling the left and right crawler travelling devices 40L and 40R to each other, an axle overhanging part 32 (an example of a front axle overhanging part) overhanging rearward from the axle body 31 toward the car body 20, and connection portions 33 and 33 that connect the axle overhanging part 32 detachably to the car body 20. In other words, the axle overhanging part 32 of the front axle 30A is a part connected detachably to the front part of the car body 20 via the connection portions 33 and 33. The connection portions 33 and 33 of the front axle 30A are located at the parts that correspond to the front connection portions 23F and 23F of the car body 20.

Likewise, the rear axle 30B includes an axle body 31 (an example of a rear axle body) that is a part extending in the left-to-right direction and coupling the left and right crawler travelling devices 40L and 40R to each other, an axle overhanging part 32 (an example of a rear axle overhanging part) overhanging frontward from the axle body 31 toward the car body 20, and connection portions 33 and 33 that connect the axle overhanging part 32 detachably to the car body 20. In other words, the axle overhanging part 32 of the rear axle 30B is a part connected detachably to the rear part of the car body 20 via the connection portions 33 and 33. The connection portions 33 and 33 of the rear axle 30B are located at the parts that correspond to the rear connection portions 23R and 23R of the car body 20.

Each of the connection portions 33 and 33 of the front axle 30A includes a pair of projection pieces projecting rearward from a rear part of the axle overhanging part 32 of the front axle 30A. Each of the front connection portions 23F and 23F of the car body 20 includes a projection piece projecting frontward from a front part of the car body main part 21. The pair of projection pieces of the connection portion 33 of the front axle 30A are lined up in the left-to-right direction across a gap formed between the projection pieces, and the projection piece of the front connection portion 23F of the car body 20 is inserted in this gap. A bar-like member 81 is joined to an upper part of the pair of projecting pieces of the connection portion 33 of the front axle 30A, the bar-like member 81 extending to bridge the pair of projecting pieces, and a cutout 82 is formed on an upper part of the projection piece of the front connection portion 23F of the car body 20, the cutout 82 allowing the bar-like member 81 to be fitted therein. The projection pieces have through-holes, respectively. The bar-like member 81 is fitted in the cutout 82, and the through-holes are aligned with each other, and then pins 80 are inserted into these through-holes, respectively. Hence the front axle 30A is connected to the car body 20. By pulling the pins 80 out of the through-holes, the front axle 30A can be removed from the car body 20. The structure of the connection portions 33 and 33 of the rear axle 30B and the structure of the rear connection portions 23R and 23R of the car body 20 are the same as the structure of the connection portions 33 and 33 of the front axle 30A and the structure of the front connection portions 23F and 23F of the car body 20 that are described above.

As shown in FIG. 32, the front axle 30A has a shape such that, as the left front jack device 60FL and the right front jack device 60FR are set at the diagonal front positions P1, a left front space S1 and a right front space S2 in which the leg 62 of the left front jack device 60FL and the leg 62 of the right front jack device 60FR can be placed, respectively, are formed in a region between the front axle 30A and the rear axle 30B. Similarly, the rear axle 30B has a shape such that, as the left rear jack device 60RL and the right rear jack device 60RR are set at the diagonal rear positions P1, a left rear space S3 and a right rear space S4 in which the leg 62 of the left rear jack device 60RL and the leg 62 of the right rear jack device 60RR can be placed, respectively, are formed in a region between the front axle 30A and the rear axle 30B.

This will be described specifically as follows. Each of the axle body 31 of the front axle 30A and the axle body 31 of the rear axle 30B has, for example, a linearly extending shape (rectangular shape in plan view), as shown in FIG. 32. Each of the axle overhanging part 32 of the front axle 30A and the axle overhanging part 32 of the rear axle 30B has, for example, a box shape with a rectangular shape in plan view, as shown in FIGS. 32 and 33. The shape of the axle overhanging parts 32 is, however, not limited to the shape shown in the specific example of FIGS. 32 and 33. The center in the left-to-right direction of the axle overhanging part 32 of the front axle 30A substantially matches the center in the left-to-right direction of the axle body 31 of the front axle 30A, and the center in the left-to-right direction of the axle overhanging part 32 of the rear axle 30B substantially matches the center in the left-to-right direction of the axle body 31 of the rear axle 30B. However, the positions of these centers may be slightly shifted to each other in the left-to-right direction.

The axle overhanging part 32 of the front axle 30A has a shape with dimensions in the left-to-right direction that are smaller than the dimensions in the left-to-right direction of the axle body 31 of the front axle 30A so that the left front space S1 is formed in an area between the left crawler travelling device 40L and the axle overhanging part 32 of the front axle 30A as the right front space S2 is formed in an area between the right crawler travelling device 40R and the axle overhanging part 32 of the front axle 30A. The axle overhanging part 32 of the rear axle 30B has a shape with dimensions in the left-to-right direction that are smaller than the dimensions in the left-to-right direction of the axle body 31 of the rear axle 30B so that the left rear space S3 is formed in an area between the left crawler travelling device 40L and the axle overhanging part 32 of the rear axle 30B as the right rear space S4 is formed in an area between the right crawler travelling device 40R and the axle overhanging part 32 of the rear axle 30B. Each space S is indicated in FIG. 32 as a square space demarcated by a two-dot chain line.

In the specific example shown in FIG. 32, the dimensions in the left-to-right direction of respective axle overhanging parts 32 of the front axle 30A and the rear axle 30B are substantially the same as the dimensions in the left-to-right direction of the car body main part 21 of the car body 20. The dimensions in the left-to-right direction of the axle overhanging part 32, however, may be smaller than or larger than the dimensions in the left-to-right direction of the car body main part 21.

The left front space S1 is formed on the front side relative to the car body main part 21 and on the left side relative to the slewing center axis A. The right front space S2 is formed on the front side relative to the car body main part 21 and on the right side relative to the slewing center axis A. The left rear space S3 is formed on the rear side relative to the car body main part 21 and on the left side relative to the slewing center axis A. The right rear space S4 is formed on the rear side relative to the car body main part 21 and on the right side relative to the slewing center axis A.

The left front space S1 may be formed on the front side and on the left side as well relative to the car body 20, the right front space S2 may be formed on the front side and on the right side as well relative to the car body 20, the left rear space S3 may be formed on the rear side and on the left side as well relative to the car body 20, and the right rear space S4 may be formed on the rear side and on the right side as well relative to the car body 20.

In a state where the left front jack device 60FL and the right front jack device 60FR are set at the diagonal front positions P1, the leg 62 of the left front jack device 60FL is disposed in an area occupying at least a part of the left front space S1 as the leg 62 of the right front jack device 60FR is disposed in an area occupying at least a part of the right front space S2. Similarly, in a state where the left rear jack device 60RL and the right rear jack device 60RR are set at the diagonal rear positions P1, the leg 62 of the left rear jack device 60RL is disposed in an area occupying at least a part of the left rear space S3 as the leg 62 of the right rear jack device 60RR is disposed in an area occupying at least a part of the right rear space S4.

In the crawler crane 100 according to the embodiment of the third invention, because the front axle 30A has the shape that forms the left front space S1 and the right front space S2 and the rear axle 30B has the shape that forms the left rear space S3 and the right rear space S4, the left front jack device 60FL and the right front jack device 60FR that are connected to the car body 20 can be set at the diagonal front positions P1, respectively, and the left rear jack device 60RL and the right rear jack device 60RR that are connected to the car body 20 can be set at the diagonal rear positions P1, respectively. As a result, ancillary work involved in transportation can be carried out as the car body 20 and the upper slewing body 50 are stably jacked up using two jack devices 60FL and 60FR set at the diagonal front positions P1 and two jack devices 60RL and 60RR set at the diagonal rear positions P1, and the dimensions in the left-to-right direction of the car body 20, to which the left and right crawler travelling devices 40L and 40R need not be coupled, can be reduced to suppress an increase in the weight of the car body 20 and therefore suppress an increase in the size of a trailer.

In this embodiment of the third invention, the front axle 30A has the shape in which the axle overhanging part 32, which is smaller in dimensions in the left-to-right direction than the axle body 31, overhangs rearward from the axle body 31 toward the car body 20. In this configuration, extending the car body 20 frontward is unnecessary and, instead, the axle body 31 is disposed at a position separated frontward from the car body 20 and the left front space S1 and the right front space S2 can be formed on both left and right sides of the axle overhanging part 32, respectively. As a result, the left front space S1 and the right front space S2 can be formed as the car body 20 is kept compact in size.

In this embodiment of the third invention, the rear axle 30B has the shape in which the axle overhanging part 32, which is smaller in dimensions in the left-to-right direction than the axle body 31, overhangs frontward from the axle body 31 toward the car body 20. In this configuration, extending the car body 20 rearward is unnecessary and, instead, the axle body 31 is disposed at a position separated rearward from the car body 20 and the left rear space S3 and the right rear space S4 can be formed on both left and right sides of the axle overhanging part 32, respectively. As a result, the left rear space S3 and the right rear space S4 can be formed as the car body 20 is kept compact in size.

In this embodiment of the third invention, when the left front jack device 60FL and the right front jack device 60FR are set at the front storage positions P2, respectively, the beams 61 of these jack devices 60FL and 60FR are positioned in such a way as to extend from the base ends 611 in the direction of going away from the beams 61 of the left rear jack device 60RL and the right rear jack device 60RR, respectively. As a result, despite the fact that the beams 61 of the four jack devices 60FL, 60FR, 60RL, and 60RR are connected to the car body 20 of a compact size, the left front jack device 60FL and the right front jack device 60FR are allowed to shift from the diagonal front positions P1 to the front storage positions P2 as the beams 61 of the left front jack device 60FL and the right front jack device 60FR are prevented from coming in contact with the beams 61 of the left rear jack device 60RL and the right rear jack device 60RR.

In this embodiment of the third invention, when the left rear jack device 60RL and the right rear jack device 60RR are set at the rear storage positions P2, respectively, the beams 61 of these jack devices 60RL and 60RR are positioned in such a way as to extend from the base ends 611 in the direction of going away from the beams 61 of the left front jack device 60FL and the right front jack device 60 FR, respectively. As a result, despite the fact that the beams 61 of the four jack devices 60FL, 60FR, 60RL, and 60RR are connected to the car body 20 of a compact size, the left rear jack device 60RL and the right rear jack device 60RR are allowed to shift from the diagonal rear positions P1 to the rear storage positions P2 as the beams 61 of the left rear jack device 60RL and the right rear jack device 60RR are prevented from coming in contact with the beams 61 of the left front jack device 60FL and the right front jack device 60 FR.

By setting the four jack devices 60FL, 60FR, 60RL, and 60RR at the storage positions P2, respectively, the width of each of components to be transported, which include the car body 20, the upper slewing body 50, and the four jack devices 60FL, 60FR, 60RL, and 60RR, can be kept within a regulation value specified for transportation.

In this embodiment of the third invention, the front axle 30A and the rear axle 30B each couple the left and right crawler travelling devices 40L and 40R to each other. As a result, at each of the crawler travelling devices 40L and 40R, the distance between a part to which the front axle 30A is connected and a part to which the rear axle 30B is connected (the distance in the front-to-rear direction) can be increased. This is advantageous from the viewpoint of ensuring the strength of the crawler frame 41, allowing a reduction in the weight of the crawler frame 41. In addition, because the crawler crane 100 includes the front axle 30A and the rear axle 30B, the crawler crane 100 can dispense with a car body weight. Even if the car body weight is needed, it can be reduced in size.

### [Ancillary Work Involved in Transportation]

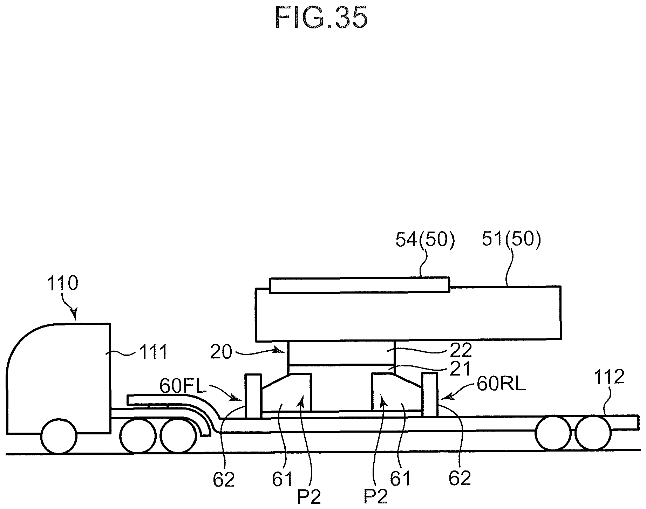

FIGS. 35 to 39 are schematic views for explaining an example of ancillary work involved in transportation of the crawler crane 100. The ancillary work to be described below includes an operation of unloading a component to be transported from a trailer 110, and an operation of attaching the front axle 30A, the rear axle 30B, and the left and right crawler travelling devices 40L and 40R to the car body 20. Components to be transported include the car body 20, at least a part of the upper slewing body 50, and the four jack devices 60FL, 60FR, 60RL, and 60RR.

FIG. 35 shows a state in which the component to be transported is loaded on the trailer 110. The trailer 110 includes a cabin 111 having a seat or the like on which a driver sits, and a bed 112 connected to the rear part of the cabin 111. The component to be transported is placed on the bed 112. When the component to be transported is transported by the trailer 110, the four jack devices 60FL, 60FR, 60RL, and 60RR are set at the storage positions P2.

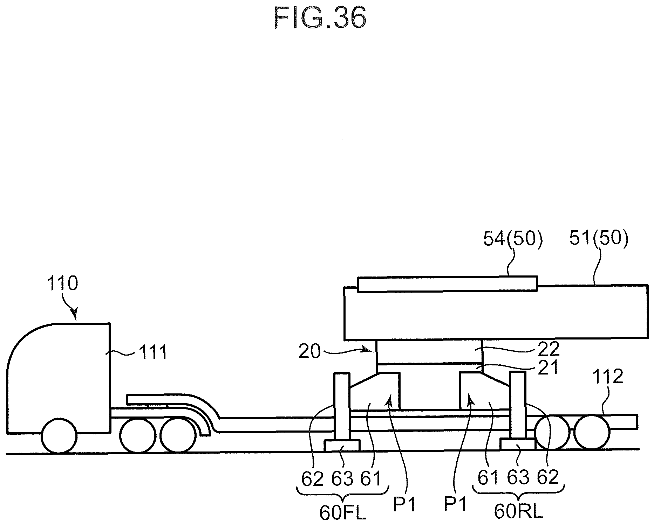

FIG. 36 shows a scene where the trailer 110 arrives at a transportation destination, such as a work site, and the ancillary work is started. In this ancillary work, the positions of the four jack devices 60FL, 60FR, 60RL, and 60RR are shifted from the storage positions P2 to the diagonal positions P1, respectively, and then respective legs 62 of the jack devices 60 are extended to put the seats 63 of the legs 62 on the ground. As a result, the car body 20 and the upper slewing body 50 are lifted from the bed 112 of the trailer 110. In this state, the trailer 110 moves forward, and thus, the components to be transported are unloaded from the trailer 110. In the specific examples shown in FIGS. 35 and 36, the components to be transported carried by the trailer 110 include the car body 20, the slewing main part 51 and the box mast 54 of the upper slewing body 50, and the four jack devices 60FL, 60FR, 60RL, and 60RR. The box mast 54, however, may not be included in the components to be transported. In this case, the components to be transported may be transported in advance to the transportation destination by the trailer 110 as the box mast 54 is detached from to the slewing main part 51, and at the transportation destination, the box mast 54 may be attached to the slewing main part 51 after the components to be transported are unloaded from the trailer 110.

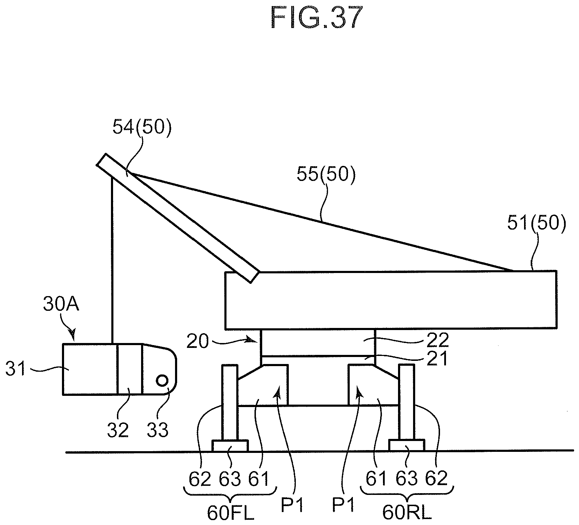

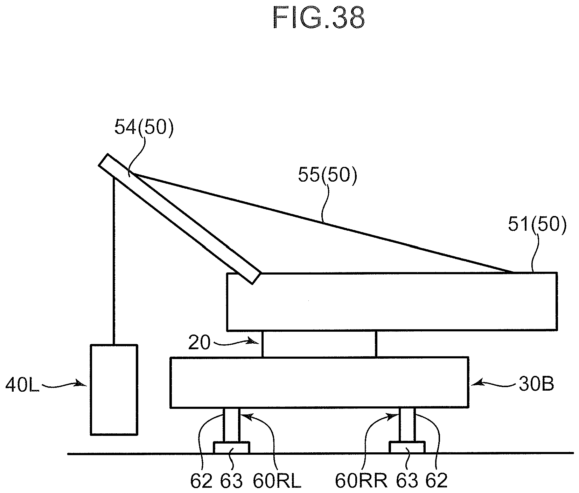

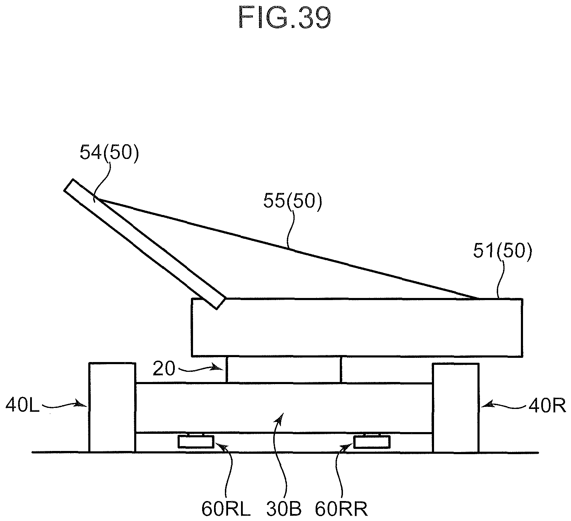

FIG. 37 shows an operation of attaching the front axle 30A to the car body 20, and FIG. 38 shows an operation of attaching the crawler travelling device 40L to the car body 20. These operations are carried out by using the box mast 54 and the raising/lowering rope 55 while adjusting the direction of the upper slewing body 50 relative to the car body 20, as the car body 20 and the upper slewing body 50 are supported by the four jack devices 60FL, 60FR, 60RL, and 60RR. When these operations are over, the legs 62 of the four jack devices 60FL, 60FR, 60RL, and 60RR are contracted to ground the left and right crawler travelling devices 40L and 40R, as shown in FIG. 39. The components to be transported carried by the trailer 110 may further include the cabin 52 of the upper slewing body 50. In this case, the components to be transported are transported in advance to the transportation destination by the trailer 110 as the cabin 52 is supported on the slewing main part 51, as shown in FIG. 35, and the operation of attaching the front axle 30A and the left and right crawler travelling devices 40L and 40R to the car body 20 is carried out as the cabin 52 is supported on the slewing main part 51, as shown in FIGS. 37 and 38.

The third invention is not limited to the embodiment described above. The third invention includes, for example, the following modes.

### (A) Shapes of Front Axle and Rear Axle

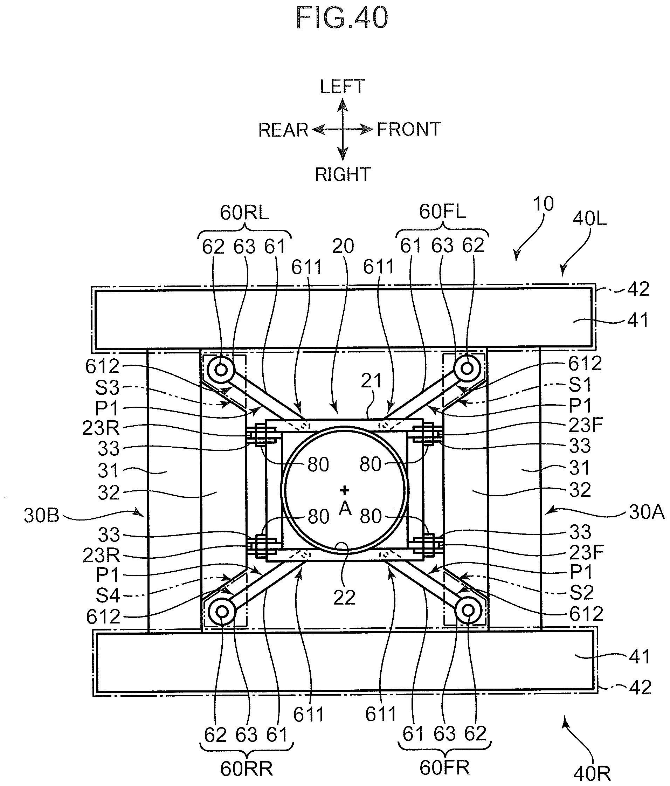

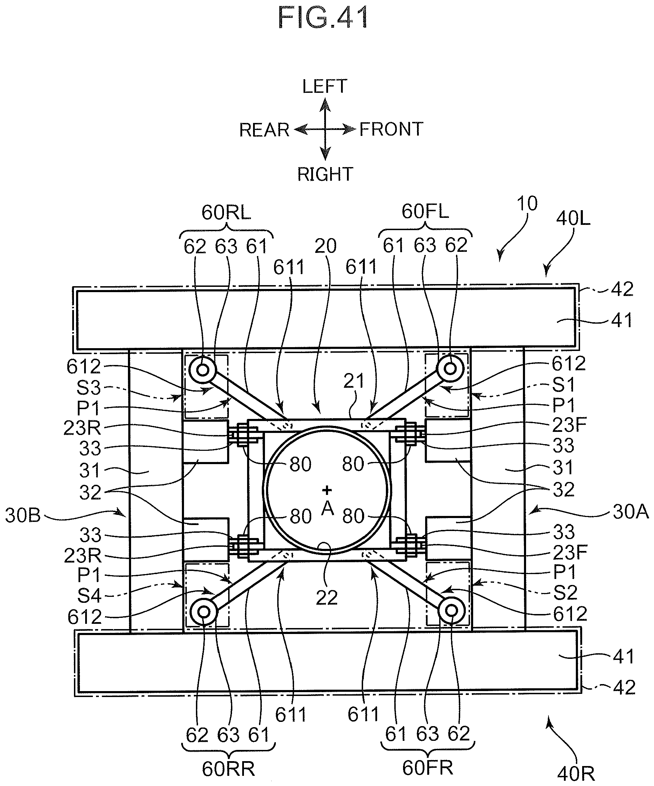

In the embodiment of the third invention, the axle body 31 of each of the front axle 30A and the rear axle 30B has the shape linearly extending in the left-to-right direction (the rectangular shape in plan view), and the axle overhanging part 32 overhanging from the axle body 31 of each of the front axle 30A and the rear axle 30B has the rectangular shape in plan view. However, the shapes of the axle body 31 and the axle overhanging part 32 are not limited to those shapes according to the embodiment. The axle body 31 may include, for example, a bent part. The axle overhanging part 32 may be, for example, of a trapezoidal shape in plan view, as shown in FIG. 40 (first modification). The axle overhanging part 32 may include, for example, a plurality of parts arranged at intervals in the left-to-right direction (second modification), as shown in FIG. 41.

### (B) Jack Device

In the embodiment of the third invention, each jack device 60 is configured to be capable of shifting between the diagonal position P1 and the storage position P2. However, when the width of the jack device 60, i.e., the component to be transported can be kept within the regulation value specified for transportation despite the jack device 60 being set at the diagonal position P1, the position of the jack device 60 may be fixed to the diagonal position P1.

In the embodiment of the third invention, when the left front jack device 60FL and the right front jack device 60FR are set at the storage positions P2, the beams 61 of the jack devices 60FL and 60FR are positioned in such a way as to extend from the base ends 611 in the direction of going away from the beams 61 of the left rear jack device 60RL and the right rear jack device 60RR, respectively. However, these beams 61 may be positioned in such a way as to extend from the base ends 611 in the direction of approaching the beams 61 of the left rear jack device 60RL and the right rear jack device 60RR, respectively. Similarly, in the embodiment of the third invention, when the left rear jack device 60RL and the right rear jack device 60RR are set at the storage positions P2, the beams 61 of the jack devices 60RL and 60RR are positioned in such a way as to extend from the base ends 611 in the direction of going away from the beams 61 of the left front jack device 60FL and the right front jack device 60FR, respectively. However, these beams 61 may be positioned in such a way as to extend from the base ends 611 in the direction of approaching the beams 61 of the left front jack device 60FL and the right front jack device 60FR, respectively.

In the embodiment of the third invention, the front storage position P2 of the left front jack device 60FL and the front storage position P2 of the right front jack device 60FR are positions at which the beam 61 of the left front jack device 60FL and the beam 61 of the right front jack device 60FR extend frontward respectively from the car body 20. However, these front storage positions P2 may be positions at which the beam 61 of the left front jack device 60FL and the beam 61 of the right front jack device 60FR extend diagonally forward respectively from the car body 20. Similarly, in the embodiment of the third invention, the rear storage position P2 of the left rear jack device 60RL and the rear storage position P2 of the right rear jack device 60RR are positions at which the beam 61 of the left rear jack device 60RL and the beam 61 of the right rear jack device 60RR extend rearward respectively from the car body 20. However, these rear storage positions P2 may be positions at which the beam 61 of the left rear jack device 60RL and the beam 61 of the right rear jack device 60RR extend diagonally rearward respectively from the car body 20.

### [Third Modified of Embodiment of Third Invention]

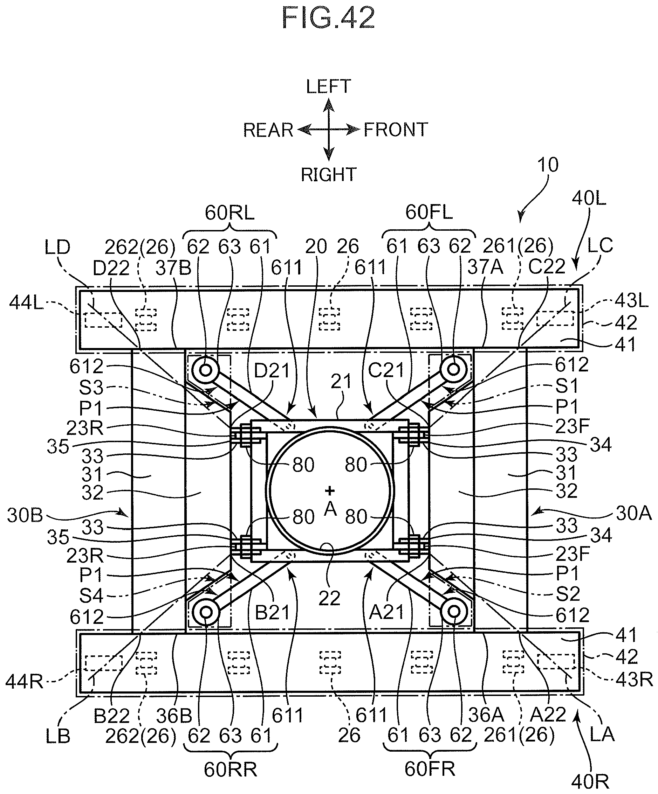

FIG. 42 is a plan view of the car body 20, the front axle 30A, the rear axle 30B, the left and right crawler travelling devices 40L and 40R, and the four jack devices 60FL, 60FR, 60RL, and 60RR of the crawler crane (mobile crane 100) according to a third modification of the embodiment of the third invention.

As shown in FIG. 42, a lower travelling body 10 of a mobile crane 100 according to the third modification includes: the car body 20 that supports the upper slewing body 50 in such a way as to allow the upper slewing body 50 to rotate around the slewing center axis A; the right crawler frame 41 extending in the front-to-rear direction on the right side relative to the slewing center axis A; the left crawler frame 41 extending in the front-to-rear direction on the left side relative to the slewing center axis A; the coupling portion that couples the car body 20 to the right crawler frame 41 and to the left crawler frame 41, the coupling portion including at least one coupling member; a pair of right wheels 43R and 44R supported rotatably on the front end part and the rear end part of the right crawler frame 41, respectively; a pair of left wheels 43L and 44L supported rotatably on the front end part and the rear end part of the left crawler frame 41, respectively; a plurality of right rollers 26 spaced in the front-to-rear direction between the pair of right wheels 43R and 44R and rotatably supported on a lower part of the right crawler frame 41, the plurality of right rollers 26 including the right front end roller 261 located at the head of the right rollers and the right rear end roller 262 located at the tail of the right rollers; and a plurality left rollers 26 spaced in the front-to-rear direction between the pair of left wheels 43L and 44L and rotatably supported on a lower part of the left crawler frame 41, the plurality of left rollers 26 including the left front end roller 261 located at the head of the right rollers and the left rear end roller 262 located at the tail of the right rollers.

The at least one coupling member includes the front axle 30A that couples the right crawler frame 41 to the left crawler frame 41 and that supports the car body 20 on the front side relative to the slewing center axis A, and the rear axle 30B that couples the right crawler frame 41 to the left crawler frame 41 and that supports the car body 20 on the rear side relative to the slewing center axis A.

In the lower travelling body 10 according to the third modification, the coupling portion includes a front load receiving surface 34 and a rear load receiving surface 35 that are counter to the car body 20, a right front load transmission surface 36A and a right rear load transmission surface 36B that are counter to the right crawler frame 41, and a left front load transmission surface 37A and a left rear load transmission surface 37B that are counter to the left crawler frame 41.

The front load receiving surface 34 is a surface capable of receiving a front load from the car body 20, the front load being a load that the car body 20 receives from the upper slewing body 50 when a cargo-to-be-lifted is hung on the upper slewing body 50 on the front side relative to the lower travelling body 10. The right front load transmission surface 36A is a surface capable of transmitting the front load to the right crawler frame 41. The left front load transmission surface 37A is a surface capable of transmitting the front load to the left crawler frame 41.

The rear load receiving surface 35 is a surface capable of receiving a rear load from the car body 20, the rear load being a load that the car body 20 receives from the upper slewing body 50 when the cargo-to-be-lifted is hung on the upper slewing body 50 on the rear side relative to the lower travelling body 10. The right rear load transmission surface 36B is a surface capable of transmitting the rear load to the right crawler frame 41. The left rear load transmission surface 37B is a surface capable of transmitting the rear load to the left crawler frame 41.

The coupling portion is configured such that in plan view, a right front straight line LA, which is a straight line passing through any point A21 included in the front load receiving surface 34 and through any point A22 included in the right front load transmission surface 36A, passes through the right front end roller 261 or a point on the front side relative to the right front end roller 261. The coupling portion is configured such that in plan view, a left front straight line LC, which is a straight line passing through any point C21 included in the front load receiving surface 34 and through any point C22 included in the left front load transmission surface 37A, passes through the left front end roller 261 or a point on the front side relative to the left front end roller 261. The coupling portion is configured such that in plan view, a right rear straight line LB, which is a straight line passing through any point B21 included in the rear load receiving surface 35 and through any point B22 included in the right rear load transmission surface 36B, passes through the right rear end roller 262 or a point on the rear side relative to the right rear end roller 262. The coupling portion is configured such that in plan view, a left rear straight line LD, which is a straight line passing through any point D21 included in the rear load receiving surface 35 and through any point D22 included in the left rear load transmission surface 37B, passes through the left rear end roller 262 or a point on the rear side relative to the left rear end roller 262.

In the third invention, the above positional relationship between the right front straight line and the right front end roller is defined as the positional relationship in plan view of the lower travelling body, that is, the positional relationship when the lower travelling body is viewed from directly above in the vertical direction (downward). The right front straight line and the right front end roller, therefore, do not always have to be at the same height in the vertical direction and may be shifted in height from each other in the vertical direction. In other words, the height of the right front straight line and the height of the right front end roller may be the same or may be different from each other. This applies also to the positional relationship between the left front straight line and the left front end roller, to the positional relationship between the right rear straight line and the right rear end roller, and to the positional relationship between the left rear straight line and the left rear end roller.

Other constituent elements of the mobile crane 100 according to the third modification shown in FIG. 42 and effects achieved by the constituent elements are the same as those of the embodiment of the third invention described with reference to FIGS. 31 to 39.

### [Background Art Related to Third Invention and Problem to Be Solved by Third Invention]

The crawler crane includes a lower travelling body, an upper slewing body supported by the lower travelling body in such a way as to be capable of turning, a raising/lowering member including the boom supported on the upper slewing body in such a way as to be capable of rising and falling, and a plurality of jack devices (the plurality of translifters).

According to a crawler crane described in JP 2016-147729 A, the lower travelling body includes left and right crawler travelling devices, a car body, and front and rear car body weights. The upper slewing body is attached to the car body. The front and rear car body weights are attached respectively to a front part and a rear part of the car body. The car body couples the left and right crawler travelling devices to each other. The plurality of jack devices includes two jack devices attached to the front part of the car body at intervals in the left-to-right direction and two jack devices attached to the rear part of the car body at intervals in the left-to-right direction.

In crawler cranes described in JP 2016-215744 A and JP 2018-39638 A, the lower travelling body includes left and right crawler travelling devices, a car body, a front axle, and a rear axle. The upper slewing body is attached to the car body. The front axle is attached to a front part of the car body, and the rear axle is attached to a rear part of the car body. Each of the front axle and the rear axle couples the left and right crawler travelling devices to each other. The plurality of jack devices includes two front jack devices attached to the front axle at intervals in the left-to-right direction and two rear jack devices attached to the rear axle at intervals in the left-to-right direction.

The crawler crane is not allowed to run on public roads, and is therefore transported by a trailer. When the crawler crane is transported, the crawler crane is disassembled into several parts so that the size of a component to be transported making up a part of the crawler crane is kept within a limit value for transportation.

According to the crawler crane described in JP 2016-147729 A, however, when the car body and the upper slewing body attached thereto are transported by one trailer, avoiding use of a bigger trailer is difficult. Reasons for this problem, specifically, are as follows. The upper slewing body has a large front-to-rear dimension and therefore inevitably has a large weight. According to the crawler crane described in JP 2016-147729 A, because of its structure in which the car body couples the left and right crawler travelling devices to each other, the dimensions of the car body in the left-to-right direction are determined to be dimensions corresponding to the interval between the left and right crawler travelling devices. This constitutes a cause for an increase in the weight of the car body. Thus, in the crawler crane described in JP 2016-147729 A, both the weight of the upper slewing body and the weight of the car body increase. A trailer that transports the upper slewing body and car body, therefore, needs to be large enough to bear the weights of these components.

As described above, the crawler cranes described in JP 2016-215744 A and JP 2018-39638 A each have a structure in which two front jack devices and two rear jack devices are attached to the front axle and the rear axle, respectively. However, when the upper slewing body and car body are transported by one trailer and the front axle and rear axle removed from the car body are transported by another trailer, these jack devices cannot be used for ancillary work involved in transportation. Specifically, the structure is described as follows. According to the crawler cranes described in JP 2016-215744 A and JP 2018-39638 A, for example, at the point that ancillary work involved in transportation, such as loading the car body and the upper slewing body attached thereto onto the trailer, unloading the car body and upper slewing body from the trailer, and attaching the front axle and the rear axle to the car body, is carried out, the front axle and the rear axle are removed from the car body. Carrying out this ancillary work while jacking up the car body with the upper slewing body attached thereto by the four jack devices is, therefore, impossible.

The third invention of the present disclosure has been conceived in view of the above problems, and an object of the third invention is to provide a mobile crane (crawler crane) that when a car body and an upper slewing body attached thereto are transported by one trailer, can suppress an increase in the size of the trailer and allows ancillary work involved in transportation to be carried out using a plurality of jack devices.

A mobile crane according to the third invention includes: left and right crawler travelling devices lined up at intervals in a left-to-right direction and extending frontward and rearward; a front axle extending in the left-to-right direction, the front axle coupling the left and right crawler travelling devices to each other; a rear axle extending in the left-to-right direction on the rear side relative to the front axle, the rear axle coupling the left and right crawler travelling devices to each other; a car body disposed between the front axle and the rear axle, the car body having a front part to which the front axle is detachably connected and a rear part to which the rear axle is detachably connected; an upper slewing body attached to the car body in such a way as to be capable of turning; a left front jack device and a right front jack device disposed at intervals in the left-to-right direction, the left front jack device and the right front jack device each having a front beam extending from a base end connected to the car body and a front leg supported by the front beam and extending vertically on a front end of the front beam; and a left rear jack device and a right rear jack device disposed at intervals in the left-to-right direction on the rear side relative to the left front jack device and the right front jack device, the left rear jack device and the right rear jack device each having a rear beam extending from a base end connected to the car body and a rear leg supported by the rear beam and extending vertically on a front end of the rear beam. The front axle has a shape in which a left front space and a right front space are formed in an area between the front axle and the rear axle, the left front space and the right front space being spaces where the front leg of the left front jack device and the front leg of the right front jack device are allowed to be positioned respectively in a state in which the left front jack device and the right front jack device are set at diagonal front positions at which the front beam of the left front jack device and the front beam of the right front jack device extend diagonally frontward to the left and diagonally frontward to the right, respectively, from the car body. The rear axle has a shape in which a left rear space and a right rear space are formed in an area between the front axle and the rear axle, the left rear space and the right rear space being spaces where the rear leg of the left rear jack device and the rear leg of the right rear jack device are allowed to be positioned respectively in a state in which the left rear jack device and the right rear jack device are set at diagonal rear positions at which the rear beam of the left rear jack device and the rear beam of the right rear jack device extend diagonally rearward to the left and diagonally rearward to the right, respectively, from the car body.

In this mobile crane, the front axle has the shape that forms the left front space and the right front space, and the rear axle has the shape that forms the left rear space and the right rear space. Because of this configuration, despite the fact that the front axle and the rear axle, which couple the left and right crawler travelling devices to each other, lie and extend in the left-to-right direction on the front and rear sides relative to the car body, respectively, the front axle and the rear axle do not interfere with positioning of the front leg and the rear leg of the four jack devices connected to the car body. Thus, the left front jack device and the right front jack device connected to the car body can be set at the diagonal front positions, respectively, and the left rear jack device and the right rear jack device connected to the car body can be set at the diagonal rear positions, respectively. This allows carrying out ancillary work involved in transportation, such as attaching the front axle and the rear axle to the car body, while stably jacking up the car body and the upper slewing body using the two jack devices set at the diagonal front positions and the two jack devices set at the diagonal rear positions, and allows reducing the dimensions in the left-to-right direction of a part of car body that has no left and right crawler travelling devices coupled thereto to suppress an increase in the weight of the car body, thus suppressing an increase in the size of the trailer.

In the mobile crane according to the third invention, it is preferable that the front axle include a front axle body that is a part extending in the left-to-right direction to couple the left and right crawler travelling devices to each other, and a front axle overhanging part that is a part overhanging rearward from the front axle body toward the car body and detachably connected to the front part of the car body, and that the front axle overhanging part have a shape that makes the front axle overhanging part smaller in dimensions in the left-to-right direction than the front axle body so that the left front space is formed in an area between the left crawler travelling device and the front axle overhanging part as the right front space is formed in an area between the right crawler travelling device and the front axle overhanging part. In this configuration, because the front axle has the shape in which the front axle overhanging part smaller in dimensions in the left-to-right direction than the front axle body overhangs rearward from the front axle body toward the car body, extending the car body frontward is unnecessary, and the front axle body can be located at a position separated frontward away from the car body to form the left front space and the right front space on both left and right sides of the front axle overhanging part. Hence the left front space and the right front space can be formed as the size of the car body is kept compact.

In the mobile crane according to the third invention, it is preferable that the rear axle include a rear axle body that is a part extending in the left-to-right direction to couple the left and right crawler travelling devices to each other, and a rear axle overhanging part that is a part overhanging frontward from the rear axle body toward the car body and detachably connected to the rear part of the car body, and that the rear axle overhanging part have a shape that makes the rear axle overhanging part smaller in dimensions in the left-to-right direction than the rear axle body so that the left rear space is formed in an area between the left crawler travelling device and the rear axle overhanging part as the right rear space is formed in an area between the right crawler travelling device and the rear axle overhanging part. In this configuration, because the rear axle has the shape in which the rear axle overhanging part smaller in dimensions in the left-to-right direction than the rear axle body overhangs frontward from the rear axle body toward the car body, extending the car body rearward is unnecessary, and the rear axle body can be located at a position separated rearward away from the car body to form the left rear space and the right rear space on both left and right sides of the rear axle overhanging part. Hence the left rear space and the right rear space can be formed as the size of the car body is kept compact.

In the mobile crane according to the third invention, it is preferable that each of the left front jack device and the right front jack device be configured to rotate on the base end of the front beam relative to the car body and shift from the diagonal front position to a front storage position, and that the front storage position of the left front jack device and the front storage position of the right front jack device be positions at which the front beam of the left front jack device and the front beam of the right front jack device extend frontward or diagonally frontward from the car body, respectively, such that a distance in the left-to-right direction between the front leg of the left front jack device and the front leg of the right front jack device becomes smaller than a distance in the left-to-right direction between the same in a case where the left front jack device and the right front jack device are set at the diagonal front positions. In this configuration, when each of the left front jack device and the right front jack device is set at the front storage position, the front beams of these jack devices are positioned in such a way as to extend from the base ends in the direction of going away from the rear beams. Despite the fact that both the front beam and the rear beam are connected to the car body of a compact size, therefore, the left front jack device and the right front jack device can be shifted from the diagonal front positions to the front storage positions as the front beam's coming in contact with the rear beam is avoided.

In the mobile crane according to the third invention, it is preferable that each of the left rear jack device and the right rear jack device be configured to rotate on the base end of the rear beam relative to the car body and shift from the diagonal rear position to a rear storage position, and that the rear storage position of the left rear jack device and the rear storage position of the right rear jack device be positions at which the rear beam of the left rear jack device and the rear beam of the right rear jack device extend rearward or diagonally rearward from the car body, respectively, such that a distance in the left-to-right direction between the rear leg of the left rear jack device and the rear leg of the right rear jack device becomes smaller than a distance in the left-to-right direction between the same in a case where the left rear jack device and the right rear jack device are set at the diagonal rear positions. In this configuration, when each of the left rear jack device and the right rear jack device is set at the rear storage position, the rear beams of these jack devices are positioned in such a way as to extend from the base ends in the direction of going away from the front beams. Despite the fact that both the front beam and the rear beam are connected to the car body of a compact size, therefore, the left rear jack device and the right rear jack device can be shifted from the diagonal rear positions to the rear storage positions as the rear beam's coming in contact with the front beam is avoided.

## Claims

1. A lower travelling body of a mobile crane, the lower travelling body comprising:
a car body that supports an upper slewing body of the mobile crane in such a way as to allow the upper slewing body to rotate around a slewing center axis;
a right crawler frame extending in a front-to-rear direction on a right side relative to the slewing center axis;
a left crawler frame extending in the front-to-rear direction on a left side relative to the slewing center axis;
a coupling portion that couples the car body to the right crawler frame and to the left crawler frame, the coupling portion including at least one coupling member;
a pair of right wheels supported rotatably on a front end part and a rear end part of the right crawler frame, respectively;
a pair of left wheels supported rotatably on a front end part and a rear end part of the left crawler frame, respectively;
a plurality of right rollers spaced in the front-to-rear direction between the pair of right wheels and rotatably supported on a lower part of the right crawler frame, the plurality of right rollers including a right front end roller located at head of the right rollers and a right rear end roller located at tail of the right rollers; and
a plurality left rollers spaced in the front-to-rear direction between the pair of left wheels and rotatably supported on a lower part of the left crawler frame, the plurality of left rollers including a left front end roller located at head of the left rollers and a left rear end roller located at tail of the left rollers, wherein
the coupling portion includes a front load receiving surface and a rear load receiving surface that are counter to the car body, a right front load transmission surface and a right rear load transmission surface that are counter to the right crawler frame, and a left front load transmission surface and a left rear load transmission surface that are counter to the left crawler frame, wherein
the front load receiving surface is a surface configured to receive a front load from the car body, the front load being a load that the car body receives from the upper slewing body when a cargo-to-be-lifted is hung on the upper slewing body on a front side relative to the lower travelling body, the right front load transmission surface is a surface configured to transmit the front load to the right crawler frame, and the left front load transmission surface is a surface configured to transmit the front load to the left crawler frame, wherein
the rear load receiving surface is a surface configured to receive a rear load from the car body, the rear load being a load that the car body receives from the upper slewing body when the cargo-to-be-lifted is hung on the upper slewing body on a rear side relative to the lower travelling body, the right rear load transmission surface is a surface configured to transmit the rear load to the right crawler frame, and the left rear load transmission surface is a surface configured to transmit the rear load to the left crawler frame, and wherein
the coupling portion is configured such that a right front straight line, which is a straight line passing through any point included in the front load receiving surface and through any point included in the right front load transmission surface, passes through, in plan view, the right front end roller or a point on the front side relative to the right front end roller, that a left front straight line, which is a straight line passing through any point included in the front load receiving surface and through any point included in the left front load transmission surface, passes through, in plan view, the left front end roller or a point on the front side relative to the left front end roller, that a right rear straight line, which is a straight line passing through any point included in the rear load receiving surface and through any point included in the right rear load transmission surface, passes through, in plan view, the right rear end roller or a point on the rear side relative to the right rear end roller, and that a left rear straight line, which is a straight line passing through any point included in the rear load receiving surface and through any point included in the left rear load transmission surface, passes through, in plan view, the left rear end roller or a point on the rear side relative to the left rear end roller.

2. The lower travelling body of the mobile crane according to claim 1, wherein
the coupling portion includes:
a right front continuous part that in plan view, extends continuously from the front load receiving surface to the right front load transmission surface along the right front straight line; and
a left front continuous part that in plan view, extends continuously from the front load receiving surface to the left front load transmission surface along the left front straight line.

3. The lower travelling body of the mobile crane according to claim 2, wherein
the coupling portion includes:
a right rear continuous part that in plan view, extends continuously from the rear load receiving surface to the right rear load transmission surface along the right rear straight line; and
a left rear continuous part that in plan view, extends continuously from the rear load receiving surface to the left rear load transmission surface along the left rear straight line.

4. The lower travelling body of the mobile crane according to any one of claims 1 to 3, wherein
the at least one coupling member include:
a front axle that couples the right crawler frame to the left crawler frame and that supports the car body, on the front side relative to the slewing center axis; and
a rear axle that couples the right crawler frame to the left crawler frame and that supports the car body, on the rear side relative to the slewing center axis.

5. The lower travelling body of the mobile crane according to any one of claims 1 to 3, wherein
the at least one coupling member include:
a right coupling member that couples the car body to the right crawler frame on the right side relative to the slewing center axis; and
a left coupling member that couples the car body to the left crawler frame on the left side relative to the slewing center axis, wherein
the front load receiving surface includes a right front load receiving surface located on the right side relative to the slewing center axis and a left front load receiving surface located on the left side relative to the slewing center axis, wherein
the rear load receiving surface includes a right rear load receiving surface located on the right side relative to the slewing center axis and a left rear load receiving surface located on the left side relative to the slewing center axis, wherein
the right coupling member has the right front load receiving surface, the right rear load receiving surface, the right front load transmission surface, and the right rear load transmission surface, and wherein
the left coupling member has the left front load receiving surface, the left rear load receiving surface, the left front load transmission surface, and the left rear load transmission surface.

6. The lower travelling body of the mobile crane according to claim 1, wherein
the coupling portion includes:
a right front connection portion connected to the right crawler frame on the front side relative to the slewing center axis;
a right rear connection portion connected to the right crawler frame on the rear side relative to the slewing center axis; and
a right middle connection portion connected to the right crawler frame at a position at which the right middle connection portion is separated rearward from the right front connection portion and is separated frontward from the right rear connection portion, and wherein
the coupling portion further includes:
a left front connection portion connected to the left crawler frame on the front side relative to the slewing center axis;
a left rear connection portion connected to the left crawler frame on the rear side relative to the slewing center axis; and
a left middle connection portion connected to the left crawler frame at a position at which the left middle connection portion is separated rearward from the left front connection portion and is separated frontward from the left rear connection portion.

7. The lower travelling body of the mobile crane according to claim 6, wherein
the at least one coupling member include:
a front axle having the right front connection portion and the left front connection portion, the front axle coupling the right crawler frame to the left crawler frame on the front side relative to the slewing center axis and being connected to the car body;
a rear axle having the right rear connection portion and the left rear connection portion, the rear axle coupling the right crawler frame to the left crawler frame on the rear side relative to the slewing center axis and being connected to the car body;
a right middle axle having the right middle connection portion, the right middle axle coupling the car body to the right crawler frame on the rear side relative to the front axle and on the front side relative to the rear axle; and
a left middle axle having the left middle connection portion, the left middle axle coupling the car body to the left crawler frame on the rear side relative to the front axle and on the front side relative to the rear axle.

8. The lower travelling body of the mobile crane according to claim 6, wherein
the at least one coupling member include:
a right coupling member having the right front connection portion, the right rear connection portion, and the right middle connection portion, the right coupling member coupling the car body to the right crawler frame on the right side relative to the slewing center axis; and
a left coupling member having the left front connection portion, the left rear connection portion, and the left middle connection portion, the left coupling member coupling the car body to the left crawler frame on the left side relative to the slewing center axis.

9. A mobile crane comprising:
the lower travelling body according to claim 1;
an upper slewing body attached to the car body in such a way as to be allowed to turn;
a left front jack device and a right front jack device disposed at intervals in a left-to-right direction, the left front jack device and the right front jack device each having a front beam extending from a base end connected to the car body and a front leg supported by the front beam and extending vertically on a front end of the front beam; and
a left rear jack device and a right rear jack device disposed at intervals in the left-to-right direction on a rear side relative to the left front jack device and the right front jack device, the left rear jack device and the right rear jack device each having a rear beam extending from a base end connected to the car body and a rear leg supported by the rear beam and extending vertically on a front end of the rear beam, wherein
the coupling portion includes:
a front axle extending in the left-to-right direction, the front axle coupling the right crawler frame and the left crawler frame to each other; and
a rear axle extending in the left-to-right direction on a rear side relative to the front axle, the rear axle coupling the right crawler frame and the left crawler frame to each other, wherein
the car body is disposed between the front axle and the rear axle, and has a front part to which the front axle is connected detachably and a rear part to which the rear axle is connected detachably, wherein
the front axle has a shape in which a left front space and a right front space are formed in an area between the front axle and the rear axle, the left front space and the right front space being spaces where the front leg of the left front jack device and the front leg of the right front jack device are allowed to be positioned respectively in a state in which the left front jack device and the right front jack device are set at diagonal front positions at which the front beam of the left front jack device and the front beam of the right front jack device extend diagonally frontward to the left and diagonally frontward to the right, respectively, from the car body, and wherein
the rear axle has a shape in which a left rear space and a right rear space are formed in an area between the front axle and the rear axle, the left rear space and the right rear space being spaces where the rear leg of the left rear jack device and the rear leg of the right rear jack device are allowed to be positioned respectively in a state in which the left rear jack device and the right rear jack device are set at diagonal rear positions at which the rear beam of the left rear jack device and the rear beam of the right rear jack device extend diagonally rearward to the left and diagonally rearward to the right, respectively, from the car body.

10. The mobile crane according to claim 9, wherein
the front axle include:
a front axle body that is a part extending in the left-to-right direction to couple the left and right crawler travelling devices to each other; and
a front axle overhanging part that is a part overhanging rearward from the front axle body toward the car body and detachably connected to the front part of the car body, wherein
the front axle overhanging part has a shape that makes the front axle overhanging part smaller in dimensions in the left-to-right direction than the front axle body so that the left front space is formed in an area between the left crawler travelling device and the front axle overhanging part as the right front space is formed in an area between the right crawler travelling device and the front axle overhanging part.

11. The mobile crane according to claim 9 or 10, wherein
the rear axle include:
a rear axle body that is a part extending in the left-to-right direction to couple the left and right crawler travelling devices to each other; and
a rear axle overhanging part that is a part overhanging frontward from the rear axle body toward the car body and detachably connected to the rear part of the car body, wherein
the rear axle overhanging part has a shape that makes the rear axle overhanging part smaller in dimensions in the left-to-right direction than the rear axle body so that the left rear space is formed in an area between the left crawler travelling device and the rear axle overhanging part as the right rear space is formed in an area between the right crawler travelling device and the rear axle overhanging part.

12. The mobile crane according to any one of claims 9 to 11, wherein
each of the left front jack device and the right front jack device is configured to rotate on the base end of the front beam relative to the car body and shift from the diagonal front position to a front storage position, and wherein
the front storage position of the left front jack device and the front storage position of the right front jack device are positions at which the front beam of the left front jack device and the front beam of the right front jack device extend frontward or diagonally frontward from the car body, respectively, such that a distance in the left-to-right direction between the front leg of the left front jack device and the front leg of the right front jack device becomes smaller than a distance in the left-to-right direction between the front leg of the left front jack device and the front leg of the right front jack device in a case where the left front jack device and the right front jack device are set at the diagonal front positions.

13. The mobile crane according to any one of claims 9 to 12, wherein
each of the left rear jack device and the right rear jack device is configured to rotate on the base end of the rear beam relative to the car body and shift from the diagonal rear position to a rear storage position, and wherein
the rear storage position of the left rear jack device and the rear storage position of the right rear jack device are positions at which the rear beam of the left rear jack device and the rear beam of the right rear jack device extend rearward or diagonally rearward from the car body, respectively, such that a distance in the left-to-right direction between the rear leg of the left rear jack device and the rear leg of the right rear jack device becomes smaller than a distance in the left-to-right direction between the rear leg of the left rear jack device and the rear leg of the right rear jack device in a case where the left rear jack device and the right rear jack device are set at the diagonal rear positions.
